# EUROPÄISCHE PATENTSCHRIFT

(11) **EP 1 328 588 B1**
(45) Veröffentlichungstag und Bekanntmachung des Hinweises auf die Patenterteilung: **11.01.2006**
(21) Anmeldenummer: 01980482.2
(22) Anmeldetag: 06.10.2001
(51) Int. Cl.: C09B 62/012, C09B 62/032, C09B 62/095, C09B 62/255, C09B 62/44, C09B 62/515

(54) **METALLKOMPLEXFARBSTOFFE AUF BASIS GEBUCHERERTER NAPHTHOLE**
METAL COMPLEX COLOURING AGENTS BASED ON BUCHERER NAPHTHOLS
COLORANTS A COMPLEXES METALLIQUES A BASE DE NAPHTOLS AYANT SUBI LA REACTION DE BUCHERER

(30) Priorität: 14.10.2000 DE 10051018
(43) Veröffentlichungstag der Anmeldung: 23.07.2003
(73) Patentinhaber: DyStar Textilfarben GmbH & Co. Deutschland KG, 65926 Frankfurt am Main (DE)
(72) Erfinder: EHRENBERG, Stefan, 65795 Hattersheim (DE); KUNDE, Klaus, 53819 Neunkirchen (DE)
(86) Internationale Anmeldenummer: PCT/EP2001/011542
(87) Internationale Veröffentlichungsnummer: WO 2002/033006

(56) Entgegenhaltungen:
- DE-A- 2 444 883
- DE-B- 1 101 659
- GB-A- 961 552
- GB-A- 973 238
- US-A- 3 562 246

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Für das Färben oder Bedrucken von hydroxy- und/oder carbonamidgruppenhaltigen Materialien werden heute Reaktivfarbstoffe gefordert, die gute Allgemeinechtheiten haben und zugleich eine gute Auswaschbarkeit der nicht fixierten Anteile aufweisen. Daher besteht bei den derzeit zugänglichen Farbstoffen ein Verbesserungsbedarf.

Der vorliegenden Erfindung liegt daher die Aufgabe zugrunde, neue, verbesserte Reaktivfarbstoffe für das Färben und Bedrucken von hydroxy- und/oder carbonamidgruppenhaltigen Materialien, insbesondere Fasermaterialien, zur Verfügung zu stellen, die gute Allgemeinechtheiten, insbesondere eine hohe Lichtechtheit aufweisen und darüber hinaus über eine gute Auswaschbarkeit der nicht fixierten Anteile verfügen.

Mit der vorliegenden Erfindung wurde nunmehr gefunden, dass die nachstehend beschriebenen erfindungsgemäßen Farbstoffe überraschenderweise die gestellte Aufgabe in hohem Maß erfüllen.

Gegenstand der vorliegenden Erfindung sind somit reaktive Kupfer-, Kobalt- oder Chromkompfex-Verbindungen der allgemeinen Formel (1) 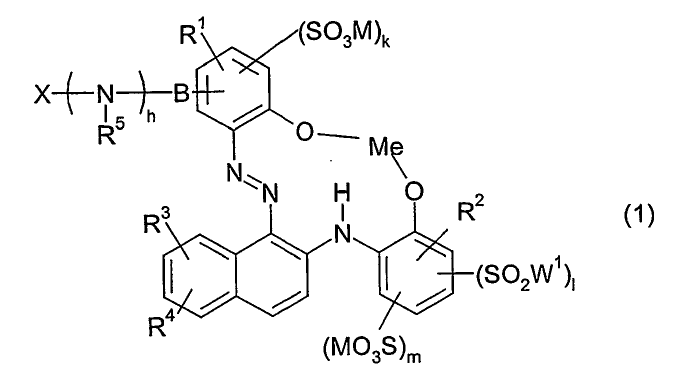
in welcher
- B: eine direkte Bindung oder ein Brückenglied ist;
- X: ein faserreaktives Strukturelement ist;
- W¹: Vinyl oder eine Gruppe der Formel -CH₂-CH₂-V ist bedeutet, in welcher V ein durch Einwirkung von Alkali eliminierbarer Rest ist;
- R¹, R²: unabhängig voneinander Wasserstoff, Chlor, Alkyl mit 1-4 C-Atomen, wie Methyl, Ethyl, n-Propyl, i-Propyl, n-Butyl, i-Butyl, tert-Butyl, Alkoxy mit 1-4 C-Atomen, wie Methoxy, Ethoxy, n-Propyloxy, i-Propyloxy, Carboxy oder Sulfamoyl, Hydroxy oder Sulfo, bevorzugt Wasserstoff bedeutet;
- R³: Wasserstoff, Hydroxy, Carboxy oder Sulfo bedeutet;
- R⁴: Wasserstoff oder Sulfo bedeutet;
- R⁵: Wasserstoff, Alkyl von 1 bis 4-C-Atomen, das durch Halogen, Hydroxy, Cyano, Alkoxy von 1 bis 4 C-Atomen, Alkoxycarbonyl von 2 bis 5 C-Atomen, Carboxy-, Sulfo- oder Sulfato- substituiert sein kann;
- h, k, l, m: 0 oder 1 bedeuten;
- Me: Kupfer, Kobalt oder Chrom, bevorzugt Kupfer und Kobalt und besonders bevorzugt Kupfer bedeuten;
- M: Wasserstoff oder ein Alkalimetall, wie Natrium, Kalium oder Lithium, oder das Moläquivalent eines Erdalkalimetalls, wie Calcium, und bevorzugt Wasserstoff oder ein Alkalimetall ist.

Geeignete faserreaktive Reste X, d. h. solche, die mit den OH- oder NH-Gruppen der Faser unter Färbebedingungen unter Ausbildung kovalenter Bindungen reagieren, sind beispielsweise -SO₂CH = CH₂ oder -SO₂CH₂CH₂V, wobei eine für V stehende Gruppierung, die durch Einwirkung von Alkali eliminiert werden kann, insbesondere für Reste der Formel -OSO₃M, Thiosulfato der Formel -SSO₃M, Acetyloxy der Formel -OCOCH₃, Phosphato der Formel OPO(OM)₂ und Chloro, Bromo, Benzyloxy der Formel -OCOC₆H₅, Phenylsulfonyloxy der Formel -SO₂-C₆H₅ steht, oder Pyridinium, das substituiert sein kann, wie beispielsweise durch Alkyl von 1-4-C-Atomen, Carboxy, Sulfo, Cyano oder Carbamoyl, wobei M wie oben angegeben definiert ist steht, oder faserreaktive Reste X sind insbesondere solche, die mindestens einen reaktiven Substituenten an einen 5-oder 6-gliedrigen aromatisch-heterocyclischen Ring gebunden enthalten, beispielsweise an einen Monoazin-, Diazin- oder Triazinring, insbesodnere einen Pyridin-, Pyrimidin, Pyridazin, Pyrazin, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, beispielsweise ein Chinolin-, Phthalazin-, Cinnolin-, Chinazolin-, Chinoxalin-, Acridin-, Phenazin- und Phenanthridin-Ring-System.
Besonders geeignet sind dabei faserreaktive Reste aus der Reihe Pyrimidine oder Triazine.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido(N3), Rhodanido, Sulfinsäure und Sulfonsäure.

Insbesondere kann X demnach stehen für 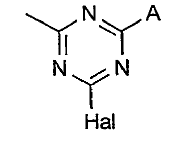
worin
- Hal =: Cl, F und
- A: den Rest eines Amins AH bedeuten, das unsubstituiert oder substituiert sein kann durch ein oder zwei C₁- C₆ Alkylgruppen, die unabhängig voneinander durch Hydroxy, C₁-C₂ Alkoxygruppen, Sulfato, Phenyl, Hydroxycarbonyl substituiert sein können, oder durch einen unsubstituierten oder durch ein oder zwei C₁-C₂- Alkyl, C₁-C₂ Alkoxy oder C₁-C₂- Alkoxyalkyl oder C₁-C₂- Alkoxyalkoxy, Amino, Hydroxy, Chlor, Sulfo, Sulfomethyl, Sulfonamid, Carboxy, Carbonamid, Carbonsäureester, Nitril, Aminocarbonamid, oder Oxalamino-substituierten Phenylrest oder einen unsubstiutierten oder durch eine, zwei oder drei Sulfo-Gruppen substituierten Naphthylrest oder
- A: bedeutet Taurin, N-Methyltaurin, Methylaminomethansulfonsäure, Pyrrolidin, Piperidin, 1-Methyl-piperazin, Morpholin.

Bevorzugte Verbindungen AH sind beispielsweise Ammoniak, Methylamin, Ethylamin, n-Propanolamin, iso-Propanolamin, n-Butylamin, iso-Butylamin, tert.-Butylamin, n-Pentylamin, n-Hexylamin, Cyclohexylamin, Dimethylamin, Diethylamin, Di-n-propylamin, Di-iso-propylamin, Methylethylamin, Ethanolamin, Diethanolamin, 2-Methoxyethylamin, 2-Ethoxyethylamin, Sulfatoethylamin, Aminoessigsäure, N-Methylaminoessigsäure, Taurin, N-Methyltaurin, Methylaminomethansulfonsäure, Pyrrolidin, Piperidin, 1-Methyl-piperazin, Cyanamid, Morpholin, Benzylamin, β-Phenylethylamin, N-Methylbenzylamin, Dibenzylamin, Anilin, 1-Amino-2-, 2- oder 4-methylbenzol, 1-Amino-3,4- oder 3,5-dimethylbenzol, 1-Amino-2-, 3- oder 4-ethylbenzol, 1-Amino-2-, 3- oder 4-methoxybenzol, 1-Amino-4-ethoxybenzol, 1-Amino-2-, 3- oder 4-(2-hydroxyethoxy)-benzol, 1-Amino-2-, 3- oder 4-(2-methoxyethoxy)-benzol, 1-Amino-2-, 3- oder 4-chlorbenzol, 2-, 3- oder 4-Amino-phenyl-methansulfonsäure, 2-Aminobenzolsulfonsäure, 3-Aminobenzolsulfonsäure, 4-Aminobenzolsulfonsäure, 5-Aminobenzol-1,3- oder 1,4-disulfonsäure, 4-Aminobenzol-1,2- oder 1,3-disulfonsäure, 2-, 3- oder 4-Aminobenzolsulfonamid, 2-, 3- oder 4-Aminobenzolsulfonsäuremethylamid, 2-, 3- oder 4-Aminobenzolsulfonsäuredimethylamid, 2-, 3- oder 4-Aminobenzolsulfonsäure-(2-hydroxyethyl)-amid, 5-Aminobenzol-1,3-dicarbonsäure, 2-, 3- oder 4-Aminobenzoesäure, 2-, 3- oder 4-Aminobenzamid, 2-, 3- oder 4-Aminobenzoesäuremethyl- oder ethylester, 2-, 3- oder 4-Aminobenzonitril, 3-Amino-(N-phenylsulfonyl)-benzolsulfonamid, 2-, 3- oder 4-Aminophenol, 5-Amino-2-hydroxybenzolsulfonsäure, 4-Amino-2-hydroxybenzolsulfonsäure, 5-Amino-2-ethoxybenzolsulfonsäure, 1-Acetylamino-2- oder 4-aminobenzol, 1-Amino-3- oder 4-(hydroxyacetyl)-aminobenzol, 1-Amino-4-(sulfoacetyl)-aminobenzol, 3- oder 4-Aminphenylharnstoff, N-(3-Aminophenyl)-N'-(2-hydroxyethyl)-harnstoff, 3- oder 4-Aminophenyloxymidsäure, 1-Methylamino-3-oder 4-methylbenzol, 1-Ethylamino-4-chlorbenzol, 2-Amino-5-methoxy-benzolsulfonsäure, 3-Amino-4-methoxy-benzolsulfonsäure, 1-Ethylamino-3- oder 4-methylbenzol, N-(2-Hydroxyethyl)-anilin, 1-(2-Hydroxyethyl)-amino-3-methylbenzol, 3- oder 4-Methylaminobenzoesäure, 4-Methylaminobenzolsulfonsäure, 5-Amino-2-oxalamino-benzolsulfonsäure, 2-Aminonaphthalin-1-sulfonsäure, 4-Aminonaphthalin-1-sulfonsäure, 5-Aminonaphthalin-1-sulfonsäure, 6-Aminonaphthalin-1-sulfonsäure, 7-Aminonaphthalin-1-sulfonsäure, 8-Aminonaphthalin-1-sulfonsäure, 1-Aminonaphthalin-2-sulfonsäure, 4-Aminonaphthalin-2-sulfonsäure, 5-Aminonaphthalin-2-sulfonsäure, 6-Aminonaphthalin-2-sulfonsäure, 7-Aminonaphthalin-2-sulfonsäure, 7-Methylaminonaphthalin-2-sulfonsäure, 7-Butylaminonaphthalin-2-sulfonsäure, 7-Isobutylaminonaphthalin-2-sulfonsäure, 8-Aminonaphthalin-2-sulfonsäure. 4-Aminonaphthalin-1,3-disulfonsäure, 5-Aminonaphthalin-1,3-disulfonsäure, 6-Aminonaphthalin-1,3-disulfonsäure, 7-Aminonaphthalin-1,3-disulfonsäure, 8-Aminonaphthalin-1,3-disulfonsäure, 2-Aminonaphthalin-1,5-disulfonsäure, 3-Aminonaphthalin-1,5-disulfonsäure, 4-Aminonaphthalin-1,5-disulfonsäure, 4-Aminonaphthalin-1,6-disulfonsäure, 8-Aminonaphthalin-1,6-disulfonsäure, 4-Aminonaphthalin-1,7-disulfonsäure, 3-Aminonaphthalin-2,6-disulfonsäure, 4-Aminonaphthalin-2,6-disulfonsäure, 3-Aminonaphthalin-2,7-disulfonsäure, 4-Aminonaphthalin-2,7-disulfonsäure, 6-Aminonaphthalin-1,3,5-trisulfonsäure, 7-Aminonaphthalin-1,3,5-trisulfonsäure, 8-Aminonaphthalin-1,3,5-trisulfonsäure, 4-Aminonaphthalin-1,3,6-trisulfonsäure, 7-Aminonaphthalin-1,3,6-trisulfonsäure, 8-Aminonaphthalin-1,3,6-trisulfonsäure, 4-Aminonaphthalin-1,3,7-trisulfonsäure, Der Rest X ist weiterhin bevorzugt ein Halogentriazinylrest, der auch mit einem zweiten Halogentriazinylrest oder einem Halogendiazinylrest oder einem oder mehreren Vinylsulfonyl- oder Sulfatoethylsulfonylresten direkt oder über ein Brückenglied verknüpft sein kann. Bevorzugte Brückenglieder sind beispielsweise: 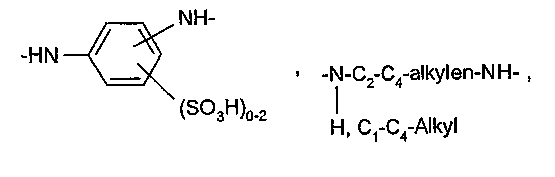 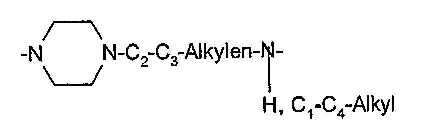 oder im Falle der Sulfatoethylsulfonyl- bzw. Vinylsulfonylgruppe über ein Brückenglied

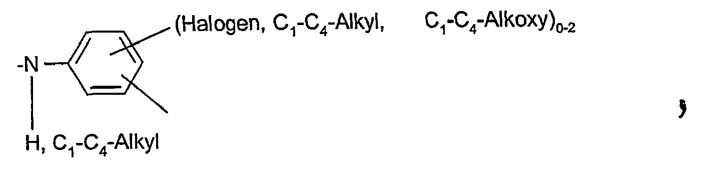

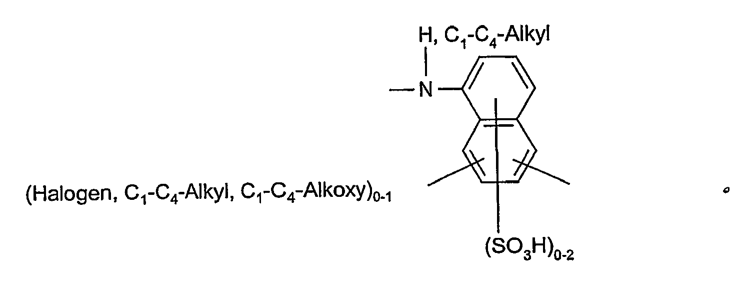

Hierbei können die Alkylreste ihrerseits substituiert sein, insbesondere mit SO₃H, COOH, OH, OSO₃H.

Beispiele für derartige Reste X sind:

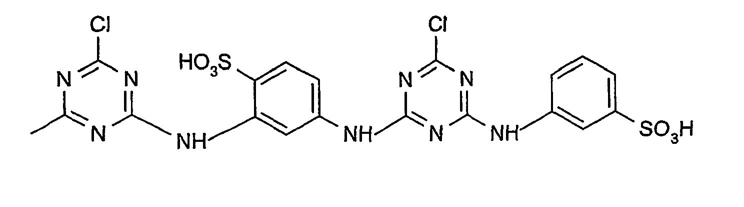

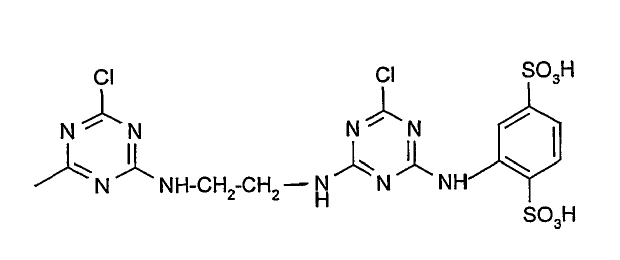

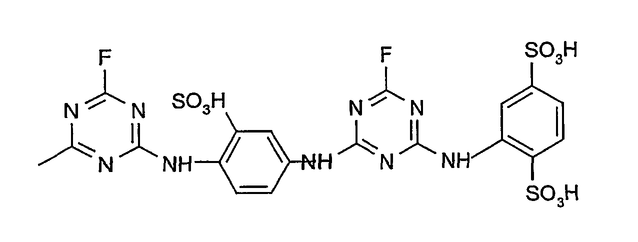

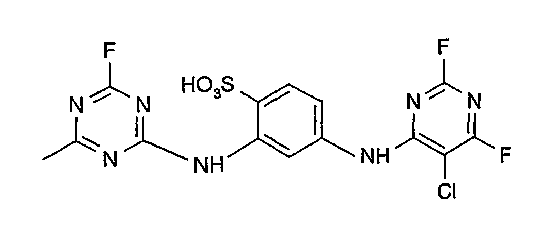

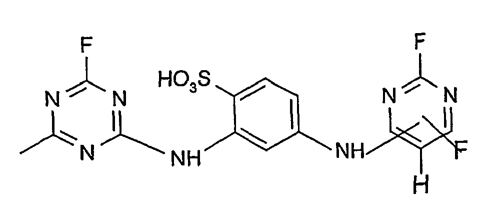

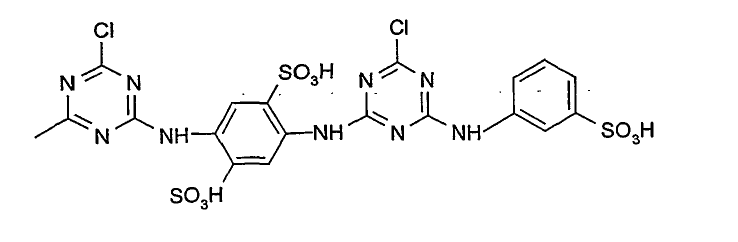

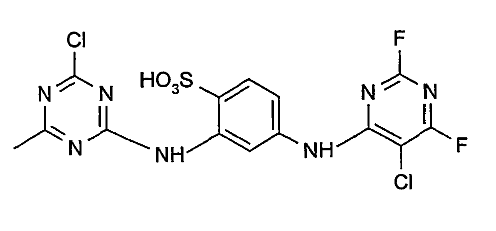

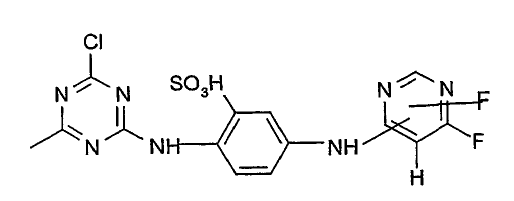

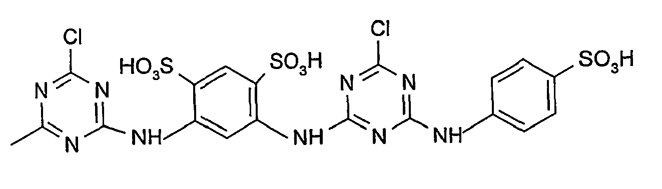

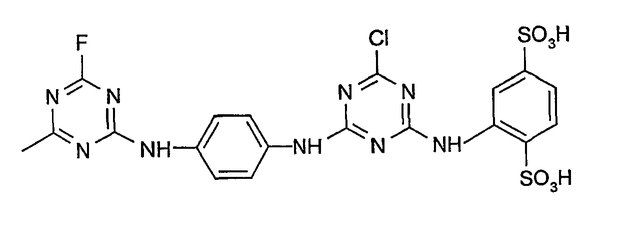

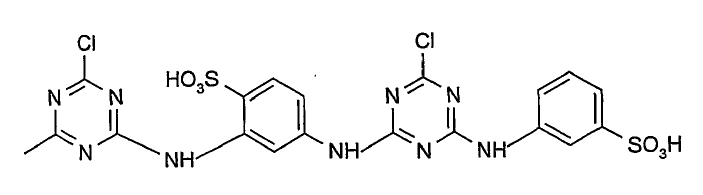

Weitere Beispiele für X sind:
2,4-Dichlor-1,3,5-triazinyl-6, 2,4-Dichlorpyrimidinyl-6, 2,4,5-Trichlorpyrimidinyl-6, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carbalkoxy-pyrimidinyl-6, 2,6-Dichlorpyrimidin-4-carbonyl, 2,4-Dichlorpyrimidin-5-carbonyl, 2-Chlor-4-methyl-pyrimidin-5-carbonyl, 2-Methyl-4-chlorpyrimidin-5-carbonyl, 2-Methylthio-4-fluorpyrimidin-5-carbonyl, 6-Methyl-2,4-dichlorpyrimidin-5-carbonyl, 2,4,6-Trichlorpyrimidin-5-carbonyl, 2,4-Dichlorpyrimidin-5-sulfonyl, 2-Chlor-chinoxalin-3-carbonyl, 2- oder 3-Monochlorchinoxalin-6-carbonyl, 2- oder 3-Monochlorchinoxalin-6-sulfonyl, 2,3-Dichlorchinoxalin-5- oder -6-carbonyl, 2,3-Dichlorchinoxalin-5- oder -6-sulfonyl, 1,4-Dichlorphthalazin-6-sulfonyl- oder -6-carbonyl, 2,4-Dichlorchinazolin-7- oder - 6-sulfonyl oder -carbonyl, 2- oder 3- oder 4-(4',5'-Dichlorpyridazon-6'-yl-1')-phenylsulfonyl oder -carbonyl, β-(4',5'-Dichlor-pyridazon-6'-yl-1')-ethylcarbonyl, N-Methyl-N-(2,3-dichlorchinoxalin-6-sulfonyl)-aminoacetyl und N-Methyl-N-(2,3-dichlorchinoxalin-6-carbonyl)-aminoacetyl, sowie die entsprechenden Brom- oder Fluor-Derivate der oben erwähnten chlorsubstituierten heterocyclischen Reste, unter diesen beispielsweise 2-Fluor-4-pyrimidinyl, 2,6-Difluor-4-pyrimidinyl, 2,6-Difluor-5-chlor-4-pyrimidinyl, 4,6-Difluor-2-pyrimidinyl-, 2-Fluor-5,6-dichlor-4-pyrimidinyl, 2,6-Difluor-5-methyl-4-pyrimidinyl, 2-Fluor-5-methyl-6-chlorpyrimidinyl, 2-Fluor-5-nitro-6-chlor-4-pyrimidinyl, 5-Brom-2-fluor-4-pyrimidinyl, 2-Fluor-5-cyan-4-pyrimidinyl, 2-Fluor-5-methyl-4-pyrimidinyl, 2,5,6-Trifluor-4-pyrimidinyl, 5-Chlor-6-chlormethyl-2-fluor-4-pyrimidinyl, 5-Chlor-6-dichlormethyl-2-fluor-4-pyrimidinyl, 5-Chlor-6-trichlormethyl-2-fluor-4-pyrimidinyl, 5-Chlor-2-chlormethyl-6-fluor-4-pyrimidinyl, 5-Chlor-2-dichlormethyl-6-fluor-4-pyrimidinyl, 5-Chlor-2-trichlormethyl-6-fluor-4-pyrimidinyl, 5-Chlor-2-fluor-dichlormethyl-6-fluor-4-pyrimidinyl, 2,6-Difluor-5-brom-4-pyrimidinyl, 2-Fluor-5-brom-6-methyl-4-pyrimidinyl, 2-Fluor-5-brom-6-chlormethyl-4-pyrimidinyl, 2,6-Difluor-5-chlormethyl-4-pyrimidinyl, 2,6-Difluor-5-nitro-4-pyrimidinyl, 2-Fluor-6-methyl-4-pyrimidinyl, 2-Fluor-5-chlor-6-methyl-4-pyrimidinyl, 2-Fluor-5-chlor-4-pyrimidinyl, 2-Fluor-6-chlor-4-pyrimidinyl, 6-Trifluormethyl-5-chlor-2-fluor-4-pyrimidinyl, 6-Trifluormethyl-2-fluor-4-pyrimidinyl, 2-Fluor-5-trifluormethyl-4-pyrimidinyl, 2-Fluor-5-phenyl- oder -5-methylsulfonyl-4-pyrimidinyl, 2-Fluor-5-carbonamido-4-pyrimidinyl, 2-Fluor-5-carbomethoxy-4-pyrimidinyl, 2-Fluor-5-brom-6-trifluormethyl-4-pyrimidinyl, 2-Fluor-6-carbonamido-4-pyrimidinyl, 2-Fluor-6-carbmethoxy-4-pyrimidinyl-, 2-Fluor-6-phenyl-pyrimidinyl, 2-Fluor-6-cyano-4-pyrimidinyl, 5-Chlor-6-fluor-2-methyl-4-pyrimidinyl, 5,6-Difluor-4-pyrimidinyl, 5-Chlor-6-fluor-2-dichlor-fluormethyl-4-pyrimidinyl, 2-Fluor-5-chlorpyrimidin-4-yl, 2-Methyl-4-fluor-5-methylsulfonyl-pyrimidinyl-6, 2,6-Difluor-5-methyl-sulfonyl-4-pyrimidinyl, 2,6-Dichlor-5-methylsulfonyl-4-pyrimidinyl, 2-Fluor-5-sulfonamido-4-pyrimidinyl, 2-Fluor-5-chlor-6-carbomethoxy-4-pyrimidinyl und 2,6-Difluor-5-trifluormethyl-4-pyrimidinyl, sulfonylgruppenhaltige Triazinreste, wie 2,4-Bis-(phenylsulfonyl)-triazinyl-6, 2-(3'-Carboxyphenyl)-sulfonyl-4-chlortriazinyl-6, 2-(3'-Sulfophenyl)-sulfonyl-4-chlor-triazinyl-6 und 2,4-Bis-(3'-carboxyphenylsulfonyl)-triazinyl-6, sulfonylgruppenhaltige Pyrimidinreste, wie 2-Carboxymethylsulfonyl-pyrimidinyl-4, 2-Methylsulfonyl-6-methyf-pyrimidinyl, 2-Methylsulfonyl-6-ethyl-pyrimidinyl-4, 2-Phenylsulfonyl-5-chlor-6-methylpyrimidinyl-4, 2,6-Bis-methylsulfonyl-pyrimidinyl-4, 2,6-Bis-methylsulfonyl-5-chlor-pyrimidinyl, 2,4-Bis-methyl-sulfonyl-pyrimidin-5-sulfonyl, 2-Methylsulfonyl-pyrimidinyl-4, 2-Phenylsulfonyl-pyrimidinyl-4, 2-Trichlor-methylsulfonyl-6-methylpyrimidinyl-4, 2-Methylsulfonyl-5-chlor-6-methyl-pyrimidinyl-4, 2-Methylsulfonyl-5-brom-6-methyl-pyrimidinyl-4, 2-Methylsulfonyl-5-chlor-6-ethyl-pyrimidinyl-4, 2-Methylsulfonyl-5-chlor-6-chlormethyl-pyrimidinyl-4, 2-Methylsulfonyl-4-chlor-6-methylpyrimidin-5-sulfonyl-, 2-Methylsulfonyl-5-nitro-6-methylpyrimidinyl-4, 2,5,6-Tris-methylsulfonyl-pyrimidinyl-4, 2-Methylsulfonyl-5,6-dimethylpyrimidinyl-4, 2-Ethylsulfonyl-5-chlor-6-methyl-pyrimidinyl-4, 2-Methylsulfonyl-6-chlor-pyrimidinyl-4, 2,6-Bis-methylsulfonyl-sulfonyl-5-chlor-pyrimidinyl, 2-Methylsulfonyl-6-carboxypyrimidinyl-4, 2-Methylsulfonyl-5-sulfo-pyrimidinyl-4, 2-Methylsulfonyl-6-carbomethoxy-pyrimidinyl-4- 2-Methylsulfonyl-5-carboxypyrimidinyl-4, 2-Methysulfonyl-5-cyan-6-methoxy-pyrimidinyl-4, 2-Methylsulfonyl-5-chlor-pyrimidinyl-4, 2-β-Sulfoethylsulfonyl-6-methylpyrimidinyl-4, 2-Methylsulfonyl-5-brom-pyrimidinyl-4, 2-Phenylsulfonyl-5-chlorpyrimidinyl-4, 2-Carboxymethylsulfonyl-5-chlor-6-methyl-pyrimidinyl-4, 2-Methylsulfonyl-6-chlorpyrimidinyl-4- und -5-carbonyl, 2,6-Bis-(methylsulfonyl)-pyrimidin-4- oder -5-carbonyl, 2-Ethylsulfonyl-6-chlorpyrimidin-5-carbonyl, 2,4-Bis-(methylsulfonyl)-pyrimidin-5-sulfonyl, 2-Methylsulfonyl-4-chlor-6-methylpyrimidin-5-sulfonyl- oder -carbonyl, 2-Chlorbenzthiazol-5- oder -6-carbonyl oder -5- oder -6-sulfonyl, 2-Arylsulfonyl- oder Alkylsulfonylbenzthiazol-5- oder -6-carbonyl oder -5- oder -6-sulfonyl, wie 2-Mehylsulfonyl- oder 2-Ethylsulfonyl-benzthiazol-5- oder -6-sulfonyl oder -carbonyl, 2-Phenylsulfonylbenzthiazol-5- oder -6-sulfonyl oder -carbonyl und die entsprechenden im ankondensierten Benzolring Sulfogruppen enthaltenden 2-Sulfonylbenzthiazol-5- oder -6-carbonyl- oder -sulfonyl-Derivate, ebenso 2-Chlorbenzoxazol-5- oder -6-carbonyl oder -sulfonyl, 2-Chlorbenzimidazol-5- oder -6-carbonyl oder -sulfonyl, 2-Chlor-1-mehylbenzimidazol-5- oder -6-carbonyl- oder -sulfonyl, 2-Chlor-4-methylthiazol-(1,3)-5-carbonyl oder -4- oder -5-sulfonyl oder das N-Oxid des 4-Chlor- oder 4-Nitrochinolin-5-carbonyl.

Besonders bevorzugt bedeutet X

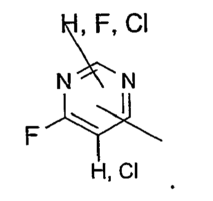

Geeignete Brückenglieder B sind beispielsweise solche der allgemeinen Formeln (a) bis (m) 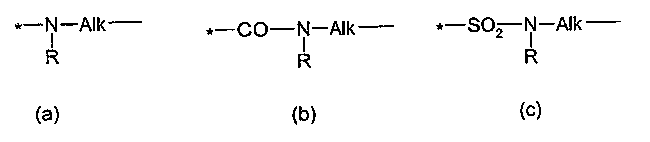 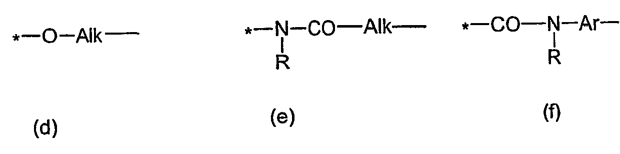 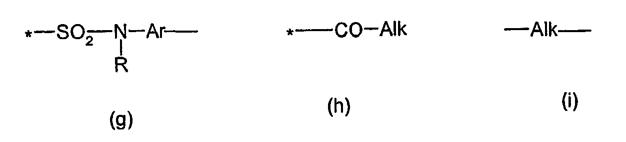 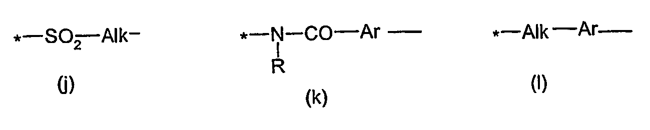 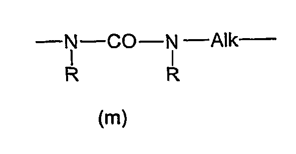
in welchen der Stern die Verknüpfungsstelle mit dem Chromophor markiert;
- R: Wasserstoff oder Alkyl von 1 bis 6 C-Atomen, bevorzugt Alkyl von 1 bis 4 C-Atomen, wie Ethyl und Methyl, das substituiert sein kann, wie beispielsweise durch Substituenten aus der Gruppe Halogen, Hydroxy, Carboxy, Sulfo und Sulfato, und ist bevorzugt Methyl und Ethyl und insbesondere Wasserstoff;
- Alk: Alkylen von 1 bis 6 C-Atomen ist oder Alkylen von 2 bis 8, bevorzugt von 2 bis 6 C-Atomen ist, das durch 1 oder 2 Heterogruppen, wie NH, N, O oder S, oder durch 1 oder 2 Gruppierungen, die 1,2 oder 3 Heterogruppen enthalten, unterbrochen ist;
- Ar: Phenylen oder Naphthylen oder der Rest eines Diphenyls oder Stilbens ist, wobei diese Reste Ar substituiert sein können, wie beispielsweise durch Substituenten aus der Gruppe Fluor, Chlor, Brom, Alkyl von 1 bis 4 C-Atomen, Alkoxy von 1 bis 4 C-Atomen, Carboxy und Sulfo.

Erfindungsgemäße Reaktivfarbstoffe der allgemeinen Formel (1), können bei gleichem Chromophor hinsichtlich der faserreaktiven Gruppen W¹ unterschiedliche Struktur besitzen. Insbesondere kann bei gleichem Chromophor, -SO₂W¹ zum einen -SO₂CH = CH₂ und zum anderen -SO₂CH₂CH₂V, besonders bevorzugt β-Sulfatoethylsulfonyl, bedeuten. Dabei kann der Anteil des Farbstoffes in Vinylsulfonyl-Form bei bis zu etwa 30 Mol-%, bezogen auf den jeweiligen Farbstoffchromophor, liegen. Bevorzugt liegt der Anteil an Vinylsulfonyl-Farbstoff zu β-ethylsubstituiertem Farbstoff im Molverhältnis zwischen 5:95 und 30:70.

Sowohl in den oben angegebenen allgemeinen Formeln als auch in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Bevorzugte erfindungsgemäße Reaktivfarbstoffe der allgemeinen Formel (1) sind solche der allgemeinen Formel (1-1) 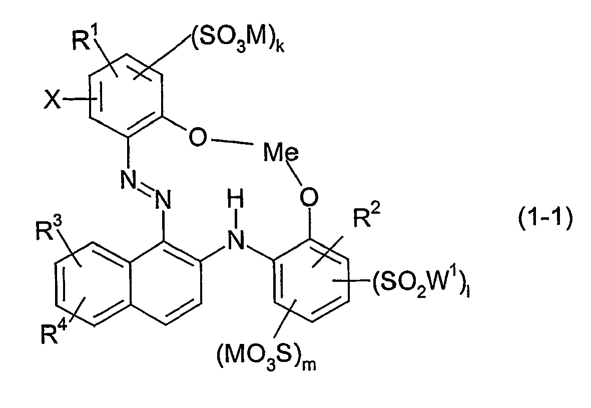
wobei
- X: -SO₂CH = CH₂ oder -SO₂CH₂CH₂V ist und
- V, R¹, R², R³, R⁴, W¹, M, Me, k, l, m: die obengenannte Bedeutung haben.

Besonders bevorzugte erfindungsgemäße Reaktivfarbstoffe sind solche der allgemeinen Formeln (1-1a) und (1-1b) 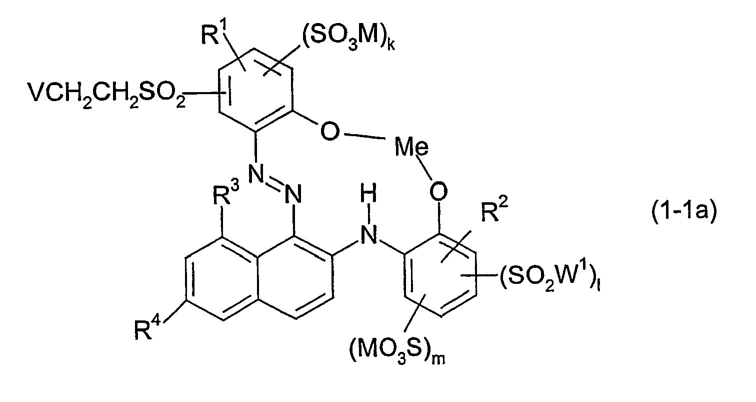 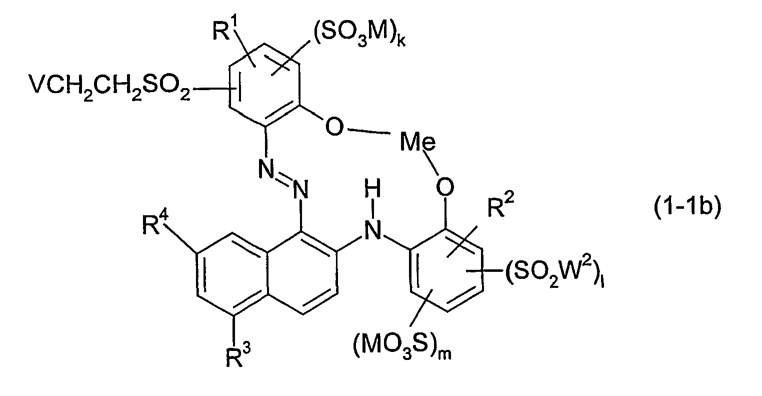
in welchen
k, l, m, W¹, V, Me und M die obengenannte Bedeutung haben,
R³ für Hydroxy,
R⁴ für Sulfo und
R¹ und R² für Wasserstoff stehen.

Ganz besonders bevorzugte erfindungsgemäße Reaktivfarbstoffe der allgemeinen Formel (1), sind solche worin X ein Rest der Formel (2) 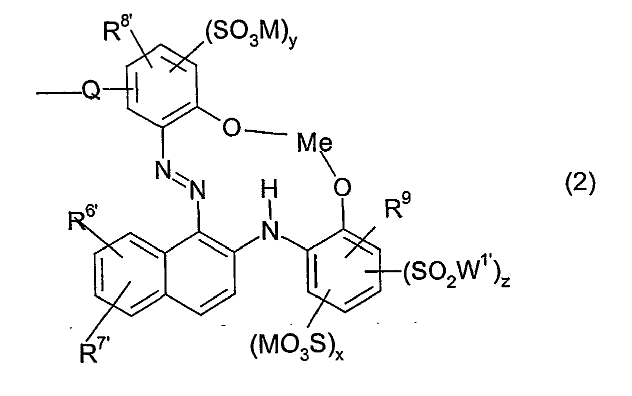
und -Q- für 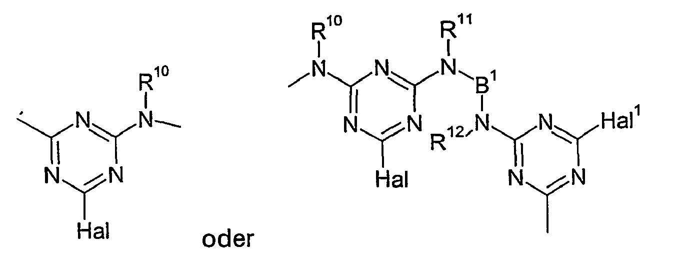
steht
und
- W¹': eine Bedeutung von W¹ hat,
- R⁶': Wasserstoff, Hydroxy oder Sulfo,
- R⁷': Wasserstoff oder Sulfo,
- x,y,z: 0 oder 1,
- h: 1 bedeutet und
- R⁸', R⁹': unabhängig voneinander Wasserstoff, Chlor, Alkyl mit 1-4 C-Atomen, wie Methyl, Ethyl, n-Propyl, i-Propyl, n-Butyl, i-Butyl, tert-Butyl, Alkoxy mit 1-4 C-Atomen, wie Methoxy, Ethoxy, n-Propyloxy, i-Proyloxy, Carboxy oder Sulfamoyl, Sulfo, bevorzugt Wasserstoff bedeutet;
- R^{A}, R¹⁰, R¹¹, R¹²: sind unabhängig voneinander Wasserstoff, gegebenenfalls substituiertes Alkyl mit 1-4 C-Atomen, wobei bevorzugte Substituenten Halogen, Hydroxy, Carboxy, Sulfo oder Sulfato sind;

- B¹: ist insbesondere 1,2-Ethylen, 1,3-Propylen, 1,4-Butylen, 1,2-Propylen, 1,3-Butylen, geradkettiges Alkylen von 2 bis 6 C-Atomen und verzweigtes Alkylen von 3 bis 6 C-Atomen, die jeweils durch 1 oder 2 Heterogruppen unterbrochen sind, welche aus den Gruppen der Formeln -O-, -CO-, -SO₂-, -NH-, -N(R^{A})- mit R^{A} einer der obengenannten Bedeutungen, -NH-CO-, -CO- NH-, -SO₂-NH-, oder -NH-SO₂- ausgewählt sind, Phenylen, das durch 1 oder 2 Substituenten aus der Gruppe Sulfo, Carboxy, Methyl, Ethyl, Methoxy und Ethoxy substituiert sein kann, wie beispielsweise Phen-1,3-ylen, Phen-1,4-ylen, 6-Sulfo-phen-1,3-ylen, 6-Sulfo-phen-1,4-ylen, 3,6-Disulfo-phen-1,4-ylen, 6-Methoxy-phen-1,3-ylen oder Benzyliden, das durch 1 oder 2 Substituenten aus der Gruppe Sulfo, Carboxy, Methyl, Ethyl, Methoxy und Ethoxy substituiert sein kann, wie beispielsweise 1,4-Benzyliden, 1,3-Benzyliden, 2-Sulfo-phenl-1-yl-4-methylen, 2-Sulfo-phen-1-ylen-5-methylen und 2-Methoxy-phen-1-yl-4-methylen, des weiteren der Rest des 1,1-Di-phen-4,4'-ylens, das in jedem Phenylenrest durch Methyl, Methoxy oder Sulfo substituiert sein kann, oder ist der 1,1'-Stilben-4,4'-ylen-Rest, der in jedem Phenylenrest durch Methyl, Methoxy oder Sulfo substituiert sein kann, oder ist Cycloalkylen mit 5 bis 8 C-Atomen, wie Cyclohexylen, oder ist eine Gruppe der allgemeinen Formel alk-B³, B³-alk, alk-B³-alk oder phen-G-phen, in welchen alk alkylen von 2 bis 4 C-Atomen bedeutet, wie 1,2-Ethylen, 1,3-Propylen und 1,4-Butylen, oder Alkylen von 2 bis 10-C-Atomen ist, bevorzugt von 4 bis 6 C-Atomen, das durch 1 oder 2, bevorzugt eine, Heterogruppen aus der Gruppe -O- und -NH-unterbrochen ist, B³-Phenylen ist, das durch 1 oder 2 Substituenten aus der Gruppe Sulfo, Carboxy, Methyl, Ethyl, Methoxy, Ethoxy, Chlor und Brom substituiert sein kann, oder Cycloalkylen mit 5 bis8 C-Atomen, wie Cyclohexylen, ist oder der bivalente Rest eines gesättigten, zwei N-Atome enthaltenden 5- bis 8-gliedrigen Heterocyclus ist, wie beispielsweise der 1,4-Piperazinylen-Rest, dessen eines bzw. beide N-Atome mit den Resten alk bzw. mit alk und einem C-Atom des Triazinrestes verbunden sind, phen ein Phenylenrest ist, der durch 1 oder 2 Substituenten aus der Gruppe Carboxy, Sulfo, Methyl, Ethyl, Methoxy, Ethoxy, Chlor und Brom substituiert sein kann, und G für eine direkte Bindung steht oder ein Rest der Formel -CH = CH- oder Cycloalkylen mit 5 bis 8 C-Atomen, wie Cyclohexylen, ist, oder
die Gruppe -N(R¹²)-B¹-N(R¹¹)- stellt den bivalenten Rest eines die beiden N-Atome enthaltenden gesättigten 5 bis 8 gliedrigen Heterocyclus dar, dessen N-Atome mit einem C-Atom des Triazinrestes verbunden sind, oder ist N-(2-Aminoethyl)-piperazin;
- Hal, Hal¹: sind unabhängig voneinander Chlor, Fluor oder ein gegebenenfalls substituierter Pyridiniumrest.

Ganz besonders bevorzugt sind erfindungsgemäße Farbstoffe der Formel (1), worin X eine Gruppierung der nachfolgenden Formel 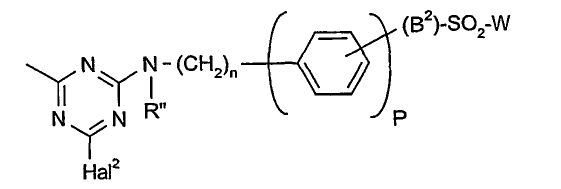 mit
- W: in der Bedeutung von W';
- n: gleich 0 bis 3;
- p: O oder 1;
- B²: Gruppierung der Formel-(CH₂)ₛ-((CH₂)₂-O-(CH₂)₂)ₜ;
- s: O bis 6;
- t: 0 oder 1
- Hal²: Cl, F und
- R": Phenyl, Wasserstoff oder Alkyl von 1 bis 6 C-Atomen, bevorzugt Alkyl von 1 bis 4 C-Atomen, wie Ethyl und Methyl, das substituiert sein kann, wie beispielsweise durch Substituenten aus der Gruppe Halogen, Hydroxy, Carboxy, Sulfo und Sulfato, und ist bevorzugt Methyl und Ethyl und insbesondere Wasserstoff;
- R": ist Phenyl und n = 0; p = 0; s = 2 oder 3; t = 0 oder
- R": ist H und n = 0; p = 1; s = 1, t = 0 wobei der Phenylring zwischen 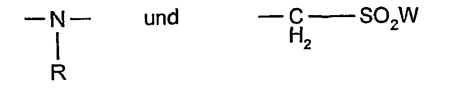 meta substituiert ist, oder
- R": ist H; n = 0; p = 0; s = 3; t = 0 oder
- R": ist Methyl n = 0; p = 0; s = 2; t = 0 oder
- R": ist H; n = 0; p = 1; s = 0, t = 0 wobei der Phenylenring zwischen 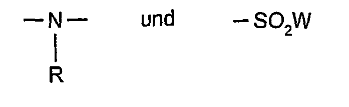 ortho, meta oder para substituiert ist, oder
- R": ist H; n = 0; p = 0; s = 0; t =1 oder
- R": ist H, n = 2; p = 0; s = 0; t = 0.

Weiterhin sind Farbstoffe der allgemeinen Formel (1) ganz besonders bevorzugt, worin B die Bedeutung der allgemeinen Formeln (b), (c), (e), (f), (g), (k), und (m) und h gleich 0 und X die Bedeutung von SO₂W¹ hat.

Bevorzugte Reste

X-(N-R₅)ₕ-B-

mit h = 0 sind beispielsweise

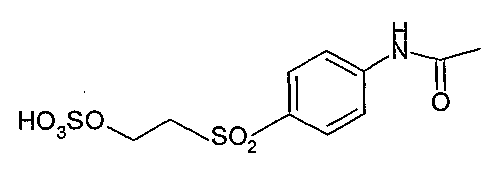

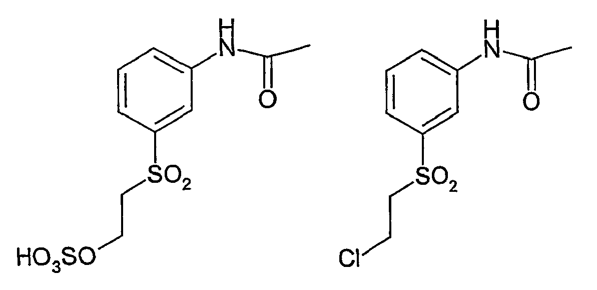

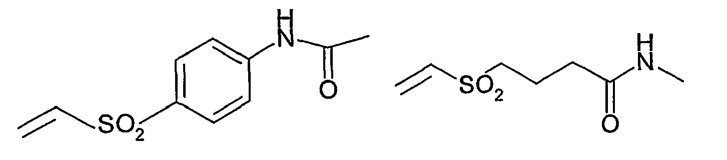

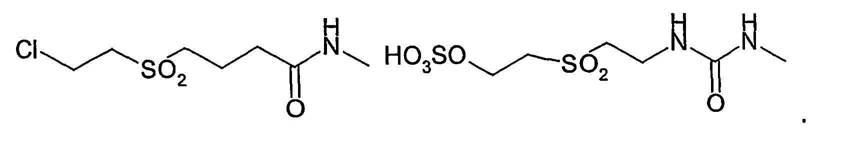

Die erfindungsgemäßen Reaktivfarbstoffe der allgemeinen Formel (1) liegen in der Regel als Präparation in fester oder in flüssiger (gelöster) Form vor. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können des weiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Bevorzugt liegen die erfindungsgemäßen Reaktivfarbstoffe der allgemeinen Formel (1) als Farbstoffpulver oder als Farbstoffgranulat mit einem Gehalt von 10 bis 80 Gew.-%, bezogen auf das Pulver bzw. das Granulat, an einem Elektrolytsalz, das auch als Stellmittel bezeichnet wird, vor. Granulate weisen insbesondere Korngrößen von 50 bis 500 µm auf. Diese festen Präparationen können zudem die erwähnten Puffersubstanzen in einer Gesamtmenge von bis zu 10 Gew.-%, bezogen auf die Präparation enthalten. Sofern die Farbstoffe in wäßriger Lösung vorliegen, so beträgt der Gesamtfarbstoffgehalt in diesen wäßrigen Lösungen bis zu etwa 50 Gew.-%, wie beispielsweise zwischen 5 und 50 Gew.-%., wobei der Elektrolytsalzgehalt in diesen wäßrigen Lösungen bevorzugt unterhalb 10 Gew.-%, bezogen auf die wäßrige Lösung, beträgt. Die wäßrigen Lösungen (Flüssigpräparationen) können die erwähnten Puffersubstanzen in der Regel in einer Menge von bis zu 10 Gew.-%, bevorzugt bis zu 2 Gew.-%, enthalten.

Gegenstand der vorliegenden Erfindung sind ferner Verfahren zur Herstellung der Reaktivfarbstoffe der allgemeinen Formel (1)

Beispielsweise sind die erfindungsgemäßen Farbstoffe der allgemeinen Formel (1-1) ausgehend von Aminoverbindungen der allgemeinen Formel (1-2) 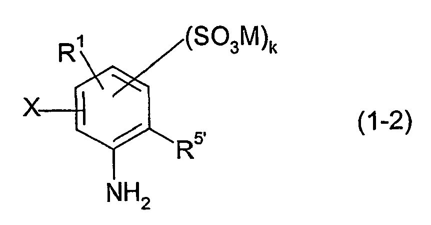
in welcher
- R^{5'}: Wasserstoff, Methoxy oder Hydroxy bedeutet und
- X: für SO₂-W¹ steht oder SO₂CH = CH₂ oder SO₂CH₂CH₂V, wobei V die oben angegebene Bedeutung hat, sowie
M, R¹, k die oben angegebenen Bedeutungen haben, durch Diazotierung und Kupplung auf eine Verbindung der Formel (1-3) 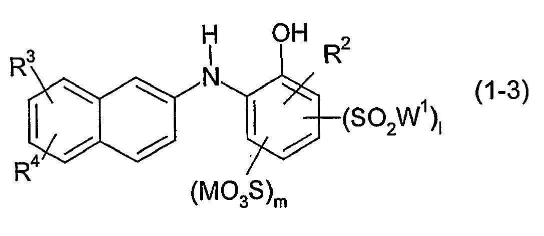 worin R², R³, R⁴, W¹, I und m die oben angegebene Bedeutung haben, bei einer Temperatur zwischen 0°C und 50°C, bevorzugt zwischen 10°C und 40°C und bei einem pH-Wert kleiner 6, bevorzugt zwischen 0,5 und 4,0 und anschließender Umsetzung mit kupfer-, kobalt- oder chromabgebenden Mitteln analog zu bekannten Verfahren der Synthese von Metallkomplexen, zugänglich.

Im erfindungsgemäßen Verfahren als Diazokomponenten verwendete Amine der allgemeinen Formel (1-2) sind beispielsweise: 3- oder 4-(β-Sulfatoethylsulfonyl)-anilin, 2-Amino-4-(β-sulfatoethylsulfonyl)-anisol, 2-Amino-5-(β-sulfatoethylsulfonyl)-anisol, 2-Methoxy-5-methyl-4-(β-sulfatoethylsulfonyl)-anilin, 2,5-Dimethoxy-4-(β-sulfatoethylsulfonyl)-anilin, 2,4 Dimethoxy-5-(β-sulfatoethylsulfonyl)-anilin, 4-Amino-3-(β-sulfatoethylsulfonyl)-anisol, 4-Amino-3-(β-sulfatoethylsulfonyl)-toluol, 4-(β-Sulfatoethylsulfonyl)-anilin-2-sulfonsäure, 2-Chlor- oder 2-Brom-4-(β-sulfatoethylsulfonyl)-anilin, 2-Amino-4- oder -5-(β-sulfatoethylsulfonyl)-phenol, 6-Chlor-, 6-Brom- oder 6-Nitro-4-(β-sulfatoethylsulfonyl)-phenol, 2-Amino-4-(β-sulfatoethylsulfonyl)-phenol-6-sulfonsäure, 2-Amino-4-methyl-5-(β-sulfatoethylsulfonyl)-phenol, 2-Amino-4-methoxy-5-(β-sulfatoethylsulfonyl)-phenol sowie deren entsprechende Vinylsulfonyl-, β-Thiosulfatoäthylsulfonyl- und β-Chloroethylsulfonyl-Verbindungen.

Die erfindungsgemäßen Kupplungskomponenten der allgemeinen Formel (1-3) werden vorzugsweise durch Bucherer-Reaktion der entsprechenden Naphthole oder
Naphthylamine mit 2-Aminophenolen der allgemeinen Formel (1-5) 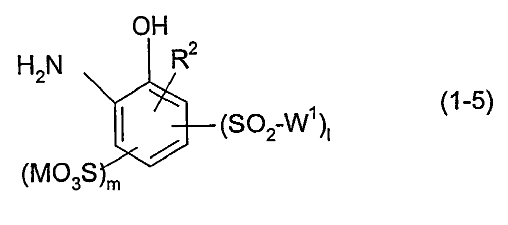
worin M, R², W¹, m und l die oben angegebene Bedeutung haben, hergestellt.

Die Bedingungen der Bucherer-Reaktion sind an sich bekannt, beispielsweise aus GB-A-230 457 und CS 155758 beschrieben; sie erfolgt vorzugsweise in Wasser bei 80°C und 130°C, besonders bevorzugt zwischen 100 und 130°C.

Ausgangsverbindungen für die Bucherer-Reaktion sind z.B. 1-Hydroxy-7-aminonaphthalin-3-sulfonsäure, 1,7-Dihydroxynaphthalin-3-sulfonsäure, 2-Aminonaphthalin-6-sulfonsäure, 2-Aminonaphthalin-5-sulfonsäure, 2-Hydroxynaphthalin-6-sulfonsäure, 2-Hydroxynaphthalin-5-sulfonsäure, 1,6-Dihydroxynaphthalin-3-sulfonsäure, 2-Hydroxynaphthalin-7-sulfonsäure, 2-Aminonaphthalin-7-sulfonsäure, 1-Hydroxy-6-aminonaphthalin-3-sulfonsäure, 2-Aminonaphthalin-5,7-disulfonsäure, 2-Hydroxynaphthalin-5,7-disulfonsäure und 2-Aminophenol, 2-Aminophenol-4-sulfonsäure, 2-Aminophenol-6-sulfonsäure, 2-Amino-4-methylphenol, 3-Amino-4-hydroxybenzoesäure, 3-Amino-4-hydroxybenzoesäure, 3-Amino-2-hydroxybenzoesäure, 4-Amino-3-hydroxybenzoesäure, 2-Amino-4-(β-sulfatoethylsulfonyl)-phenol, 2-Amino-4-(β-hydroxyethylsulfonyl)-phenol-6-sulfonsäure.

In einer bevorzugten Ausführungsform des Herstellungsverfahrens wird Aminophenol der allgemeinen Formel (1-5) wobei W¹ für Hydroxyethyl und l für 1 steht, in der Bucherer-Reaktion eingesetzt. So wird beispielsweise eine Verbindung der allgemeinen Formel (1-4) 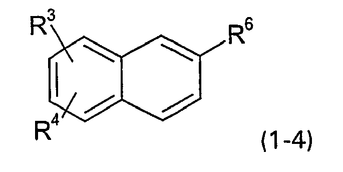
wobei R³ und R⁴ die obengenannte Bedeutung haben und R⁶ Hydroxy oder Amino bedeutet, zusammen mit einer Verbindung der allgemeinen Formel (1-5) 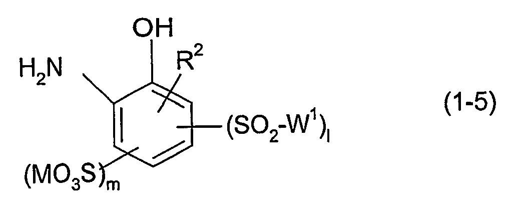
worin M, R², W¹, m und l die oben angegebene Bedeutung haben in Wasser und 39 %iger Natriumhydrogensulfitlösung mit 33 %iger Natronlauge auf einen pH-Wert von 5,7 gestellt. Gegebenenfalls wird nach Zugabe von Natriumchlorid die Reaktionsmischung 20 Stunden bei 100°C bis 110°C unter Rückfluss zum Sieden erwärmt. Nach Abkühlen auf Raumtemperatur wird das Produkt mit der Formel (1-3) 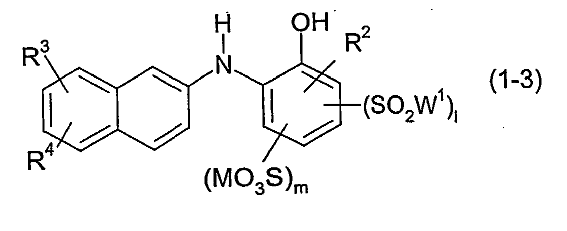
worin R², R³, R⁴, und m die oben angegebene Bedeutung haben und W¹ für Hydroxyethyl und I für 1 steht, isoliert, mit gesättigter Kochsalz-Lösung gewaschen und getrocknet.

Anschließend wird die so hergestellte Verbindung der allgemeinen Formel (1-3) worin W¹ für Hydroxyethyl und I sowie m für 1 stehen, nach üblichen Verfahren, beispielsweise mit wasserfreier Schwefelsäure, wie in EP-A- 0568876 beschrieben, in den entsprechenden Schwefelsäureester überführt, d. h., in eine Verbindung der allgemeinen Formel (1-3), in der W¹ für β-Sulfatoethyl steht.
Die Diazotierung der Verbindungen der allgemeinen Formel (1-2), sowie der Kupplungsreaktion mit Verbindung der allgemeinen Formel (1-3) sind dem Fachmann an sich bekannt und können in allgemein üblicher, in der einschlägigen Literatur ausführlich beschriebenen Art und Weise ausgeführt werden.
Die auf diese Weise zugänglichen Monoazoverbindungen der allgemeinen Formel (1-6). 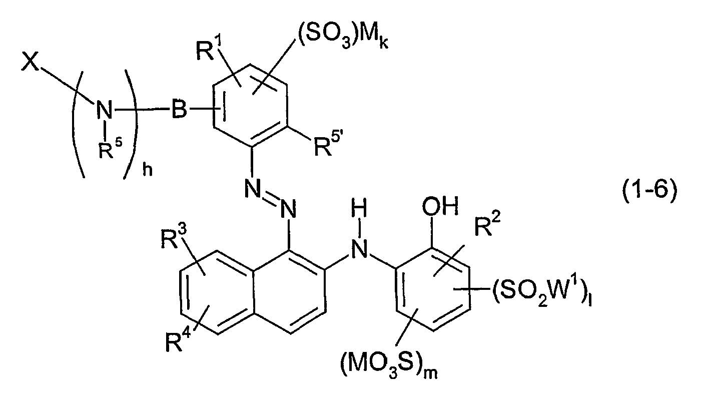
in welcher
- h: 0 bedeutet;
- B: eine direkte Bindung bedeutet und
- X: SO₂W¹ bedeutet und -M, R¹, R², R³, R⁴, R⁵, R⁵', W¹, l, m und k die oben angegebene Bedeutung haben, sind neu und ebenfalls Gegenstand der Erfindung

Die erfindungsgemäßen Verbindungen der allgemeinen Formel (1-6) werden mit einem Kupfer-, Kobalt- oder Chrom abgebenden Mittel, gegebenenfalls in Gegenwart eines Oxidationsmittels oder gegebenenfalls in Gegenwart eines entmethylierenden Mittels, behandelt. Diese Umsetzung mit kupfer-, kobalt- oder chromabgebenden Mitteln erfolgt analog zu den bekannten Verfahren der Synthesen von Metallkomplexen.

Bevorzugt werden Monoazoverbindungen der allgemeinen Formel (1-6) in wässrigem Medium bei einer Temperatur zwischen 0 und 130°C, gegebenenfalls unter Rückflusskühlung oder in einem geschlossenen Gefäß unter Druck, mit den metallabgebenden Mitteln behandelt.
Wenn die Metallkomplexbildung als oxidative Kupferung durchgeführt wird, d.h. wenn in den Verbindungen der Formel (1-6) der Formelrest R^{5'} für ein Wasserstoffatom steht, wird ein übliches Oxidationsmittel zugesetzt.
Die in dem erfindungsgemäßen Metallkomplexbildungs-Verfahren verwendeten metall-abgebenden Mittel sind beispielsweise Salze des Kupfers, des Kobalts und des Chroms, die fähig sind, das genannte Metall in Form eines Kations an die zur Komplexbildung befähigten Hydroxygruppen in den Verbindungen der Formel (1-1), die sich gegebenenfalls in der oxidativen oder entalkylierenden Metallisierung gebildet haben, abzugeben, so beispielsweise Kupfersulfat, Kupfercarbonat, Kobaltsulfat, Kobaltacetat und Chromsulfat; solche als Metallkomplexbildner geeignete Verbindungen sind auch organische Hydroxycarbonsäuren oder Dicarbonsäuren, die das Metall komplex gebunden enthalten, so beispielsweise komplexe Chrom- oder Kobaltverbindungen aliphatischer Hydroxycarbonsäuren oder aliphatischer Dicarbonsäuren, insbesondere von Alkanen von 2 bis 6 C-Atomen, oder Chromkomplexverbindungen von aromatischen o-Hydroxycarbonsäuren, so beispielsweise die Chrom- oder Kobaltkomplexverbindungen der Salizylsäure, der Zitronensäure, der Milchsäure, der Glykolsäure oder der Weinsäure.
Die Abscheidung und Isolierung der erfindungsgemäßen Monoazoverbindungen der allgemeinen Formel (1-1) aus den wäßrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder durch Eindampfen der Reaktionslösung selbst, beispielsweise durch Sprühtrocknung. Falls die letztgenannte Art der Isolierung gewählt wird, empfiehlt es sich vielfach, vor dem Eindampfen eventuell in den Lösungen vorhandene Sulfatmengen durch Fällung als Calciumsulfat und Abtrennung mittels Filtration oder durch Druckpermeation zu entfernen.

Weiterhin sind die erfindungsgemäßen Farbstoffe der allgemeinen Formel (1) zugänglich beispielsweise durch Umsetzung von äquivalenten Mengen Aminoverbindungen der allgemeinen Formel (3a) und (3b), 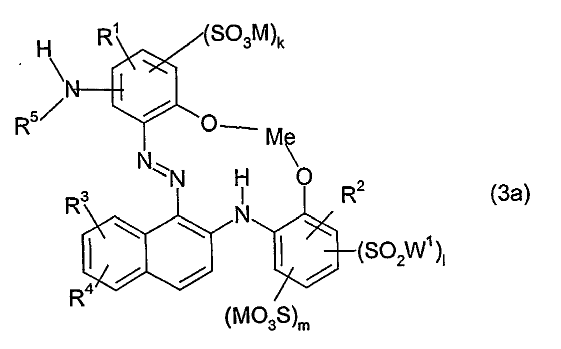 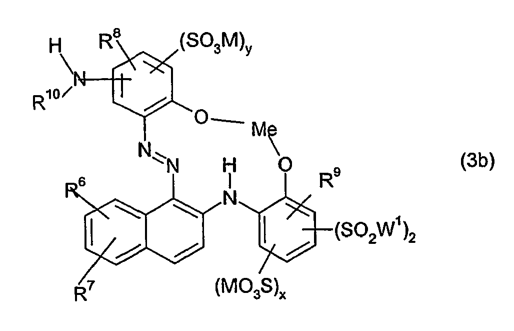
in welchen
Me, R¹ bis R¹⁰ l, m, k, x, y und z die oben angegebene Bedeutung haben, mit Verbindung der allgemeinen Formel (4) 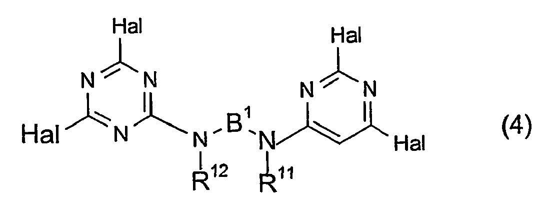
in welcher R¹¹, R¹², B¹ und Hal die obengenannte Bedeutung haben, oder dass man zuerst eine Verbindung der allgemeinen Formel (3a) mit einer Verbindung der allgemeinen Formel (5) 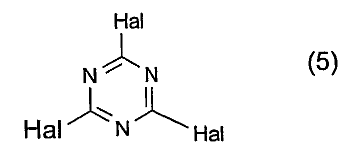 und eine Verbindung der allgemeinen Formel (3b) mit einer Verbindung der allgemeinen Formel (5) umsetzt. Die so erhaltenen Verbindungen werden anschließend mit der stöchiometrischen Menge an Verbindung (6) 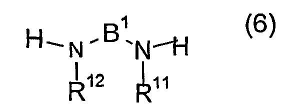
in weicher R¹¹, R¹², B¹ die oben angegebene Bedeutung haben, miteinander umgesetzt.

Besonders bevorzugte Verbindungen der allgemeinen Formel (5) sind hierbei 2,4,6-Trifluor-1,3,5-triazin und 2,4,6-Trichlor-1,3,5-triazin. Diamino-Ausgangsverbindungen der allgemeinen Formel (6) sind beispielsweise 1,2-Dianminoethan, 1,3-Diaminopropan, 1,4-Diaminobutan, 1,6-Diaminohexan, 1,4-Diaminocyclohexan, 1,3-Diaminocyclohexan, 4-Methylaminoanilin, 1,3-Diaminobenzol-4-sulfonsäure, 1,4-Diaminobenzol-3-sulfonsäure, 1,3-Diaminobenzol-4,6-disulfonsäure, p-Aminobenzolmethylamin, p-Phenylendiamin, m-Phenylendiamin, Aminoethylpiperazin, o-Phenylendiamin, m-Toluendiamin, 2,4-Diaminoanisol, Piperazin, 1,1-Bis-(4'-aminophenyl)cyclohexan, Benzidin, 4,4'-Diamino-3,3'-dimethoxydiphenyl-6,6'-disulfonsäure, 3,3'-Dimethyl-4,4'-diaminophenyl-6,6'-disulfonsäure, 1,5-Diaminopentan, N-(2-Aminoethyl)-piperazin, Bis-(2-aminoethyl)-ether, 1,5-Diaminonaphthalin, 1,8-Diaminonaphthalin, 2,6-Diaminonaphthalin-4,8-disulfonsäure, 1,6-Diaminonaphthalin-4,8-disulfonsäure, 4-(4'-Aminophenylcarbonylamino)-anilin und 3-(4'-Aminophenylcarbonylamino)-anilin, hiervon bevorzugt 1,4-Diaminobenzol-3-sulfonsäure und 1,3-Diaminobenzol-4,6-disulfonsäure und insbesondere bevorzugt 1,2-Diaminoethan, 1,3-Diaminopropan, 1,6-Diaminohexan, Piperazin, 1,3-Phenylendiamin und 1,4-Phenylendiamin, 4-Aminobenzylmethylamin, 3-Aminobenzylmethylamin.

Weitere wertvolle Farbstoffe der allgemeinen Formel (1) werden erhalten durch Umsetzung von Verbindungen der allgemeinen Formel (3a) mit Verbindungen der allgemeinen Formel X-Hal, wobei X und Hal die obengenannte Bedeutung haben. In einer besonderen Ausführungsform werden Verbindungen der allgemeinen Formel (3a) mit Verbindungen der allgemeinen Formel 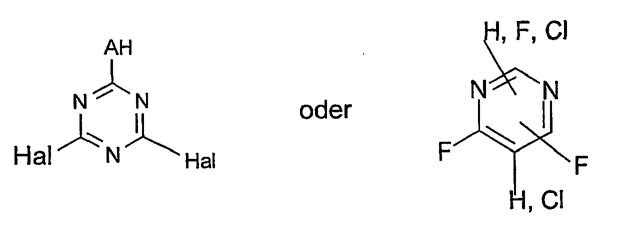 in bekannter Weise umgesetzt.

Alternativ erfolgt zuerst die Umsetzung von Verbindungen der allgemeinen Formel (3a) mit 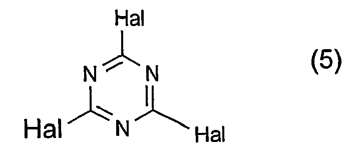
vorzugsweise Cyanurchlorid oder Cyanurfluorid und anschließend die Umsetzung mit Aminen der allgemeinen Formel AH, wobei AH die oben angegebene Bedeutung hat.

Die beschriebenen Verfahrensschritte gehören zum Stand der Technik.

Weiterer Gegenstand der Erfindung ist ein Verfahren zur Herstellung von Verbindungen der allgemeinen Formel (3) 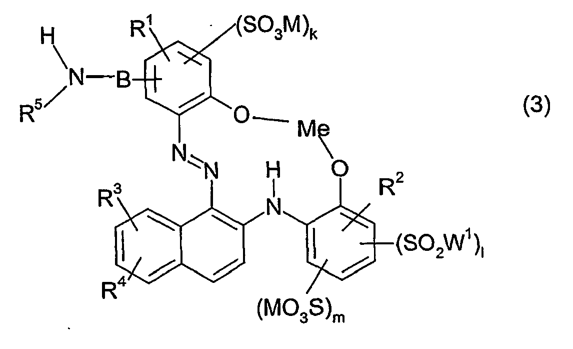
in welcher R¹ bis R⁵, Me und B, k, l , m, W¹, M die obengenannte Bedeutung haben.
Verbindungen der allgemeinen Formel (3) sind neu und ebenfalls Gegenstand der Erfindung. Sie sind ausgehend von Aminoverbindungen der allgemeinen Formel (8a) oder (8b) 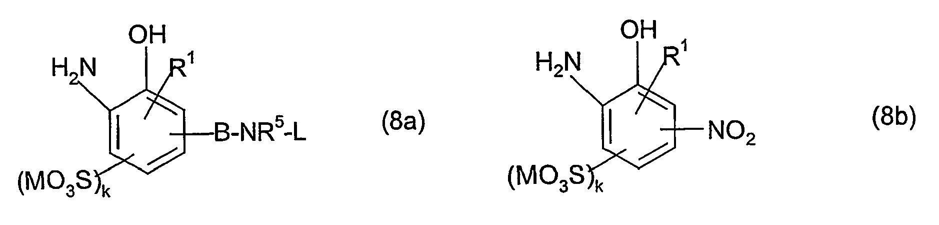
in welcher L für eine hydrolysierbare Schutzgruppe, beispielsweise Formyl, C₁-C₄₋Alkylcarbonyl oder C₁-C₄-Alkoxycarbonyl, insbesondere Acetyl und M, B, R¹ und R⁵, sowie k die oben angegebene Bedeutung haben, durch Diazotierung und Kupplung auf eine Verbindung der Formel (1-3) 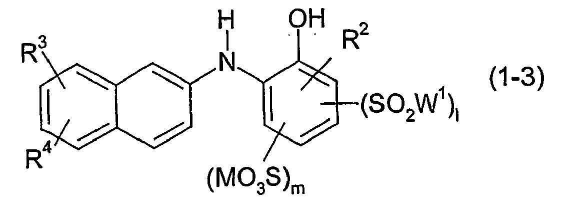
worin R², R³, R⁴, W¹ I und m die oben angegebene Bedeutung haben, bei einer Temperatur zwischen 0°C und 50°C, bevorzugt zwischen 10°C und 40°C und bei einem pH-Wert kleiner 6, bevorzugt zwischen 0,5 und 4,0 und anschließender Umsetzung mit kupfer-, kobalt- oder chromabgebenden Mitteln analog zu bekannten Verfahren der Synthese von Metallkomplexen, und anschließender Reduktion der Nitrogruppe in üblicher Weise oder Hydrolyse, vorzugsweise alkalische Hydrolyse, analog bekannter Verfahrensweisen, der mit einer Schutzgruppe versehenen Aminogruppe, zugänglich.

Im erfindungsgemäßen Verfahren als Diazokomponenten verwendete Amine der allgemeinen Formel (8a) und (8b) sind beispielsweise: 6-Acetylamino-2-aminophenol-4-sulfonsäure, 2-Amino-6-nitrophenol-4-sulfonsäure, 4-Nitro-2-aminophenol-6-sulfonsäure, 2-Amino-6-chlorphenol-4-sulfonsäure-hydroxyethylamid, 4-Nitro-2-aminophenol, 5-Nitro-2-aminophenol, 4-Chlor-6-nitro-2-aminophenol, 4-Chlor-6-nitro-2-aminophenol, 4-Chlor-5-nitro-2-aminophenol, 6-Chlor-4-nitro-2-aminophenol, 2-Aminophenol-4-sulfonsäureamid, 4-Acetylamino-6-aminophenol-2-sulfonsäure.

Die erfindungsgemäßen Reaktivfarbstoffe der allgemeinen Formel (1) besitzen wertvolle anwendungstechnische Eigenschaften. Sie werden zum Färben und Bedrucken von hydroxy- und/oder carbonamidgruppenhaltigen Materialien, beispielsweise in Form von Flächengebilden, wie Papier und Leder oder von Folien, wie beispielsweise aus Polyamid oder in der Masse, wie beispielsweise von Polyamid und Polyurethan, insbesondere aber in Form von Fasern der genannten Materialien verwendet. Bevorzugt werden sie zum Färben und Bedrucken cellulosehaltiger Fasermaterialien aller Art verwendet. Außerdem eignen sie sich auch zum Färben oder Bedrucken von hydroxygruppenhaltigen Fasern, die in Mischgeweben enthalten sind, z. B. von Gemischen aus Baumwolle mit Polyesterfasern oder Polyamidfasern. Es ist auch möglich, mit ihnen Textilien oder Papier nach dem Inkjet-Verfahren zu bedrucken. Die Druckschriften GB,A,961,552 sowie GB,A,973,238 offenbaren Strukturähnliche metallisierte Reaktivfarbstoffe für Cellulose und Polyamid.

Die vorliegende Erfindung betrifft somit auch die Verwendung der erfindungsgemäßen Reaktivfarbstoffe der allgemeinen Formel (1) zum Färben oder Bedrucken der genannten Materialien bzw. Verfahren zum Färben oder Bedrucken solcher Materialien in an und für sich üblichen Verfahrensweisen, bei welchen man einen oder mehrere erfindungsgemäße Reaktivfarbstoffe der allgemeinen Formel (1) als Farbmittel einsetzt. Hierzu können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Hydroxygruppenhaltige Materialien sind solche natürlichen oder synthetischen Ursprungs, wie beispielsweise Cellulosefasermaterialien oder deren Regenerationsprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid- 6,6, Polyamid-6, Polyamid-11 und Polyamid-4.

Die Fasermaterialien lassen sich auch in Gemischen miteinander verarbeiten und färben oder können Fasermaterialien anderer chemischer Natur enthalten, wie Polyesterfasern. Beispiele hierfür sind Mischgewebe aus Cellulosefasern und Polyesterfasern sowie aus Cellulosefasern und Polyamidfasern.

Die erfindungsgemäßen Farbstoffe lassen sich, gemäß der erfindungsgemäßen Anwendung, auf den genannten Substraten, insbesondere auf den genannten Fasermaterialien, nach den für wasserlösliche, faserreaktive Farbstoffe bekannten Anwendungstechniken applizieren und fixieren, so beispielsweise, indem man Verbindungen der allgemeinen Formel (1) in gelöster Form auf das Substrat aufbringt oder sie darin einbringt und sie auf diesem oder in diesem durch Hitzeeinwirkung oder durch Einwirkung eines alkalisch wirkenden Mittels oder durch beide Maßnahmen fixiert. Solche Färbe- und Fixierweisen sind in der Literatur zahlreich beschrieben beispielsweise in EP-A-0 181 585.
So eignen sich die Verbindungen (1) sowohl für das Auszieh-Färbeverfahren als auch zum Färben nach dem Foulard-Färbeverfahren, wonach die Ware mit wäßrigen, gegebenenfalls elektrolytsalzhaltigen Lösungen der erfindungsgemäßen Farbstoffe imprägniert und in der oben angegebenen Weise auf dem Material fixiert wird. Besonders geeignet sind die erfindungsgemäßen Verbindungen der allgemeinen Formel (1) in der Anwendung nach den sogenannten Kaltverweilverfahren, wonach ein Farbstoff zusammen mit den alkalisch wirkenden Mitteln auf dem Foulard auf das Fasermaterial aufgebracht wird, auf dem er nach mehrstündigen Lagern bei Raumtemperatur fixiert. Nach dem Fixieren werden die erhaltenen Färbungen und Drucke mit kaltem und heißem Wasser, gegebenenfalls unter Zusatz eines dispergierend wirkenden und die Diffusion der nicht fixierten Anteile fördernden Mittels, gründlich gespült.

Die Verbindungen der allgemeinen Formel (1) zeichnen sich durch hohe Reaktivität, gutes Fixiervermögen und ein gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch und nicht fixierte Anteile können leicht ausgewaschen werden, wobei die Differenz zwischen Ausziehgrad und Fixiergrad bemerkenswert klein ist, weswegen auch der Seifverlust sehr gering ist. Die Verbindungen der allgemeinen Formel (1) eignen sich auch besonders in den Textildruckverfahren, vor allem auf Cellulosefaser-materialien, wie Baumwolle, ebenso aber auch zum Bedrucken von Carbonamidgruppen-haltigem Fasermaterial, wie beispielsweise Wolle und Seide oder Mischgeweben, die Wolle oder Seide enthalten. Sie sind weiterhin sehr gut für den Einsatz in die Ätzdruck- und Reservedruck-Verfahren geeignet.

Die mit den Verbindungen der allgemeinen Formel (1) hergestellten Färbungen und Drucke besitzen, insbesondere auch Cellulosefasermaterialien, eine hohe Farbstärke und eine hohe Bindungsstabilität zur Faser sowohl im sauren als auch im alkalischen Bereich, weiterhin eine gute Lichtechtheit, einschließlich einer sehr guten Nasslichtechtheit, sowie allgemein gute Nassechtheiten, wie gute Wasch-, Wasser-, Seewasser-, Überfärbe- und Schweißechtheiten sowie sehr gute Schweißlichtechtheiten, des weiteren eine gute Plissierechtheit, Bügelechtheit und Reibechtheit.

Die nachstehenden Beispiele dienen zur Erläuterung der Erfindung.

Die in den Beispielen formelmäßig beschriebenen Verbindungen sind in Form der freien Säuren angegeben; im allgemeinen werden sie in Form ihrer Alkalimetallsalze, wie Lithium, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima (λₘₐₓ ) im sichtbaren Bereich wurden anhand der Alkalimetallsalze in wäßriger Lösung ermittelt. In den Tabellenbeispielen sind die λₘₐₓ-Werte bei der Farbtonangabe in Klammern gesetzt; die Wellenlängeangabe bezieht sich auf nm.

Herstellung der erfindungsgemäßen Farbstoffe der allgemeinen Formel (1-1)

### 1. Herstellung der Kupplungskomponente nach der Bucherer-Reaktion

a.) 0.474 Mol 1,7-Dihydroxynaphthalin-3-sulfonsäure, 0.57 Mol 2-Aminophenol, 380 ml Wasser und 873 ml 39% ige Natriumhydrogensulfitlösung werden mit 33% iger Natronlauge auf einen pH Wert von 5.7 gestellt. Nach Zugabe von 150g Natriumchlorid wird die Reaktionsmischung 20 Stunden bei 107°C unter Rückfluß zum Sieden erhitzt. Nach Abkühlen auf Raumtemperatur wird das Produkt der Formel (3.1) 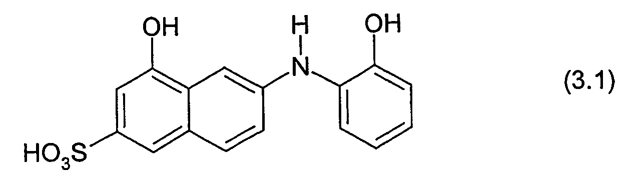 isoliert, mit gesättigter Kochsalz-Lösung gewaschen und getrocknet.
b.)0.495 Mol 2-Naphthol-7-sulfonsäure, 0,694 Mol 2-Aminophenol-4-sulfonsäure, 400 ml Wasser und 921 ml 39%ige Natriumhydrogensulfitlösung werden mit 33%iger Natronlauge auf einen pH-Wert von pH 5,8 gestellt. Nach Zugabe von 200 g Natriumchlorid wird die Reaktionsmischung 20 Stunden unter Rückfluß zum Sieden erhitzt.
   Nach Abkühlen auf Raumtemperatur wird das Produkt der Formel (3.2) 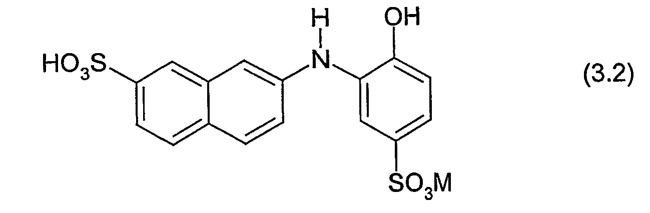 isoliert, mit gesättigter Kochsalzlösung gewaschen und getrocknet.
c.) 0.474 Mol 1,7-Dihydroxynaphthalin-3-sulfonsäure, 0,57 Mol 2-Hydroxy-3-sulfo-5-(β-hydroxyethylsulfonyl)-anilin, 380 ml Wasser und 873 ml 39% ige Natriumhydrogensulfitlösung werden mit 33%iger Natronlauge auf einen pH Wert von 5,7 gestellt. Nach Zugabe von 300 g Natriumchlorid wird die Reaktionsmischung 20 Stunden unter Rückfluß zum Sieden erhitzt. Nach Abkühlen auf Reaumtemperatur wird das Produkt der Formel (3.3) 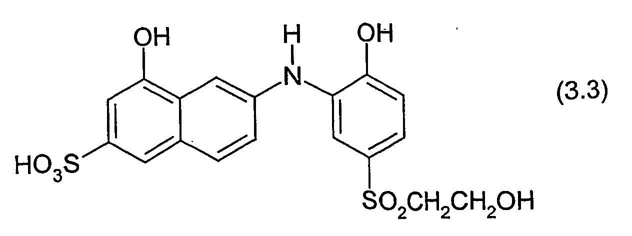 isoliert, mit gesättigter Kochsalzlösung gewaschen und getrocknet. Anschließend wird das Produkt bei Raumtemperatur in 530 g 100%ige Schwefelsäure eingetragen und 5 Stunden nachgerührt. Die Reaktionslösung wird auf 1000 g Eis ausgetragen. Nach Aussalzen mit 200g Kaliumchlorid wird das Produkt (3.4) 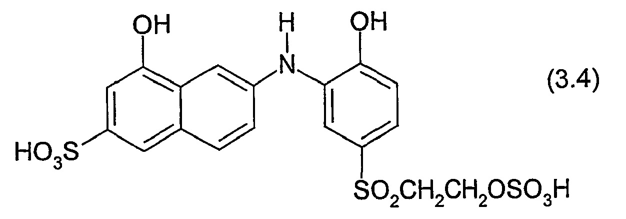 isoliert.

### 2. Herstellung der Farbstoffe der allgemeinen Formel (1-1)

### Beispiel 1

0,1 Mol 2-Hydroxy-5-(β-sulfatoethylsulfonyl)-anilin werden in 400 g Wasser mit 35 g 31 %iger Salzsäure und 20,5 ml Natriumnitritlösung (345 g/1000 ml) innerhalb von 1 h bei 0-5 °C diazotiert.
Danach wird überschüssige salpetrige Säure mit Amidosulfonsäure zerstört und die Diazoniumsalzsuspension mit 0,097 Mol 6-(6-Hydroxy-3-sulfo-anilino)-4-hydroxynaphthalin-2-sulfonsäure versetzt. Mit 20 %iger Sodalösung wird der pH-Wert auf einen pH von 1,0-1,1 gestellt und gehalten. Die Kupplung wird bei 20-25°C durchgeführt.
Nach beendeter Kupplung wird mit 20%iger Sodalösung der pH-Wert auf 5,0-5,5 gestellt. Nach Zugabe von 25 g Kupfersulfatpentahydrat wird der pH-Wert erneut auf 5,0-5,5 gestellt und gehalten.
Nach beendeter Kupferung wird der erfindungsgemäße Kupferkomplexfarbstoff der Formel (A) 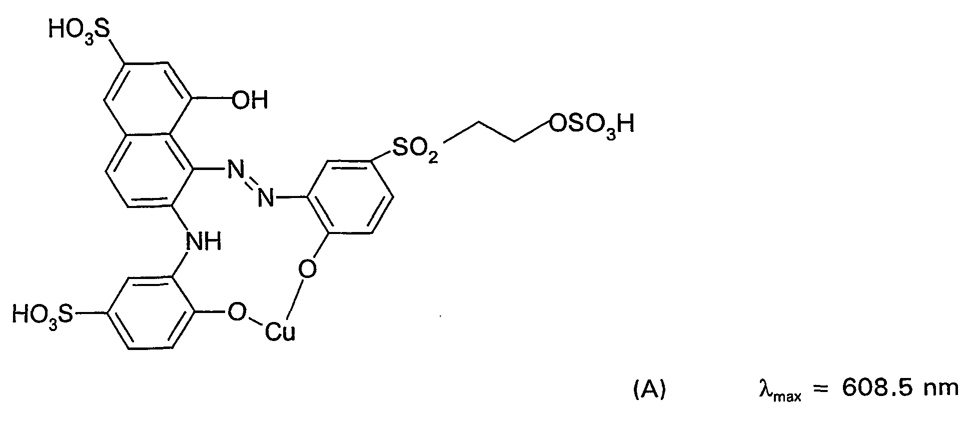 durch Aussalzen mit Kaliumchlorid isoliert. Der Farbstoff färbt Baumwolle in blauen Tönen mit guten Echtheitseigenschaften, von denen insbesondere die gute Lichtechtheit hervorzuheben ist.

### Beispiel 2

Zu der in Beispiel 1 beschriebenen Diazoniumsalzsuspension werden 0,95 Mol 6-[6-Hydroxy-3-(β-sulfatoethylsulfonyl)-amino]-4-hydroxy-naphthalin-2-sulfonsäure (Verbindung der Formel (3.4)) gegeben. Die Kupplung wird unter den in Beispiel 1 genannten Bedingungen durchgeführt. Nach beendeter Kupplung kann der rote Farbstoff der Formel (B), 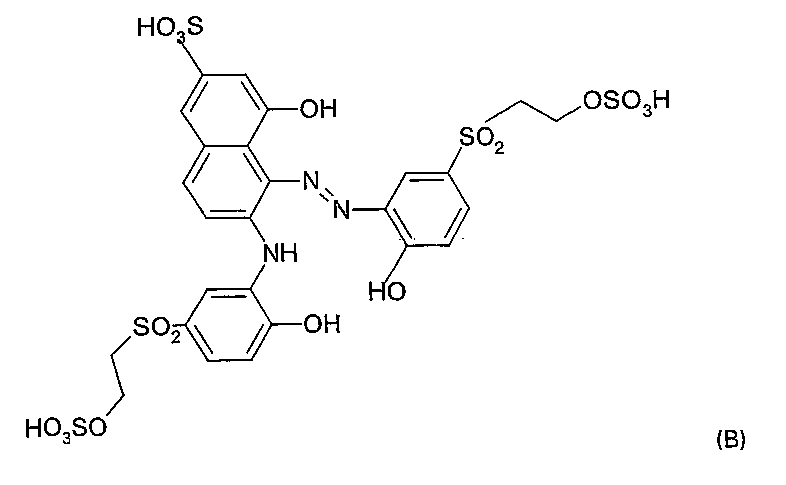 wenn eine Reinigung erforderlich ist, nach Zugabe von Ethanol isoliert werden. Das isolierte Produkt wird in 1000 ml bei Raumtemperatur gelöst. Nach Zugabe von 25 g Kupfersulfatpentahydrat wird die Kupferung, wie im Beispiel 1 beschrieben, durchgeführt. Nach beendeter Kupferung wird überschüssiges, nicht komplexgebundenes Kupfer durch Zugabe von wenig Natriumsulfid als Kupfersulfid gefällt und letzteres abfiltriert. Der erfindungsgemäße Kupferkomplexfarbstoff der Formel (C) 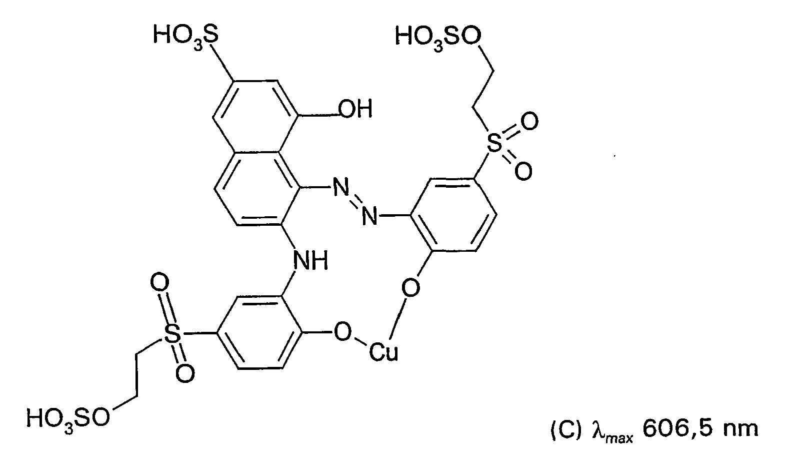 wird durch Eindampfen der auf pH 5,0-5,5 eingestellten Farbstofflösung unter Vakuum oder durch Sprühtrocknung dieser Lösung isoliert. Der Farbstoff liefert auf Baumwolle marineblaue Färbungen, die sehr gute Lichtechtheiten und Nassechtheiten aufweisen.

### Beispiel 3

0,1 Mol 2-Hydroxy-3-sulfo-5-(β-sulfatoethylsulfonyl)-anilin werden in 250 ml mit 35 g 31 %ige Salzsäure und 20,5 ml Natriumnitritlösung (345 g/1000 ml) innerhalb von 1 h bei 0-5°C diazotiert. Danach wird überschüssige salpetrige Säure, wie üblich, mit Amidosulfonsäure zerstört. Anschließend werden 0,95 Mol 7-(2-Hydroxy-anilino)-naphthalin-2-sulfonsäure zugegeben. Mit 20%iger Sodalösung wird der pH-Wert auf 1,3 gestellt und gehalten. Die Kupplung wird bei 35-40°C durchgeführt. Nach beendeter Kupplung wird der ausgefallene Farbstoff der Formel (D) 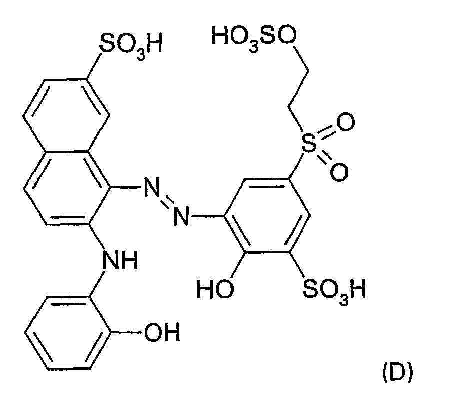 isoliert und in 400 ml suspendiert. Nach Zugabe von 25 g Kupfersulfatpentahydrat wird der pH-Wert mit 20%iger Sodalösung auf 5,0-5,5 gestellt und gehalten.
Nach beendeter Kupferung wird der erfindungsgemäße Kupferkomplexfarbstoff der Formel (E) 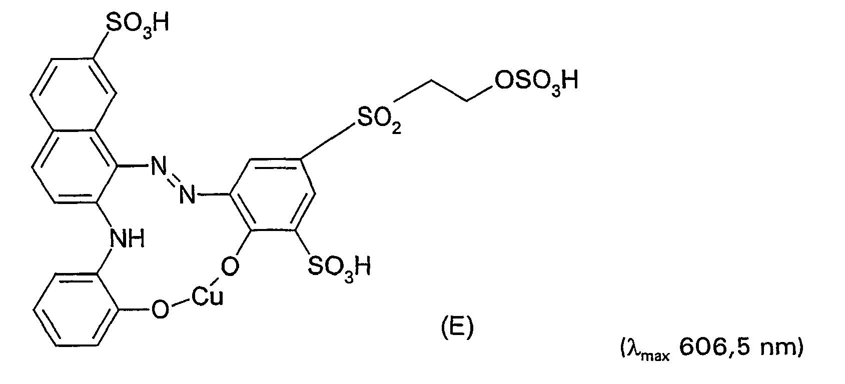
durch Aussalzen mit Kaliumchlorid isoliert. Der Farbstoff färbt Baumwolle nach den in der Technik bekannten Druck- und Färbeverfahren in grünstichigen Blautönen mit hervorragenden Licht- und Naßechtheiten.

### Beispiel 4

0,1 Mol 4-(β-Sulfatoethylsulfonyl)-anilin werden in 300 ml mit 35 g 31 %iger Salzsäure und 20,5 ml Natriumnitritlösung (345 g/1000 ml) innerhalb einer Stunde bei 0-5°C diazotiert. Danach wird überschüssige salpetrige Säure mit Amidosulfonsäure zerstört. Zur Reaktionsmischung werden anschließend 0,097 Mol 6-(2-Hydroxyanilino)-4-hydroxy-naphthalin-2-sulfonsäure gegeben. Mit 20%iger Sodalösung wird der pH-Wert auf 1,1-1,3 gestellt und gehalten. Die Kupplung wird bei 10-20°C durchgeführt. Nach beendeter Kupplung werden 30g Kupfersulfatpentahydrat sowie danach 40 g Natriumacetat eingetragen. Mit 20%iger Sodalösung wird der pH- Wert auf 5,0 bis 5,2 gestellt. Dann läßt man bei 20-30°C und einem pH von 5,0 bis 5,2 innerhalb von 2 Stunden 27 g 30%ige Wasserstoffperoxidlösung zutropfen. Nach zwei Stunden Nachrühren wird die Farbstofflösung unter Zusatz von Celite geklärt. Der entstandene Farbstoff der Formel (F) 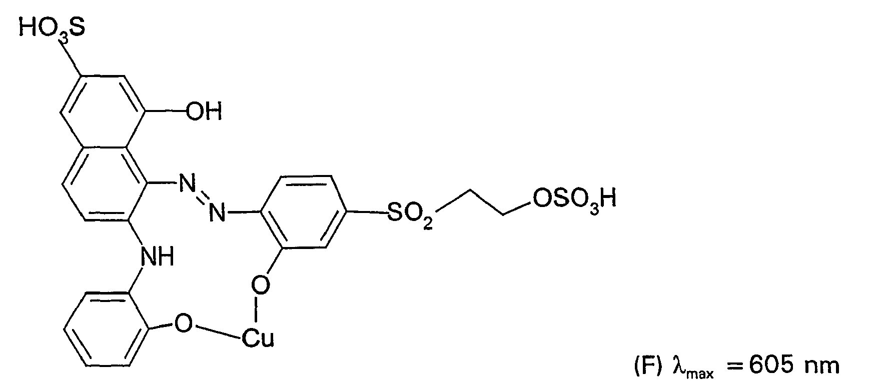
wird durch Aussalzen mit Kaliumchlorid isoliert. Der Farbstoff ergibt auf Baumwolle blaue Färbungen von sehr guter Lichtechtheit.

Die folgende Tabelle 1 beschreibt weitere Metallkomplexfarbstoffe, die analog zu den in den Beispielen 1-4 beschriebenen Verfahren hergestellt werden können.

| Bsp. | Diazokomponente | Kupplungskomponente | Metall | Farbton |
|---|---|---|---|---|
| 5 | 2-Hydroxy-5-(β-sulfatoethylsulfonyl)-anilin | 7-(2-Hydroxy-anilino)-naphthalin-2-sulfonsäure | Cu | Grünstichig blau |
| 6 | 2-Hydroxy-3-sulfo-5-(vinylsulfonyl)-anilin | Dito | Cu | Grünstichig blau |
| 7 | 2-Methoxy-5-(β-sulfatoethylsulfonyl)-anilin | Dito | Cu | Grünstichig blau |
| 8 | 2-Hydroxy-3-sulfo-5-(β-sulfatoethylsulfonyl)-anilin | 6-(2-Hydroxy-anilino)-4-hydroxynaphthalin-2sulfonsäure | Cu | Blau |
| 9 | Dito | Dito | Co | Blau |
| 10 | 2-Methoxy-5-(βsulfatoethylsulfonyl)-anilin | Dito | Cu | blau |
| 11 | 2-Hydroxy-5-(β-sulfatoethylsulfonyl)-anilin | Dito | Cu | Blau |
| 12 | 2-Hydroxy-5-(β-Chlorethylsulfonyl)-anilin | Dito | Cu | Blau |
| 13 | 2-Hydroxy-5-(Vinylsulfonyl)-anilin | Dito | Cu | Blau |
| 14 | 2,5-Dimethoxy-4-(β-sulfato-ethylsulfonyl)-anilin | Dito | Cu | Blau |
| 15 | 2-Methoxy-5-methyl-4-(β-sulfatoethylsulfonyl)-anilin | Dito | Cu | Blau |
| 16 | 2-Hydroxy-3-sulfo-5-(β-sulfatoethylsulfonyl)-anilin | 6-(3-chlor-6-hydroxy-anilin)-4-hydroxy-naphthalin-2-sulfonsäure | Cu | Blau |
| 17 | 2-Hydroxy-5-(β-sulfatoethyl-sulfonyl)-anilin | 7-(2-Hydroxy-anilino)-naphthalin-2,4-disulfonsäure | Cu | Marineblau |
| 18 | 2-Methoxy-5-(β-sulfatoethylsulfonylanilin | Dito | Cu | Marineblau |
| 19 | 2-Hydroxy-3-sulfo-5-(β-sulfatoethylsulfonyl)-anilin | Dito | Cu | Marineblau |
| 20 | Dito | 7-(3-Chlor-6-hydroxy-anilino)-napthalin-2,4-disulfonsäure | Cu | Marineblau |
| 21 | Dito | 7-(2-Hydroxy-4-methyl-anilino)-naphthalin-2-sulfonsäure | Cu | Marineblau |
| 22 | 2-Hydroxy-3-sulfo-5-(β-sulfatoethylsulfonyl)-anilin | 7-(6-Hydroxy-3-sulfoanilino)-naphthalin-2-sulfonsäure | Cu | Grünstichig blau |
| 23 | 2-Hydroxy-5-(β-sulfatoethylsulfonyl)-anilin | Dito | Cu | Grünstichig blau |
| 24 | 2-Hydroxy-5-(vinylsulfonyl)-anilin | Dito | Cu | Grünstichig blau |
| 25 | 2,5-Dimethoxy-4-(β-sulfato-ethylsulfonyl)-anilin | Dito | Cu | Grünstichig blau |
| 26 | 2-Hydroxy-5-(β-sulfatoethyl-sulfonyl)-anilin | 7-(2-Hydroxy-4-methyl-anilino)-naphthalin-2-sulfonsäure | Cu | Grünstichig blau |
| 27 | Dito | 7-(2-Hydroxy-5-carboxy-anilino)-naphthalin-2sufonsäure | Cu | Grünstichig blau |
| 28 | 2-Hydroxy-3-sulfo-5-(β-sulfatoethylsulfonyl)-anilin | 6-(2-Hydroxy-anilino)-naphthalin-2-sulfonsäure | Cu | Blaustichig schwarz |
| 29 | Dito | 6-(3-Chlor-6-hydroxy-anilino)-naphthalin-2-sulfonsäure | Cu | Blaustichig schwarz |
| 30 | 2-Hydroxy-3-sulfo-5-(β-sulfatoethylsulfony)-anilin | Dito | Cu | Blaustichig schwarz |
| 31 | Dito | Dito | Co | Schwarz |
| 32 | Dito | 6-(2-Hydroxy-anilino)-naphthalin-2-sulfonsäure | Cu | Blaustichig schwarz |
| 33 | Dito | 6-(6-Hydroxy-3-sulfo-anilino)-2-sulfonsäure | Cu | Grünstichig blau |
| 34 | 2-Hydroxy-3-sulfo-5-(β-sulfatoethyl-sulfonyl)-anilin | Dito | Cu | Grünstichig blau |
| 35 | 2-Hydroxy-5-(β-sulfatoethylsulfonyl)-anilin | 7-(2-Hydroxy-anilino)-4-hydroxy-naphthalin-2-sulfonsäure | Cu | Schwarz |
| 36 | 2-Hydroxy-3-sulfo-5-(β-sulfatoethylsulfonyl)-anilin | Dito | Cu | Schwarz |
| 37 | Dito | 7-(3-Chlor-6-hydroxy-anilino)-4-hydroxynaphthalin-2-sulfonsäure | Cu | Blaustichig schwarz |
| 38 | 2-Hydroxy-3-sulfo-5-(vinylsulfonyl)-anilin | 7-(2-Hydroxy-anilino)-4-hydroxy-naphthalin-2-sulfonsäure | Cu | Schwarz |
| 39 | Dito | 7-(6-Hydroxy-3-sulfo-anilino)-4-hydroxy-naphthalin-2-sulfonsäure | Cu | Schwarz |
| 40 | 2-Hydroxy-5-(β-sulfatoethyl-sulfonyl)anilin | Dito | Cu | Schwarz |
| 41 | Dito | Dito | Co | Rotstichig schwarz |
| 42 | 2-Hydroxy-3-sulfo-5-(β-sulfatoethylsulfonyl)-anilin | Dito | Cu | schwarz |

### Herstellung der erfindungsgemäßen Farbstoffe der allgemeinen Formel (1)

### Beispiel 43

0,1 Mol 6-Acteylamino-2-aminophenol-4-sulfonsäure werden in 250g Wasser mit 2,8g 96%iger Schwefelsäure und 20,5 ml Natriumnitrit-lösung (345g/1000ml) innerhalb von 1Std. bei 5-10°C diazotiert. Der pH-Wert soll nicht über 1,5 steigen.
Danach wird überschüssige salpetrige Säure mit Amidosulfonsäure zerstört und die Diazoniumsalzsuspension mit 0,1 Mol 6-(6-Hydroxy-3-sulfoanilino)-4-hydroxynaphthalin-2-sulfonsäure versetzt. Die Kupplung wird bei einem pH-Wert von 1,3 - 1,4 und einer Termperatur von 40°C durchgeführt.
Nach beendeter Kupplung wird die Verbindung der Formel G durch Aussalzen mit Kaliumchlorid isoliert.

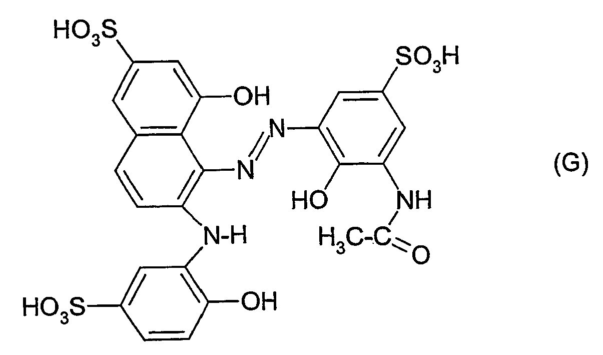

Die isolierte Verbindung der Formel (G) wird in 1000g Wasser suspendiert. Mit 20%iger Sodalösung wird der pH-Wert auf 5,0 - 5,5 gestellt. Nach Zugabe von 25g Kupfersulfatpentahydrat wird der pH-Wert erneut auf 5,0 - 5,5 gestellt und gehalten. Nach beendeter Kupferung werden 150g 33%ige Natronlauge zugegeben. Die Reaktionslösung wird 5 Std. unter Rückfluß zum Sieden erhitzt, anschließend filtriert, das Filtrat mit 33%iger Salzsäure auf einen pH-Wert von 7 gestellt und die Verbindung der Formel (H) durch Aussalzen mit Kaliumchlorid isoliert und anschließend getrocknet. Vor der weiteren Umsetzung ist eine Gehaltsbestimmung der Verbindung empfehlenswert.

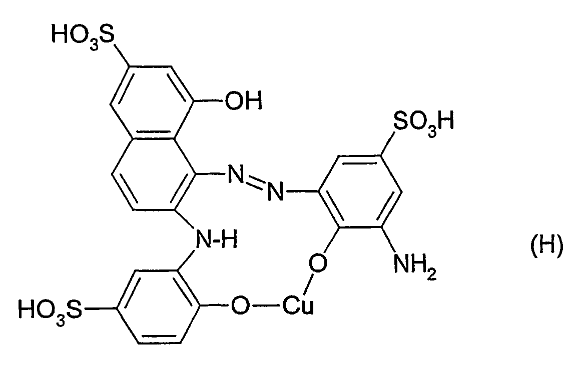

0,05 Mol der Verbindung der Formel (B) werden in 500g Wasser gelöst. Bei einem pH-Wert von 6,5 werden bei Raumtemperatur 0,06 Mol 2,4,6-Trifluorpyrimidin zugegeben. Mit 20%iger Sodalösung wird der pH-Wert bei 6,5 gehalten. Die Temperatur wird auf 30°C - 35°C angehoben. Nach beendeter Reaktion wird der erfindungsgemäße Farbstoff der Formel (J) 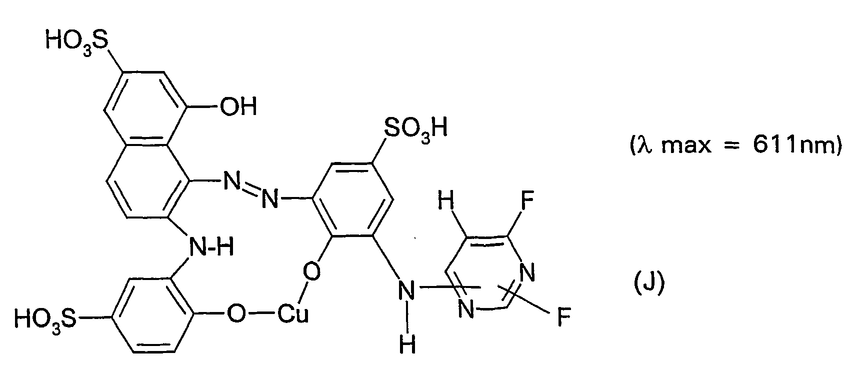 durch Aussalzen mit Kaliumchlorid isoliert. Der Farbstoff färbt Baumwolle in blauen Tönen mit guten Echtheitseigenschaften, von denen insbesondere die gute Lichtechtheit hervorzuheben ist.

### Beispiel 44

0,1 Mol 4-(β-Sulfatoethylsulfonyl)-anilin werden in 100g Wasser bei 0°C und einem pH-Wert von 6,5 gelöst. Nach Zugabe von 4,5g Natriumfluorid werden bei 0°C sehr schnell 0,11 Mol 2,4,6-Trifluor-1,3,5-triazin zugegeben. Dabei darf die Termperatur nicht über 0°C steigen. Anschließend wird der pH-Wert mit 20%iger Sodalösung auf 6,5 gestellt.
Zu dieser Suspension wird eine Lösung aus 0,9 Mol der im Beispiel 43 beschriebenen Verbindung der Formel (H) in 1000g Wasser gegeben. Man läßt die Reaktionsmischung auf Raumtemperatur kommen und hält den pH-Wert bei 6,0 - 6,5. Der erfindungsgemäße Farbstoff der Formel (K) 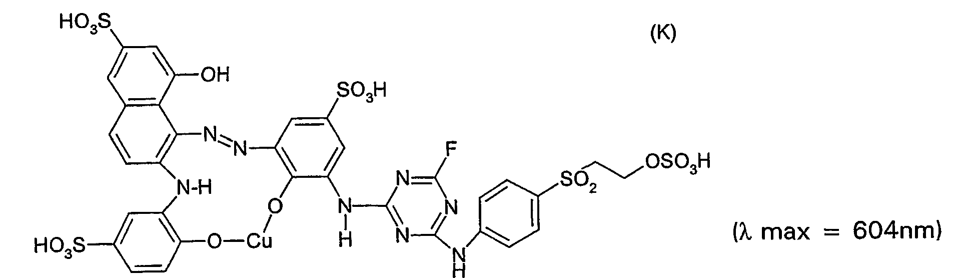
wird durch Aussalzen mit Kaliumchlorid isoliert. Der Farbstoff ergibt auf Baumwolle blaue Färbungen von sehr guter Lichtechtheit.

### Beispiel 45

0,1 Mol 6-Acetylamino-2-aminophenol-4-sulfonsäure werden entsprechend den Angaben in Beispiel 43 diazotiert. Zur Diazoniumsalzlösung wird eine Lösung von 0,095 Mol 7-(2-Hydroxy-anilino)-naphthalin-2-sulfonsäure in ca. 300g Wasser gegeben. Die Kupplung wird bei einem pH-Wert von 1,3-1,5 und 40°C durchgeführt.

Nach beendeter Kupplung werden 25g Kupfersulfatpentahydrat zugegeben. Mit 20%iger Sodalösung wird der pH-Wert auf 5,0 - 5,5 gestellt und gehalten. Nach beendeter Kupferung werden 150g 33%ige Natronlauge zugegeben.
Die Reaktionsmischung wird unter Rückfluß zum Sieden erhitzt. Nach beendeter Verseifung, wird die Reaktionslösung mit 33%iger Salzsäure auf einen pH-Wert von 7 gestellt, filtriert und die Verbindung der Formel (L) durch Aussalzen mit Natriumchlorid isoliert. 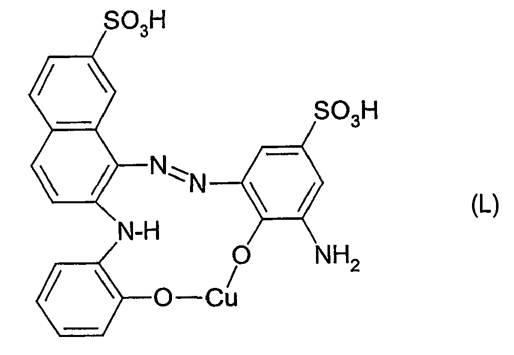 Anschließend werden 0,05 Mol der Verbindung der Formel (L) bei einem pH-Wert von 6,5 - 7,0 in 400g Wasser gelöst und auf 0°C abgekühlt. Bei 0°C werden innerhalb von 10 Min. 0,075 Mol 2,4,6-Trifluor-1,3,5-triazin zu gegeben. Während der Zugabe hält man mit 20%iger Sodalösung den pH-Wert bei 6,5 - 7,0. Anschließend wird der pH-Wert mit 15%iger Salzsäure auf 3,0 gestellt, bei 0°C wird 10 Min. gerührt. Dann erfolgt die Zugabe von 0,053 Mol Morpholin. Mit 20%iger Sodalösung wird ein pH-Wert von 7,0 - 7,5 gehalten. Die Reaktionstemperatur läßt man auf 10-15°C ansteigen.
Nach beendeter Reaktion wird der erfindungsgemäße Kupferkomplexfarbstoff der Formel (M) 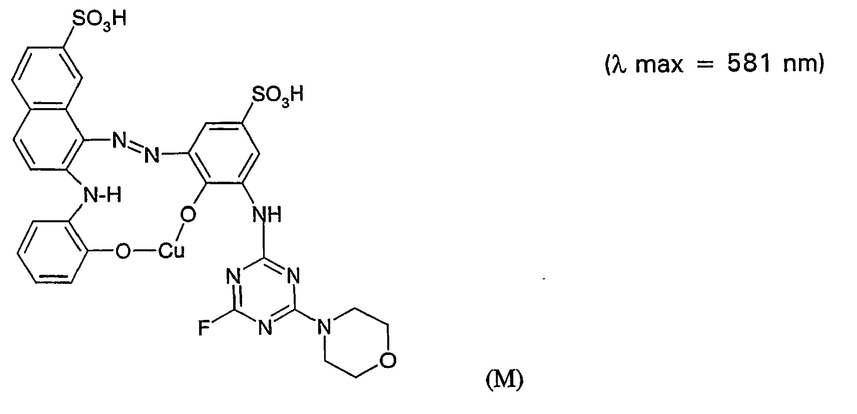 durch Aussalzen mit Natriumchlorid isoliert. Der Farbstoff färbt Baumwolle nach den in der Technik bekannten Druck- und Färbeverfahren in grünstichigen Blautönen.
Die folgende Tabelle 2 beschreibt weitere Metallkomplexfarbstoffe der allgemeinen Formel (I), die analog zu den in den Beispielen 43-45 beschriebenen Versuchen hergestellt werden können.

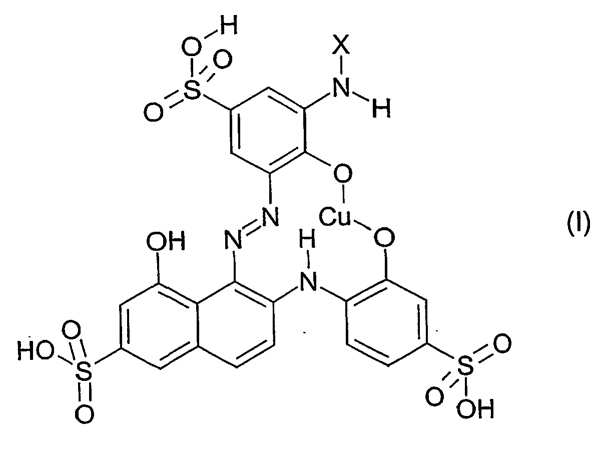

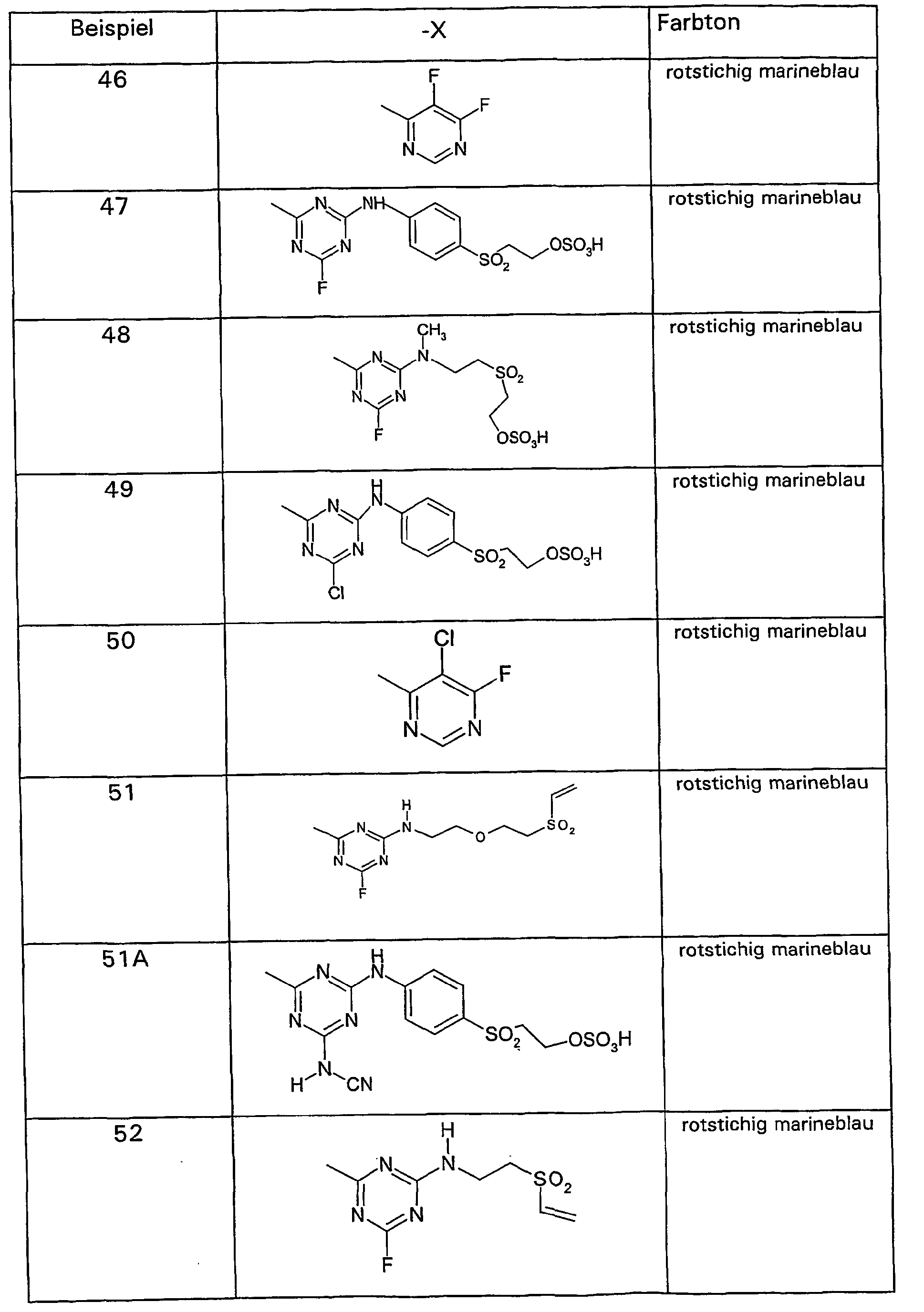

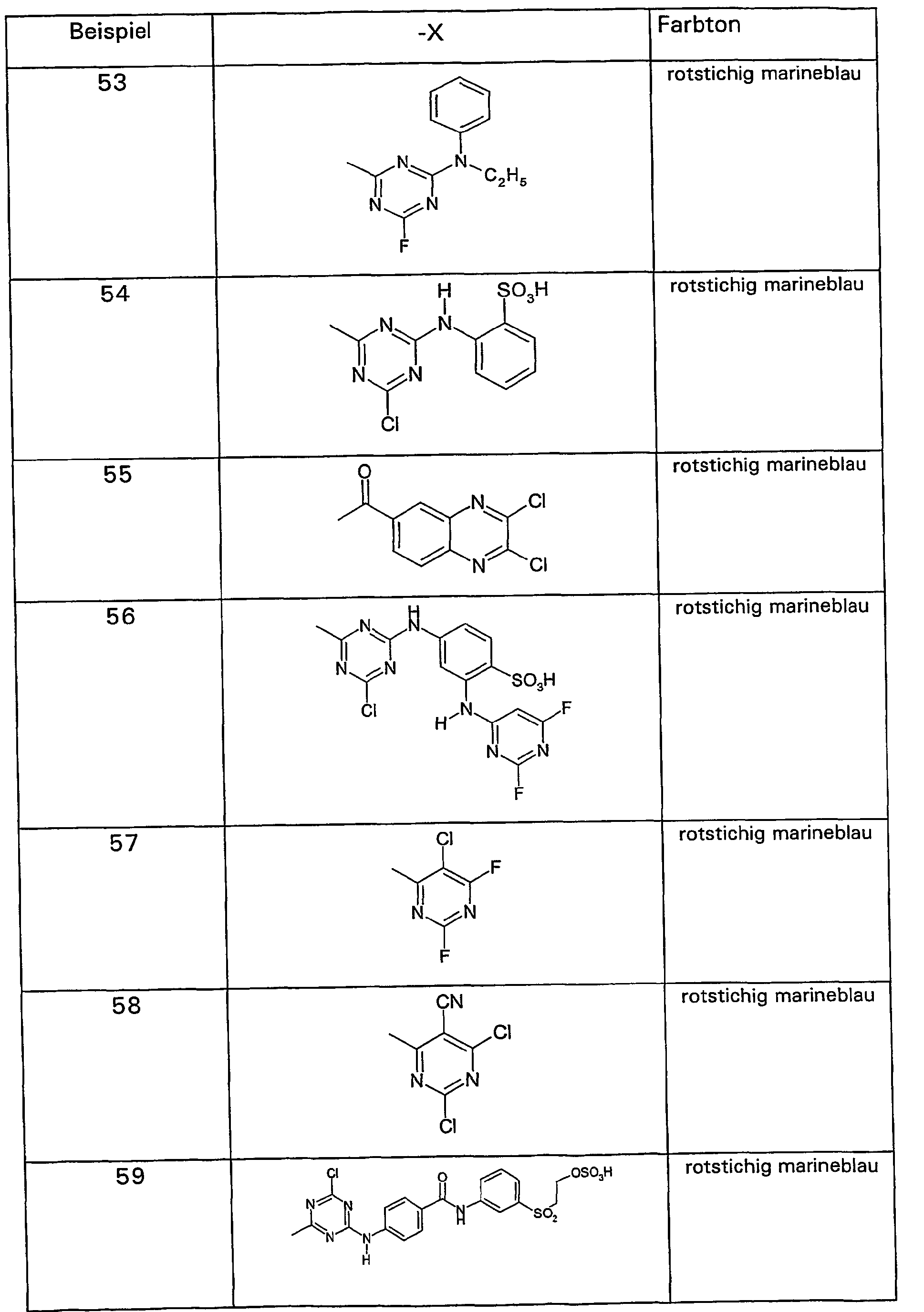

Die folgende Tabelle 3 beschreibt weitere Metallkomplexfarbstoffe der allgemeinen Formel (II), die analog zu den in den Beispielen 43-45 beschriebenen Versuchen hergestellt werden können.

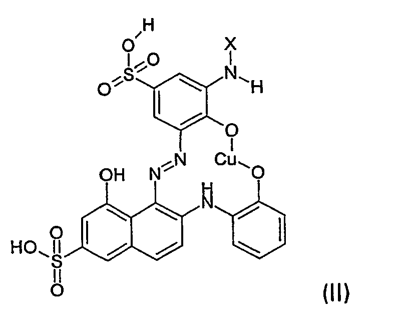

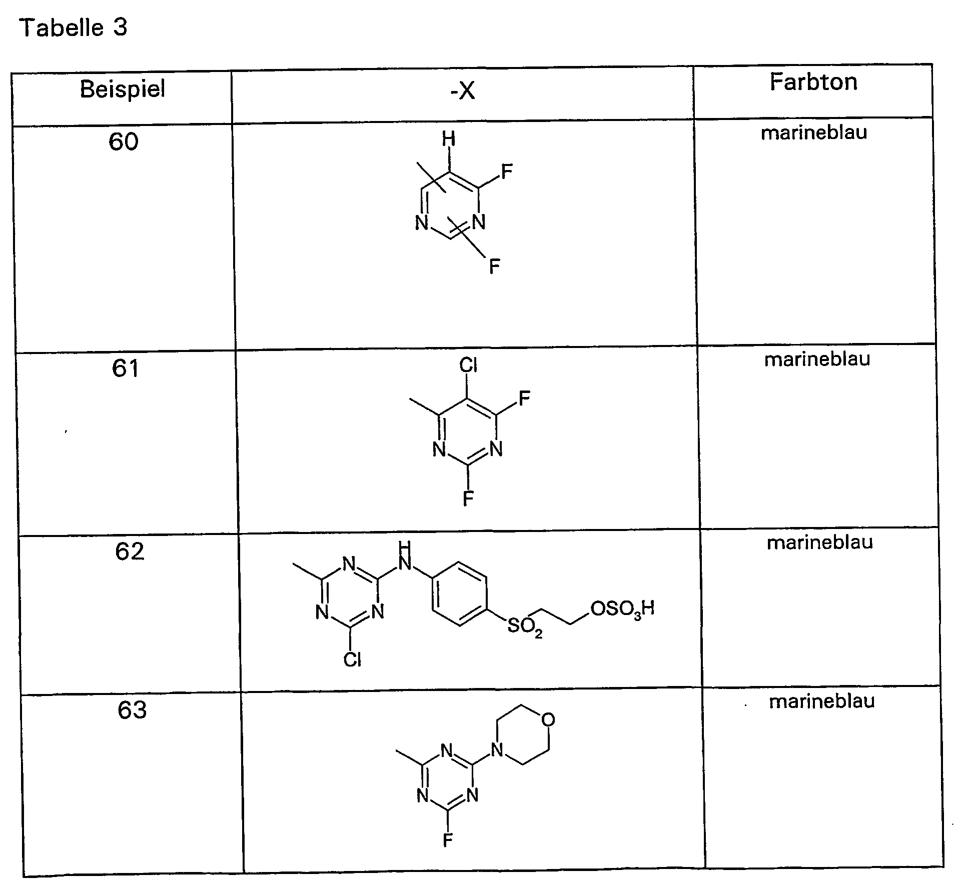

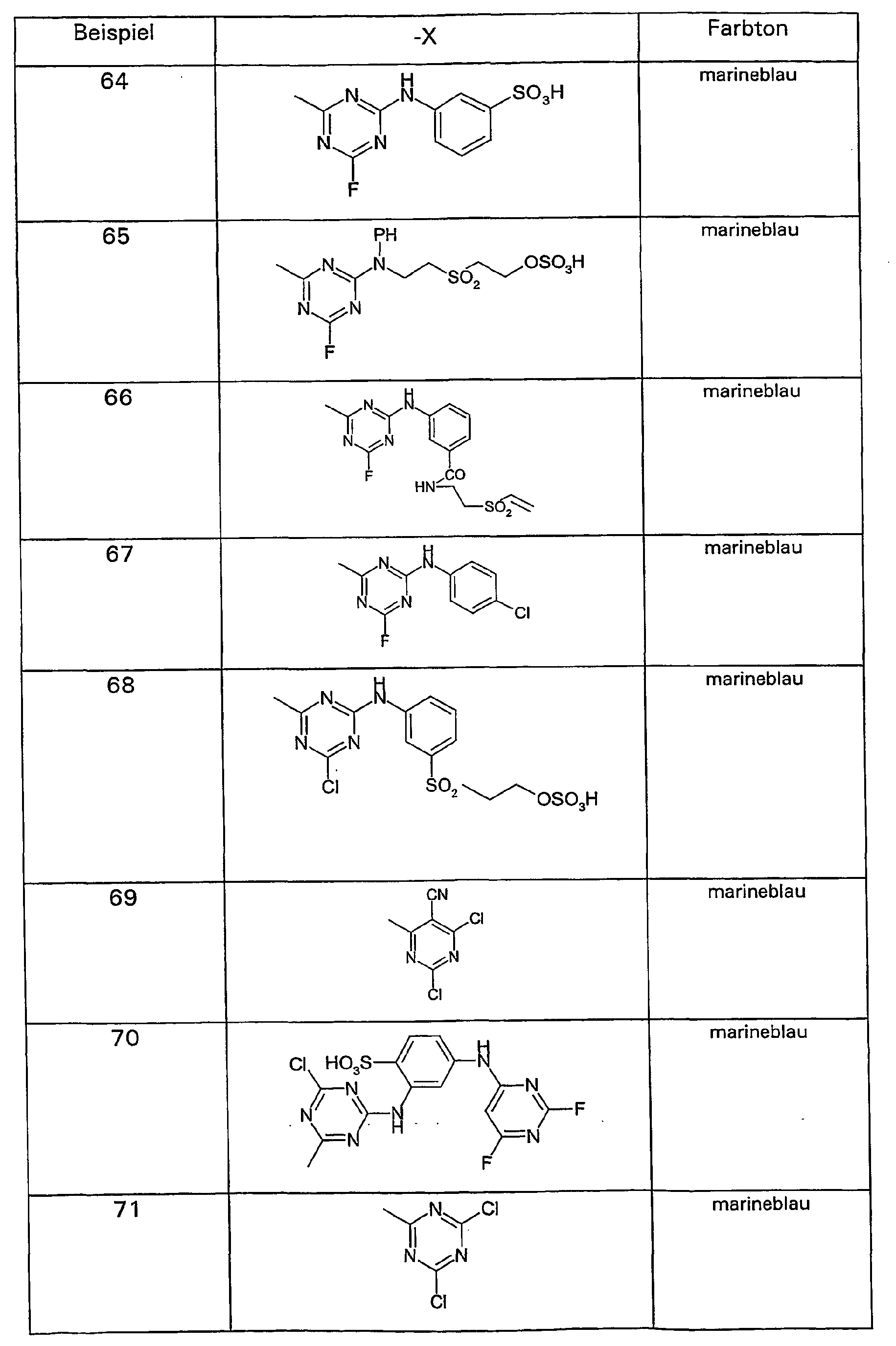

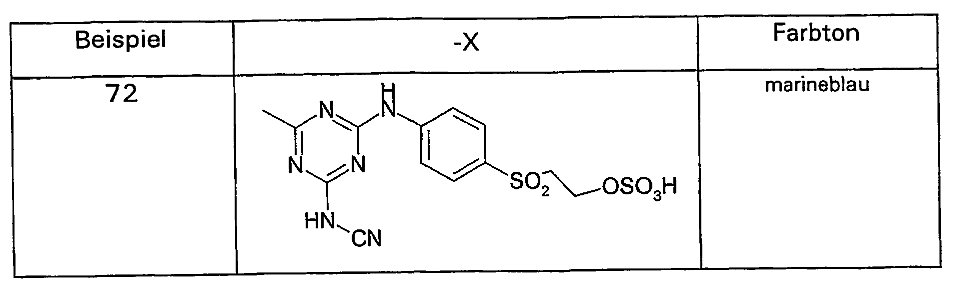

Die folgende Tabelle 4 beschreibt weitere Metallkomplexfarbstoffe der allgemeinen Formel (III), die analog zu den in den Beispielen 43-45 beschriebenen Versuchen hergestellt werden können.

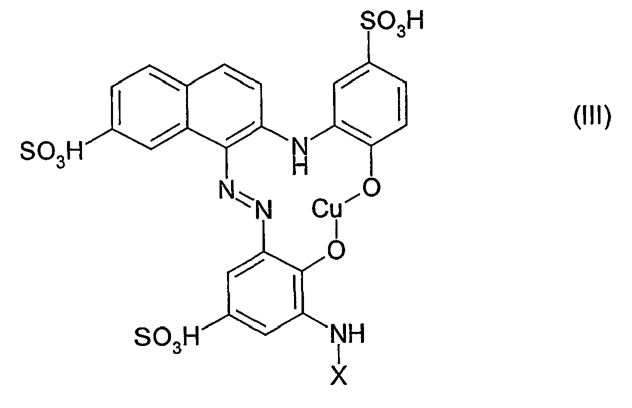

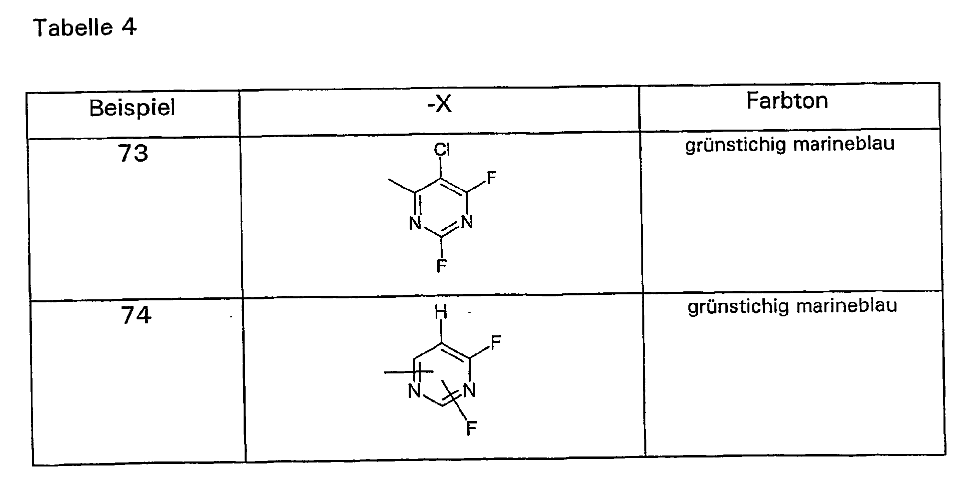

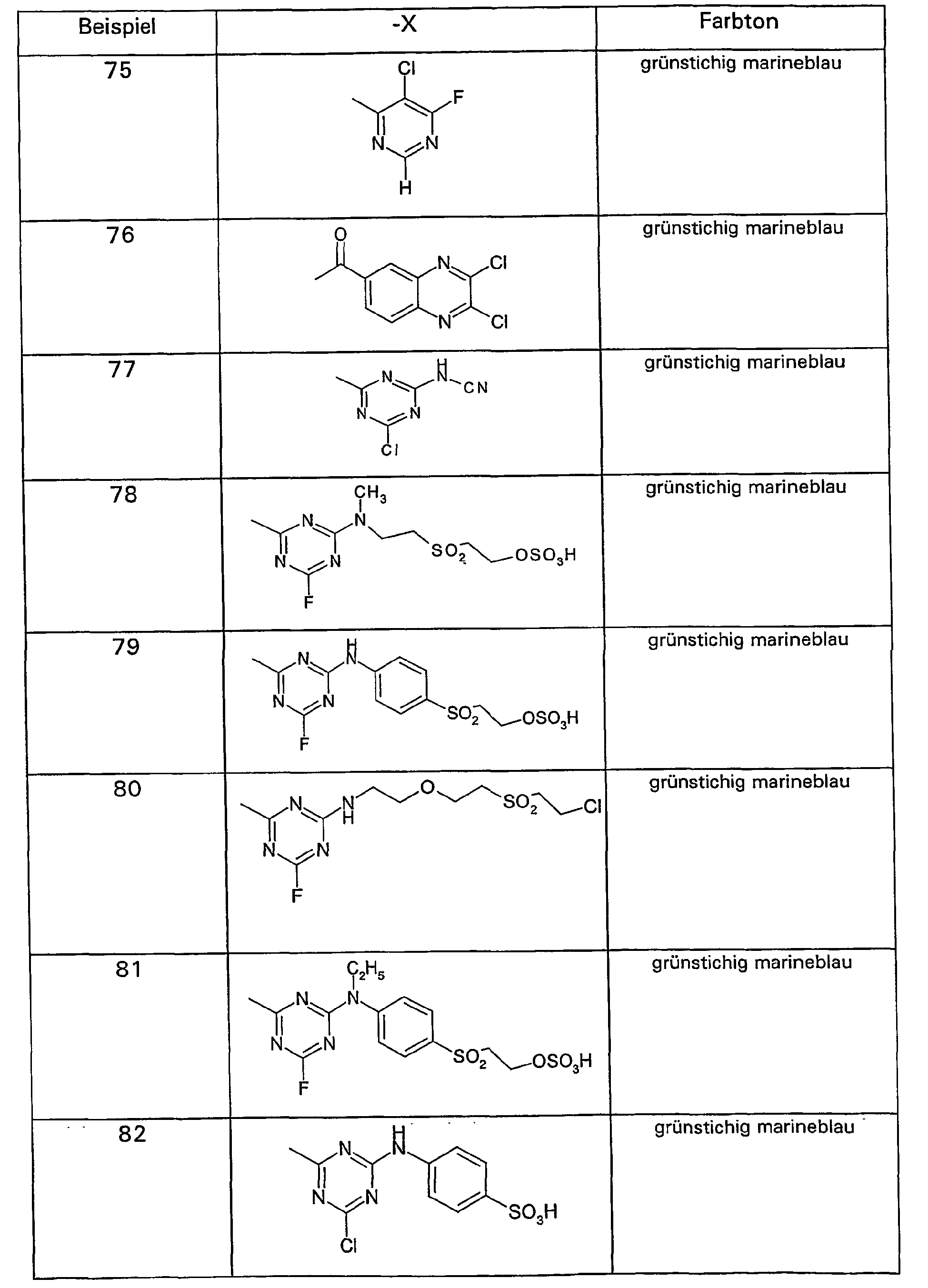

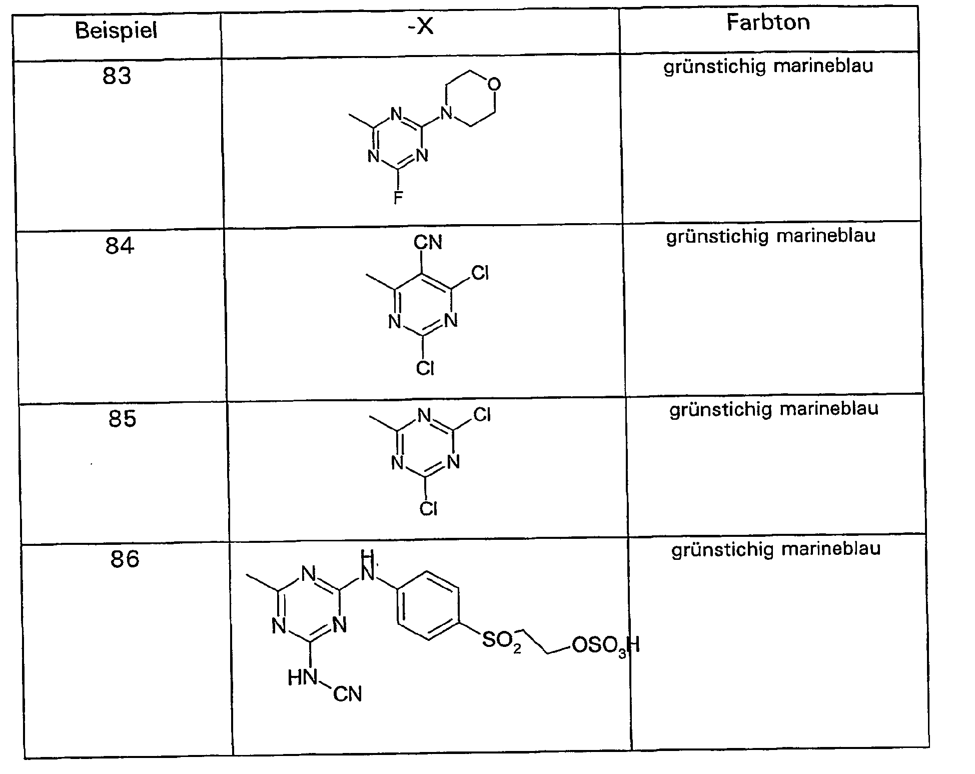

Die folgende Tabelle 5 beschreibt weitere Metallkomplexfarbstoffe der allgemeinen Formel (IV), die analog zu den in den Beispielen 43-45 beschriebenen Versuchen hergestellt werden können.

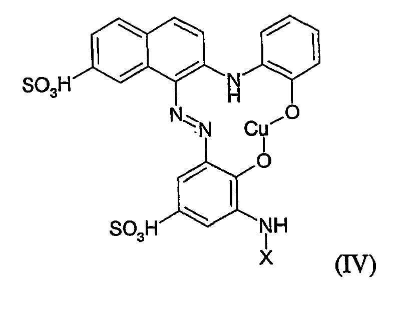

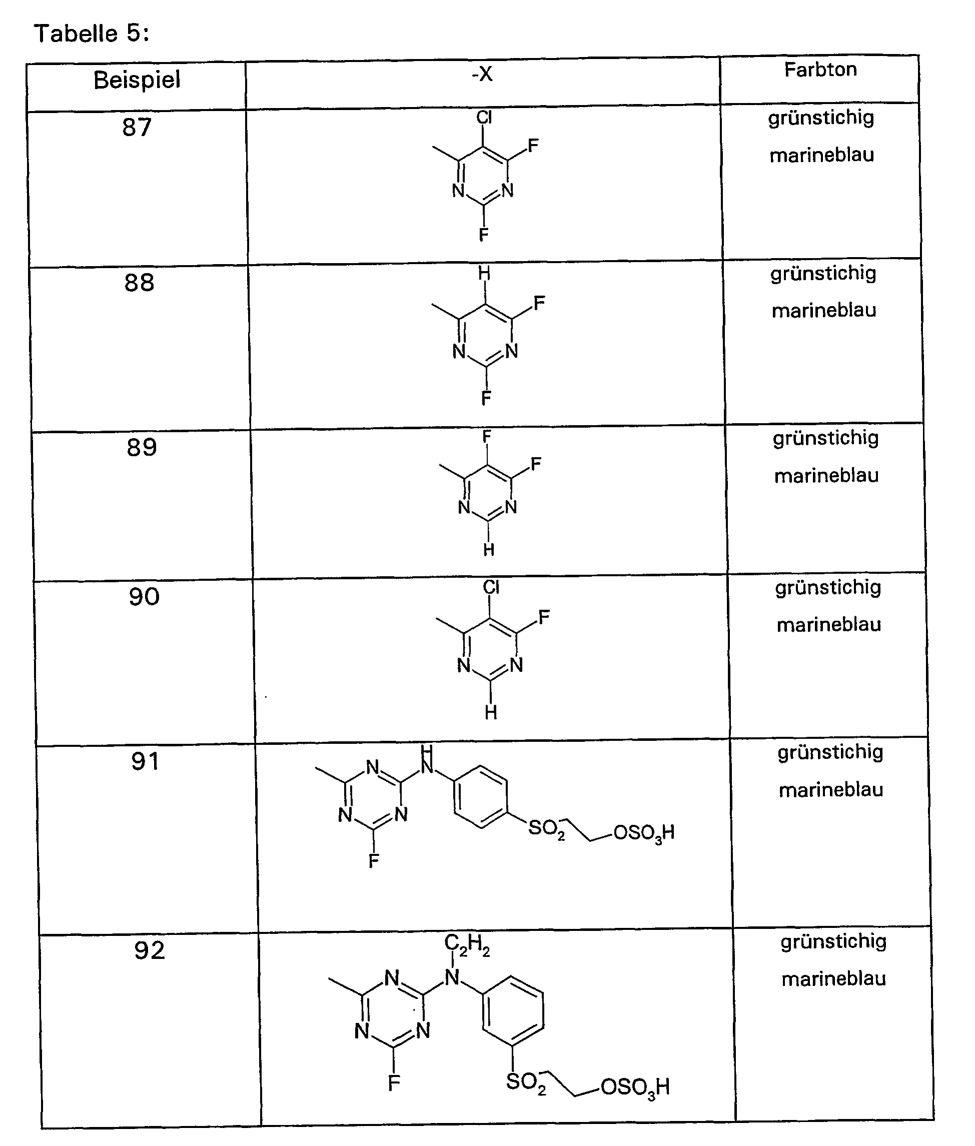

Die folgende Tabelle 6 beschreibt weitere Metallkomplexfarbstoffe der allgemeinen Formel (V), die analog zu den in den Beispielen 43-45 beschriebenen Versuchen hergestellt werden können.

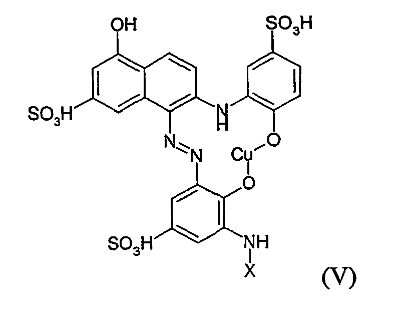

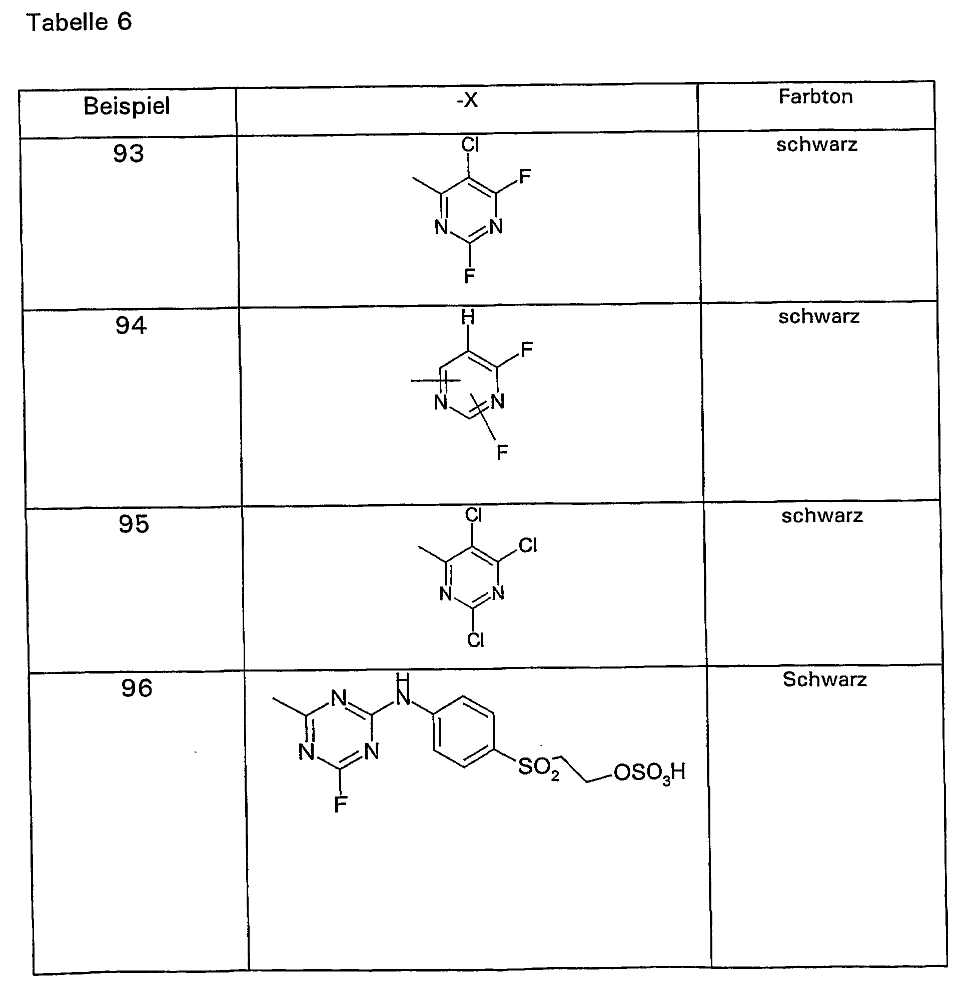

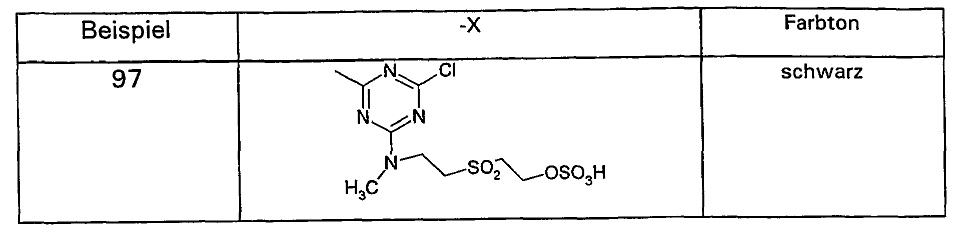

Die folgende Tabelle 7 beschreibt weitere Metallkomplexfarbstoffe der allgemeinen Formel (VI), die analog zu den in den Beispielen 43-45 beschriebenen Versuchen hergestellt werden können.

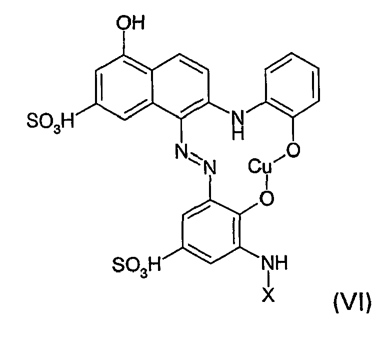

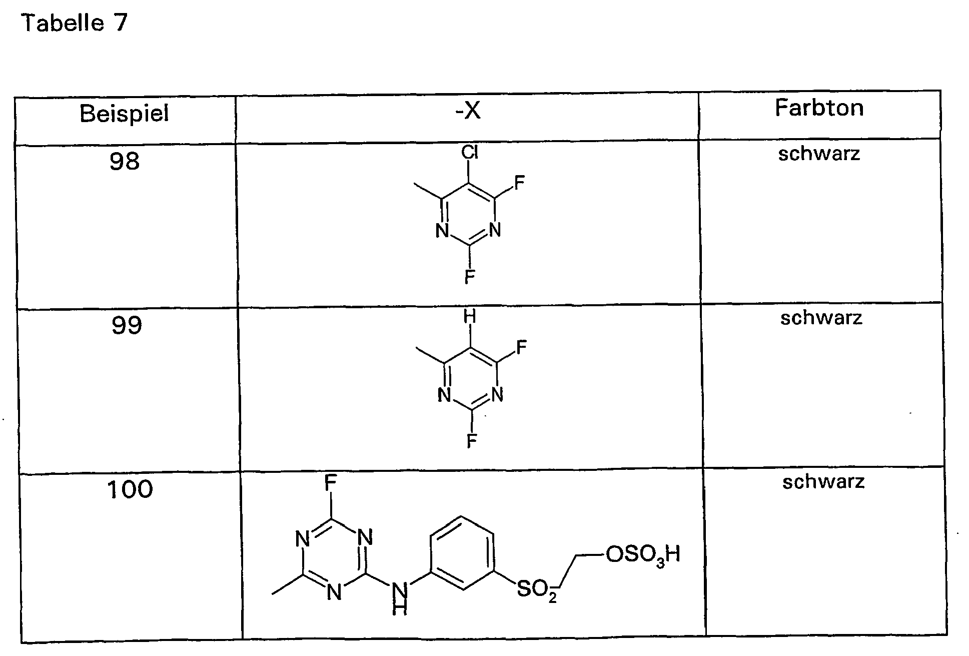

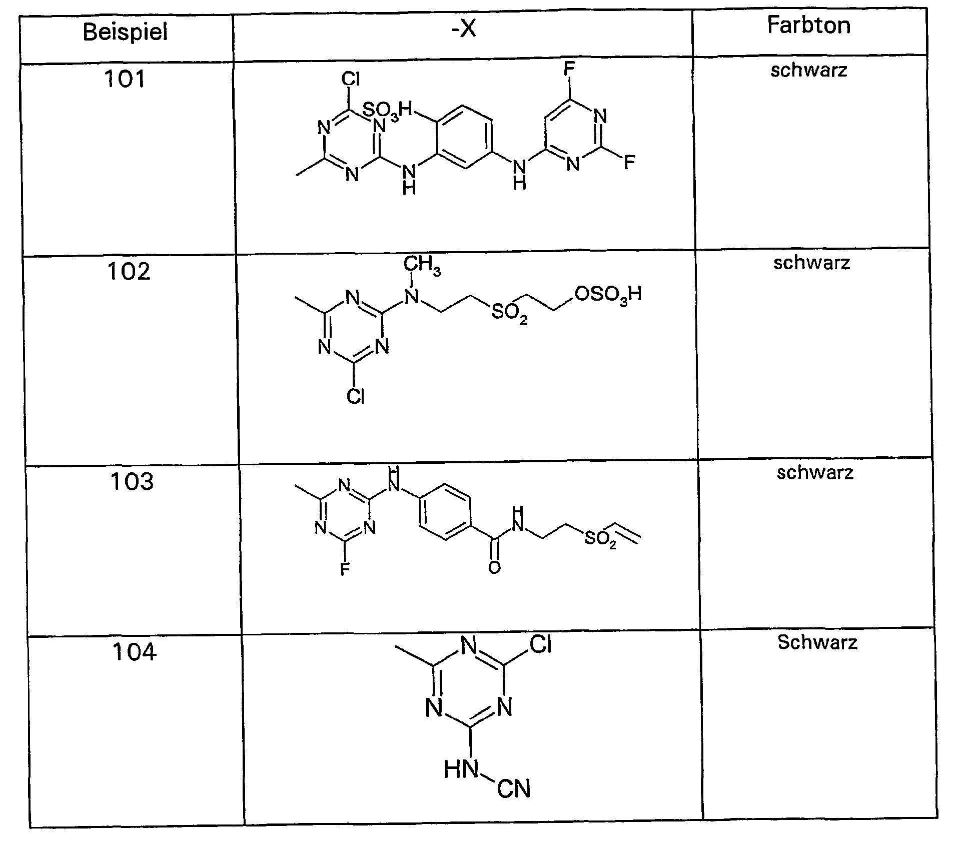

Die folgende Tabelle 8 beschreibt weitere Metallkomplexfarbstoffe der allgemeinen Formel (VII), die analog zu den in den Beispielen 43-45 beschriebenen Versuchen hergestellt werden können.

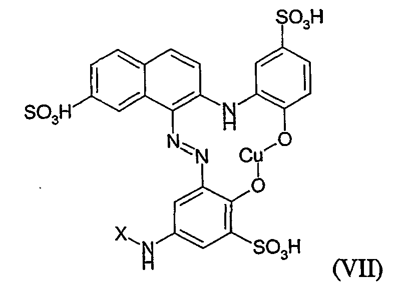

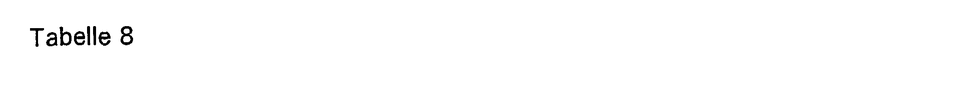

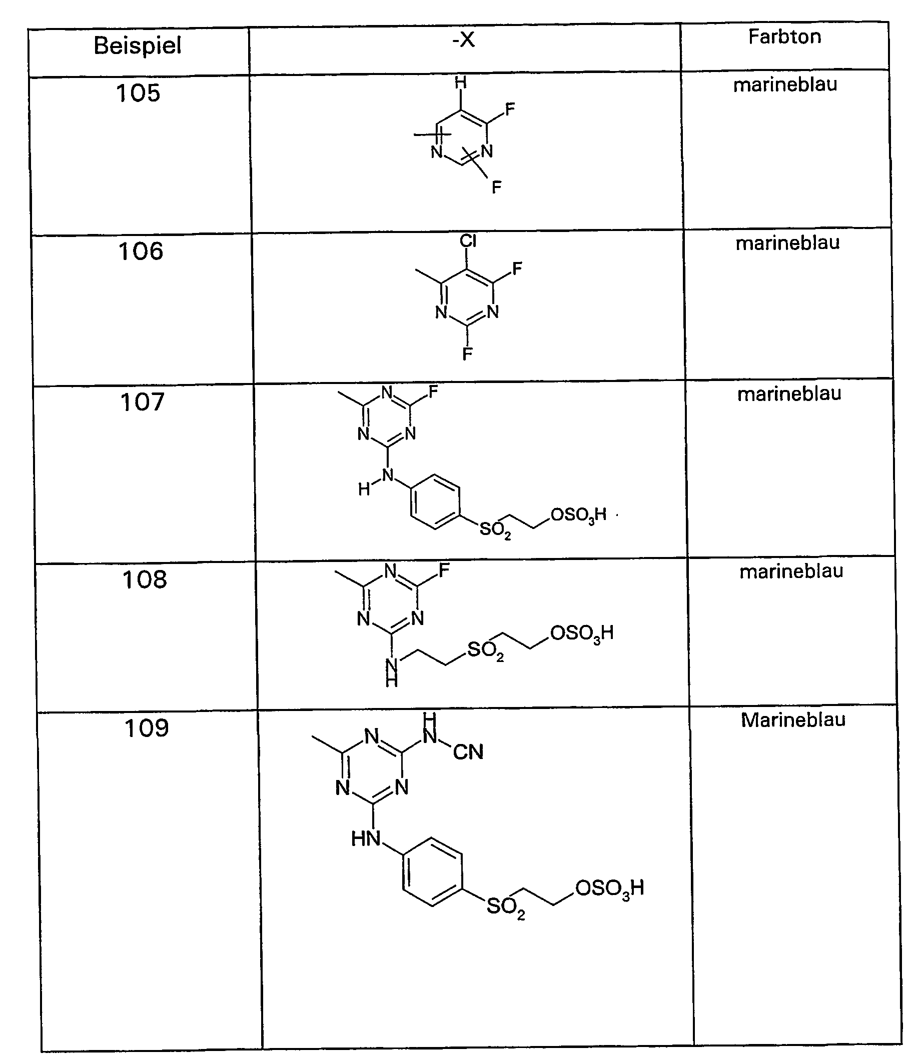

Die folgende Tabelle 9 beschreibt weitere Metallkomplexfarbstoffe der allgemeinen Formel (VIII), die analog zu den in den Beispielen 43-45 beschriebenen Versuchen hergestellt werden können.

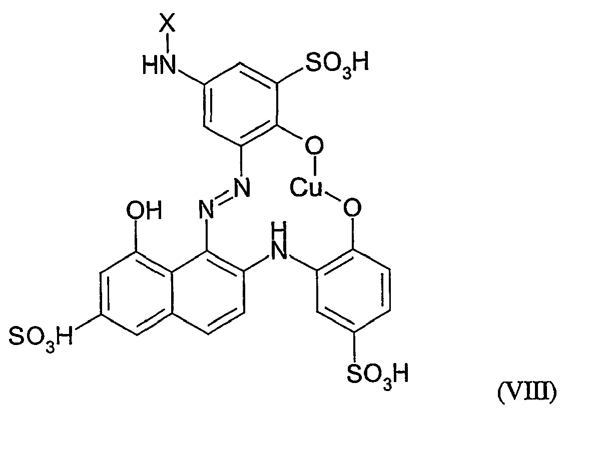

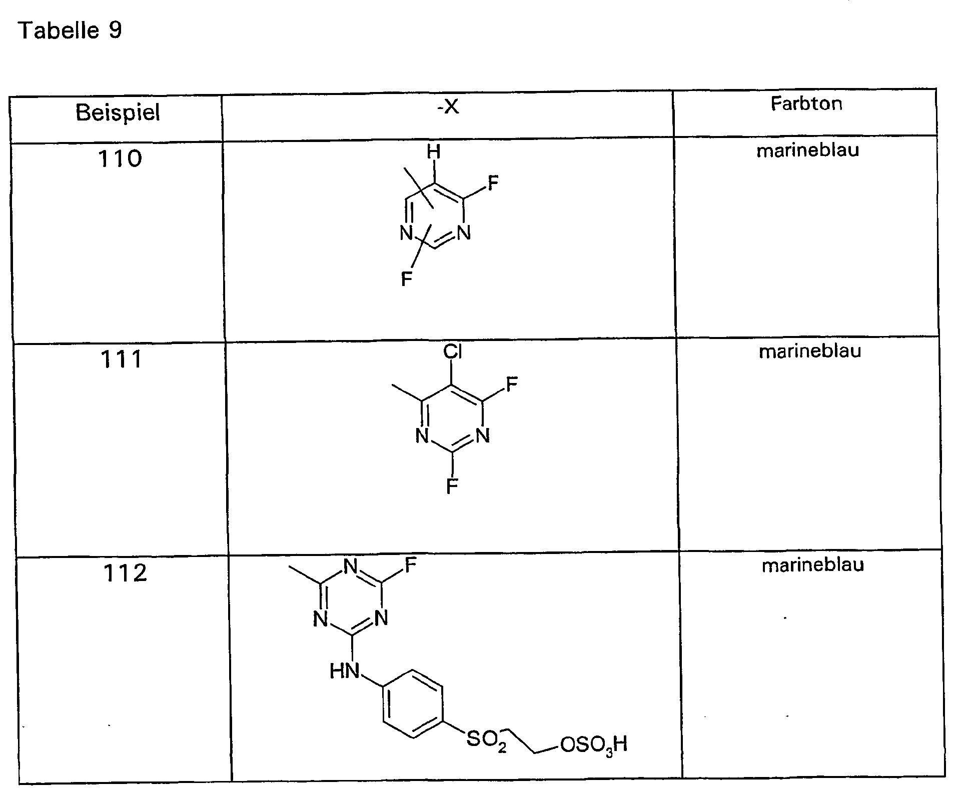

Die folgende Tabelle 10 beschreibt weitere Metallkomplexfarbstoffe der allgemeinen Formel (IX), die analog zu den in den Beispielen 43-45 beschriebenen Versuchen hergestellt werden können.

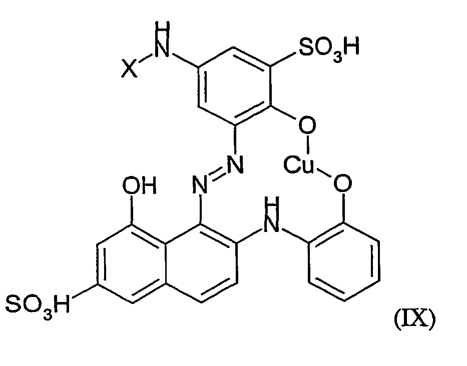

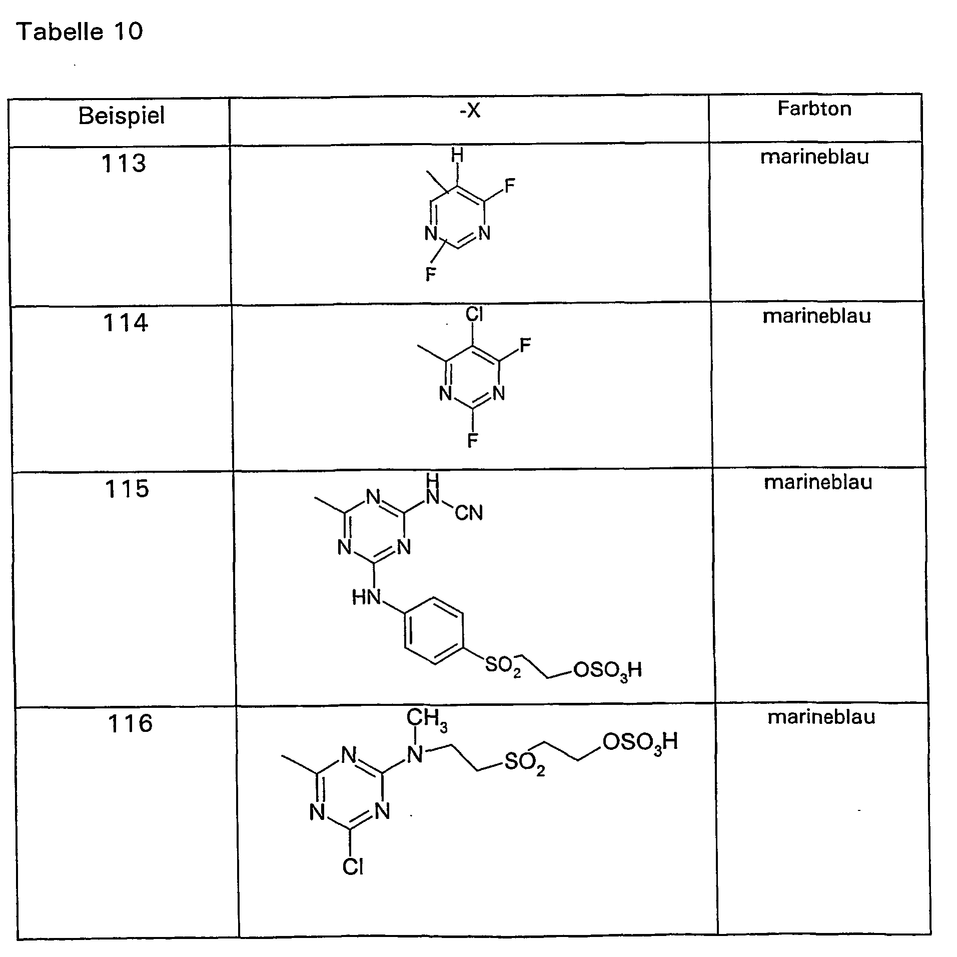

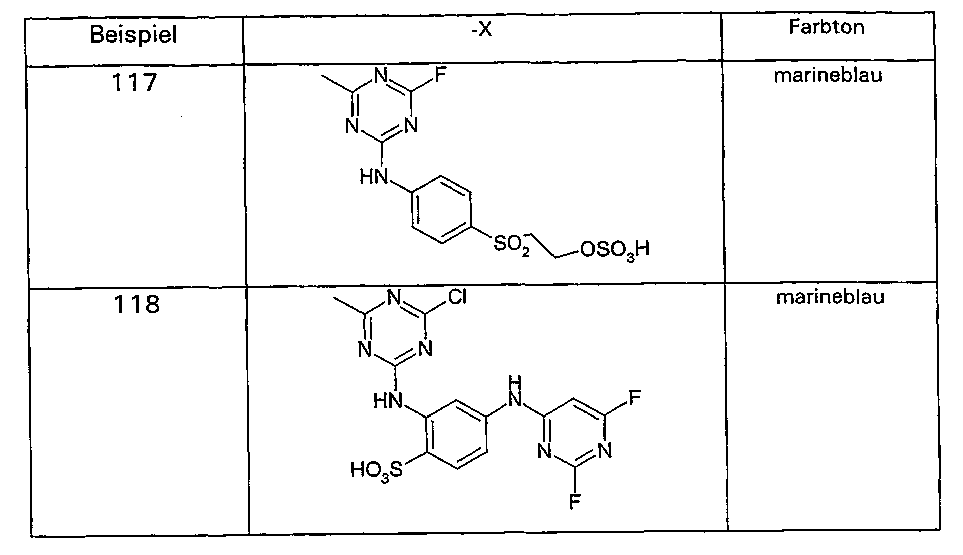

### Beispiel 119

0,1 Mol der in Beispiel 43 beschriebenen Verbindung der Formel (H) werden in 1000g Wasser gelöst. Nach Zugabe von 300g Eis werden bei einem pH-Wert von 6,5 bei 0°C innerhalb von 15 Min. 0,125 Mol 2,4,6-Trifluor-1,3,5-triazin zugegeben. Während der Zugabe hält man mit 20%iger Sodalösung den pH-Wert bei 6,5 - 7,0. Anschließend wird der pH-Wert mit 1 5%iger Salzsäure auf 3,0 gestellt. Bei 0°C wird 10 Min. gerührt. Dann erfolgt die Zugabe von 0,45 Mol 1,3-Diaminopropan.

Mit 20%iger Sodalösung wird der pH-Wert auf 8,0 - 8,5 gestellt und gehalten. Bei 20°C wird 2 Stunden gerührt.

Der erfindungsgemäße Farbstoff der Formel (N) 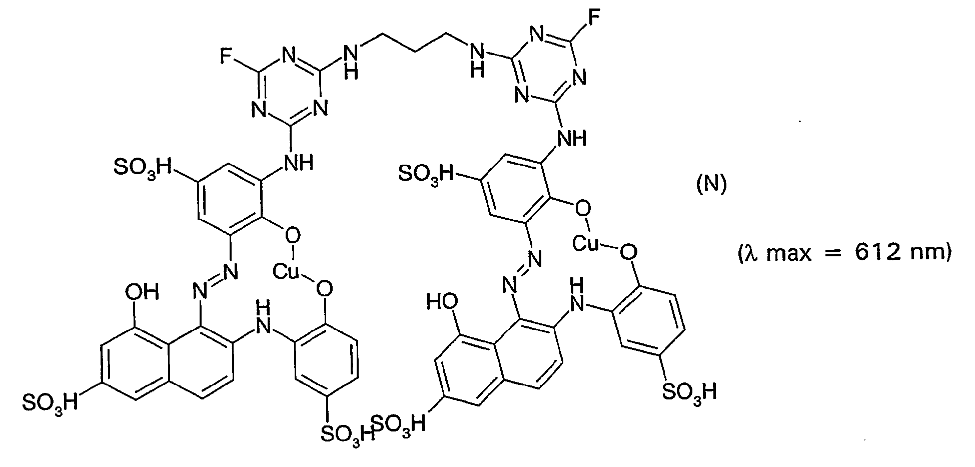 wird durch Aussalzen mit Natriumchlorid isoliert. Der Farbstoff färbt Baumwolle in blauen Tönen mit guten Echtheiten, von denen insbesondere die gute Lichtechtheit hervorzuheben ist.

### Beispiel 120

0,04 Mol der in Beispiel 43 beschriebenen Verbindung der Formel (H) werden in 700g Wasser gelöst. Bei pH = 6,5 - 7,0 und 10 - 15°C wird eine durch Verrühren von 0,041 Mol 2,4,6-Trichlor-1,3,5-triazin, 20g Eis und 0,25g Humectol erhaltene Suspension innerhalb von 15 Minuten zugegeben. Der pH-Wert wird mit 20%iger Sodalösung bei 6,5 - 7,0 gehalten. Die Reaktionsmischung wird 2 Stunden bei 20°C gerührt. Dann erfolgt die Zugabe von 0,02 Mol N-(2-Aminoethyl)-piperazin innerhalb von 15 Min. Mit 20%iger Sodalösung wird der pH-Wert auf 9,0 - 9,5 gestellt und gehalten. Es wird 1 Stunde bei 20 - 25°C nachgerührt.

Der erfindungsgemäße Farbstoff der Formel (O) 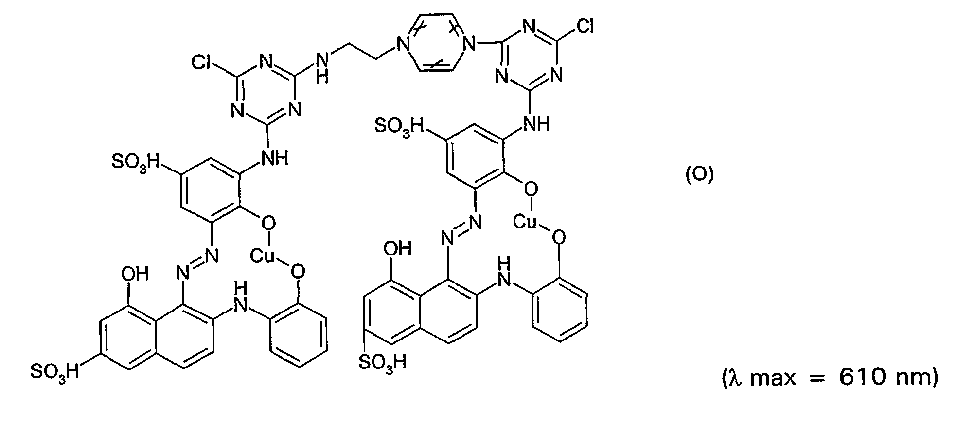 wird durch Aussalzen mit Natriumchlorid isoliert. Der Farbstoff färbt Baumwolle in blaustichig schwarzen Tönen mit guten Echtheiten, von denen insbesondere die gute Lichtechtheit hervorzuheben ist.

Die Beispiele in Tabelle 11 zeigen weitere entsprechend hergestellte Farbstoffe

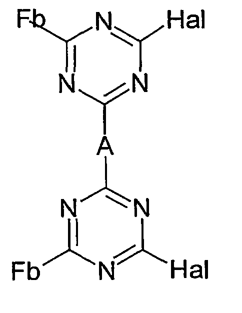

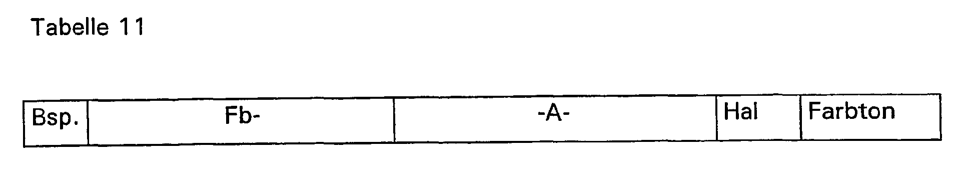

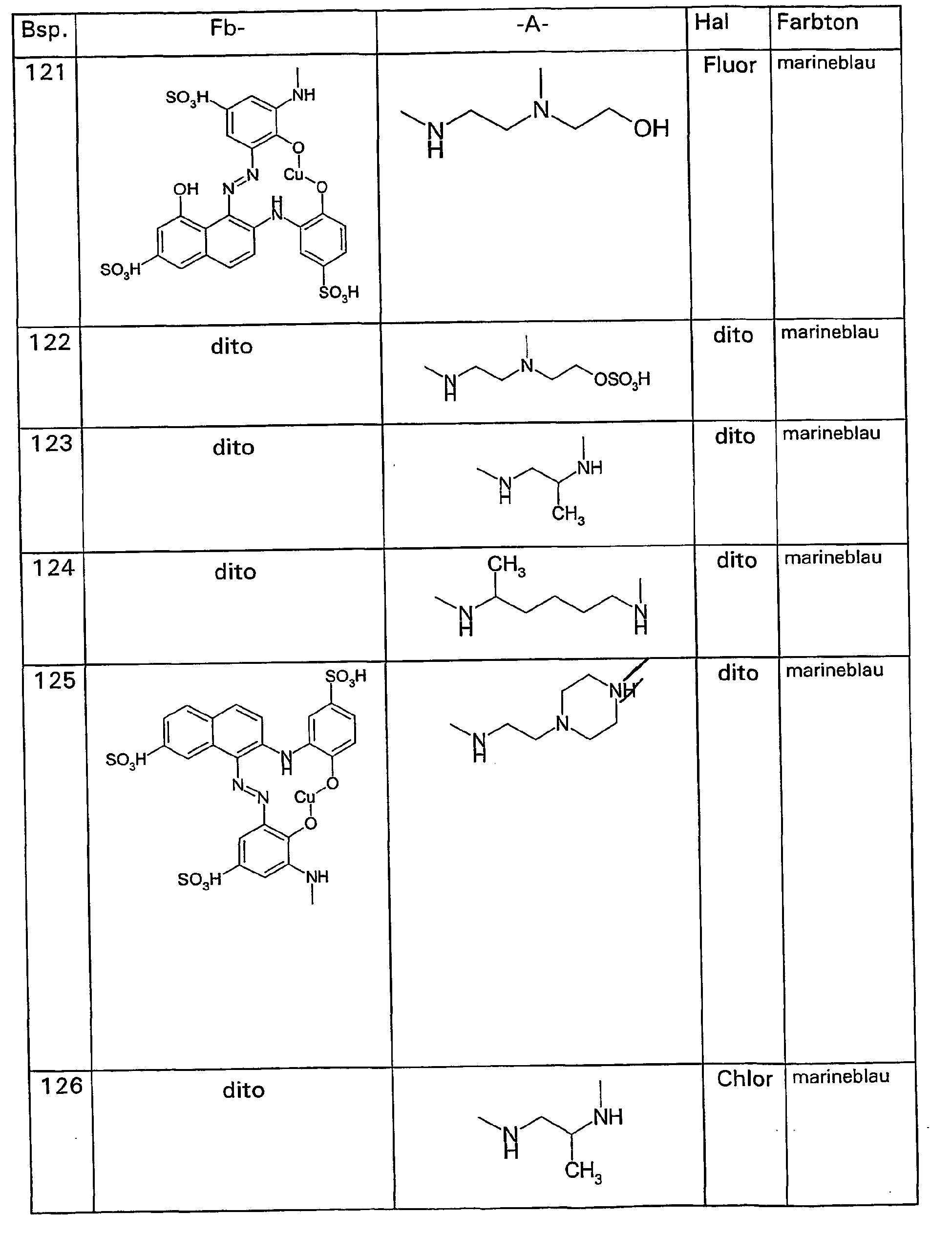

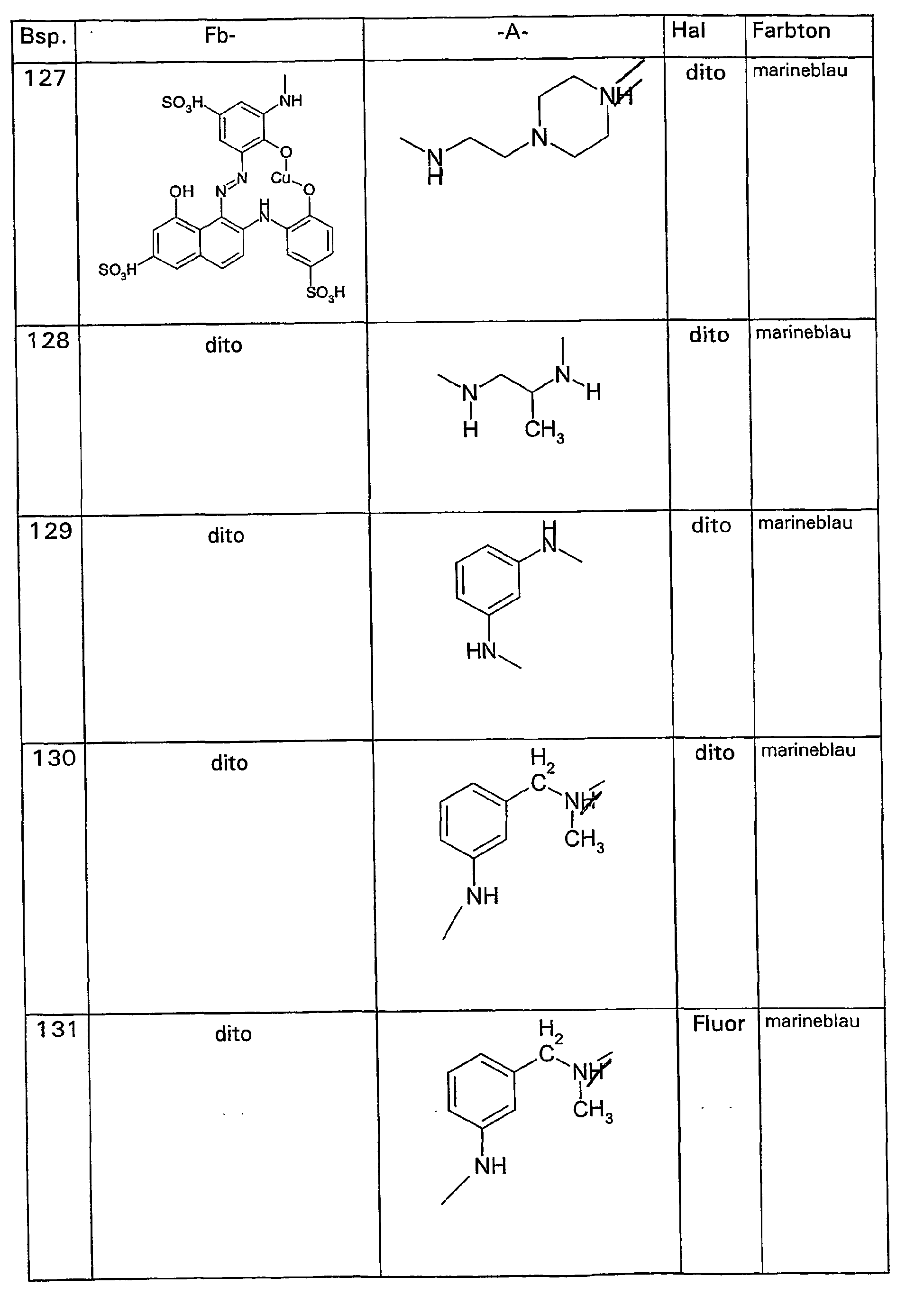

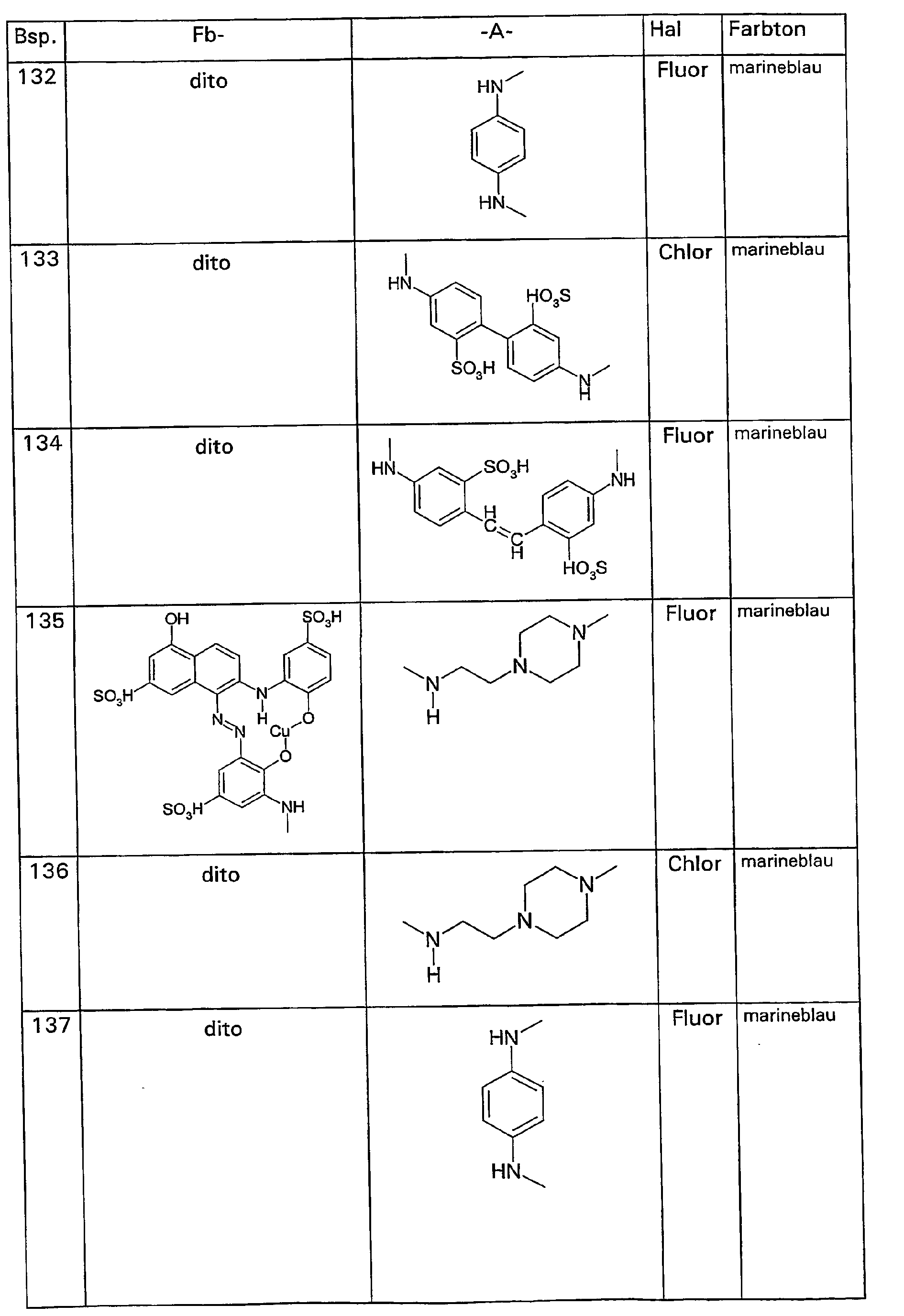

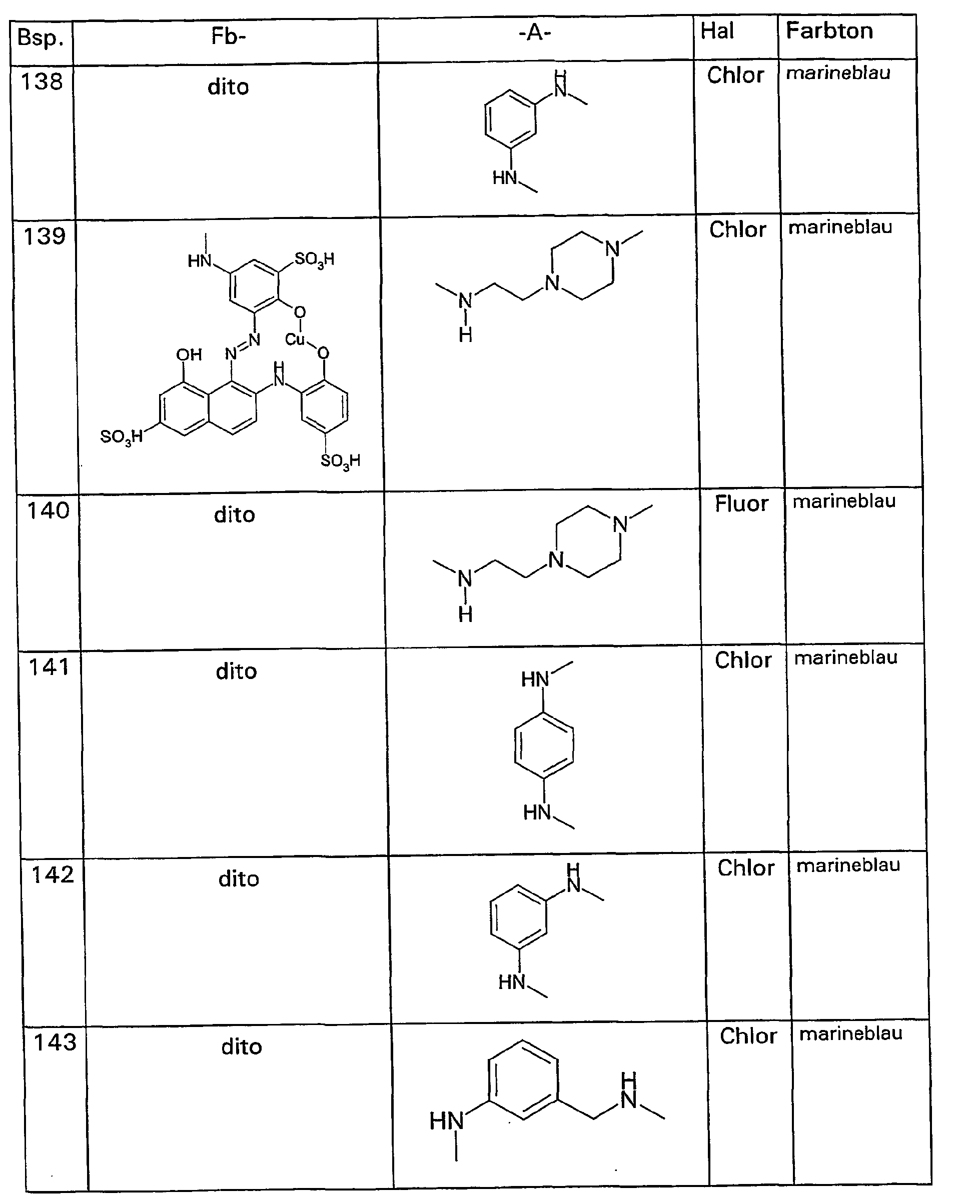

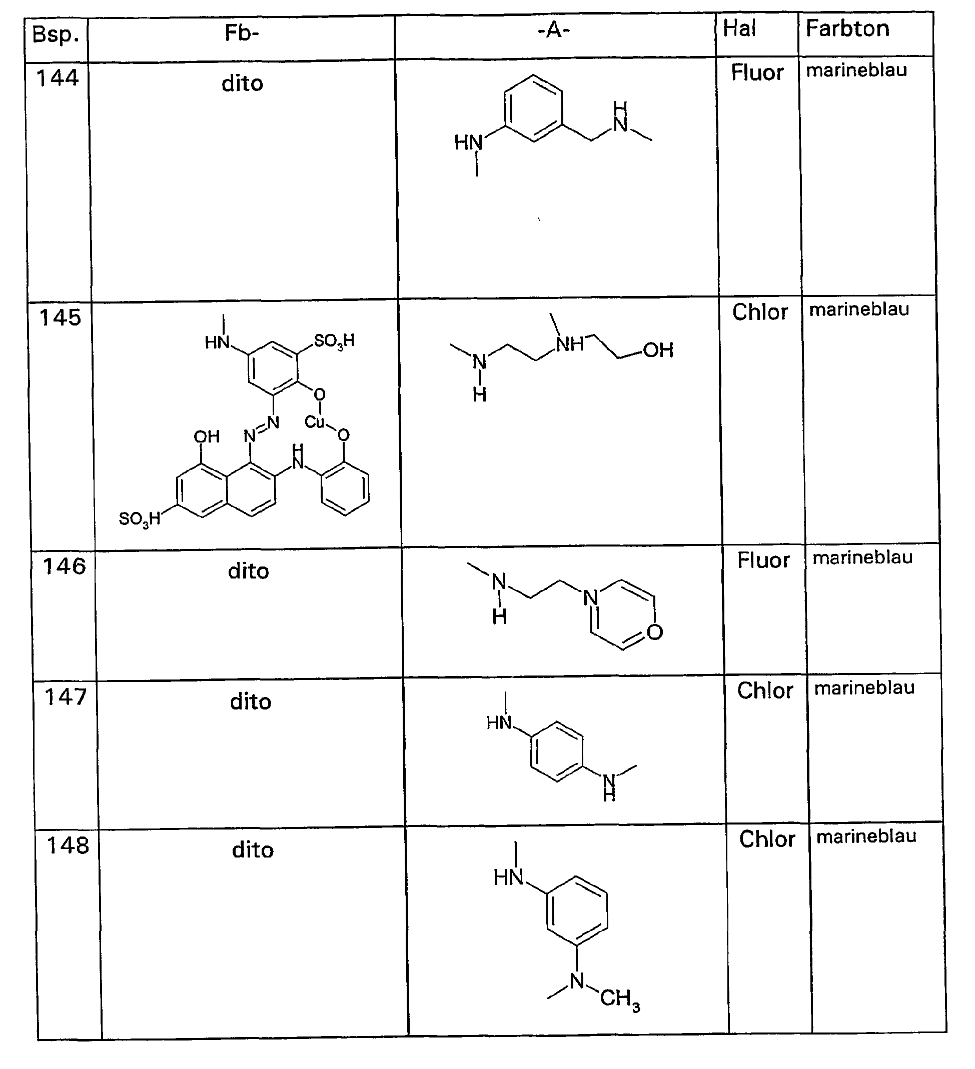

### Beispiel 150

0,05 Mol einer Verbindung der Formel 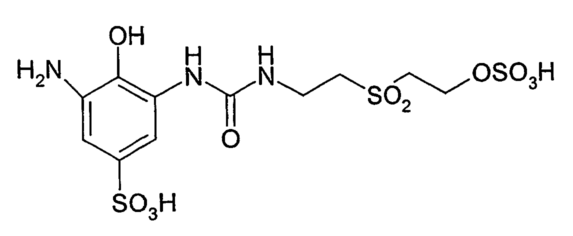 werden mit 12 ml Natriumnitritlösung (345g/1000ml) innerhalb von 1h bei 0 - 5°C und einem pH-Wert unter 1,5 diazotiert. Danach wird überschüssige salpetrige Säure mit Amidosulfonsäure zerstört und die Diazoniumsalzsuspension mit 0,05 Mol 6-(6-Hydroxy-3-sulfo-anilino)-4-hydroxynaphthalin-2-sulfonsäure versetzt.
Die Kupplung wird bei einem pH-Wert von 1,3 - 2,0 und einer Temperatur von 35°C durchgeführt.

Nach beendeter Kupplung wird der pH-Wert bei Raumtemperatur mit 20%iger Sodalösung auf 5,0 gestellt. Nach Zugabe von 14,0g Kupfersulfatpentahydrat wird der pH-Wert erneut auf 5,0 - 5,5 gestellt und gehalten. Nach beendeter Kupferung wird der erfindungsgemäße Farbstoff der Formel (P) 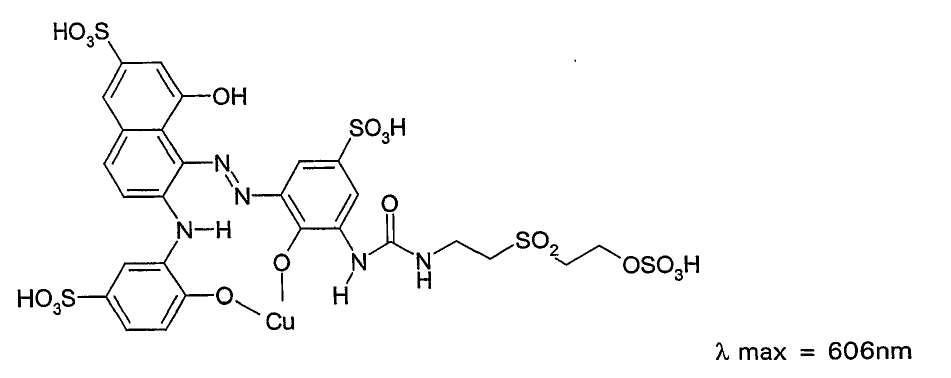 durch Aussalzen mit Kaliumchlorid isoliert. Der Farbstoff färbt Baumwolle in blauen Tönen mit guten Echtheitseigenschaften, von denen insbesondere die gute Lichtechtheit hervorzuheben ist.

Die Beispiele zeigen weitere entsprechend hergestellte Farbstoffe

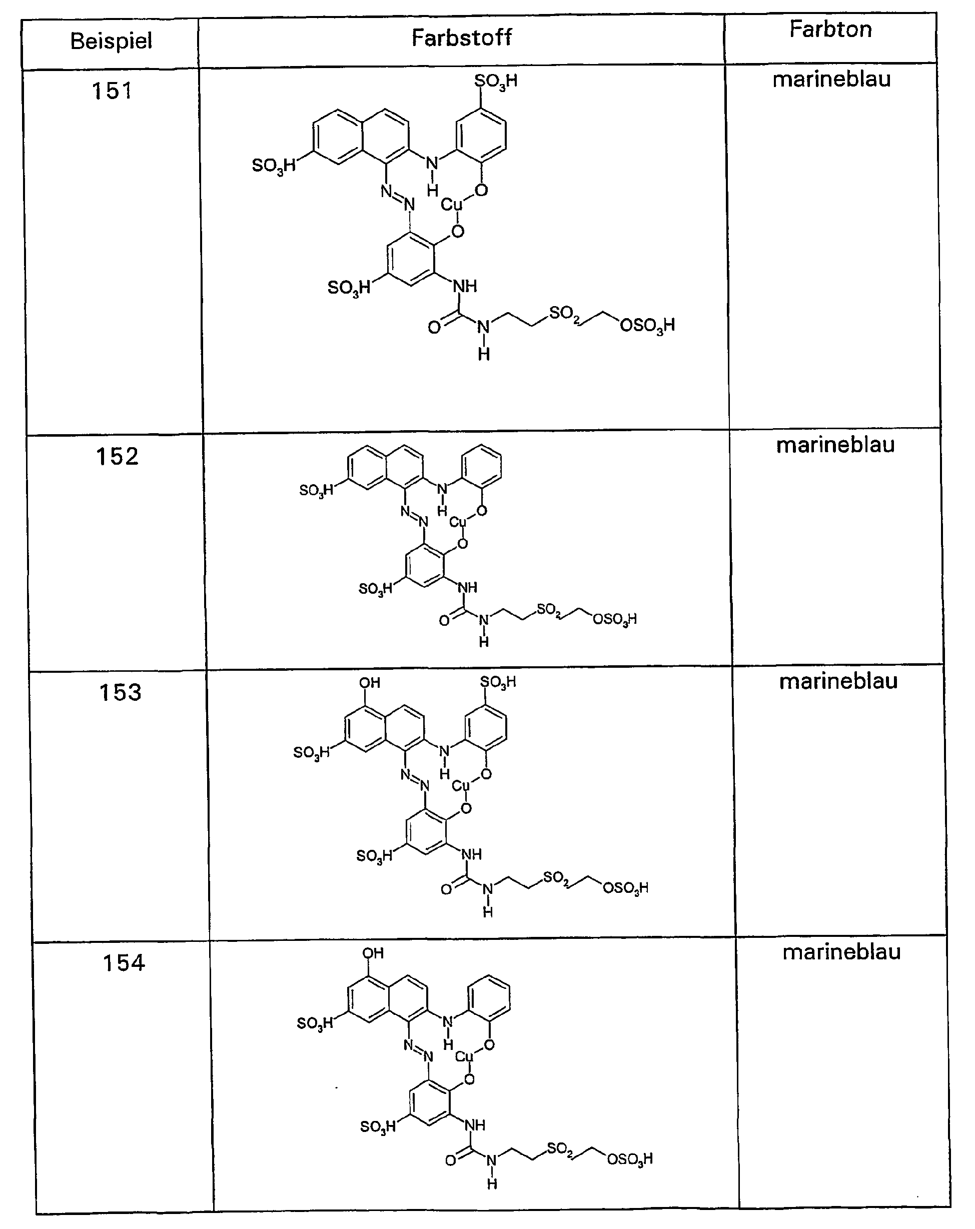

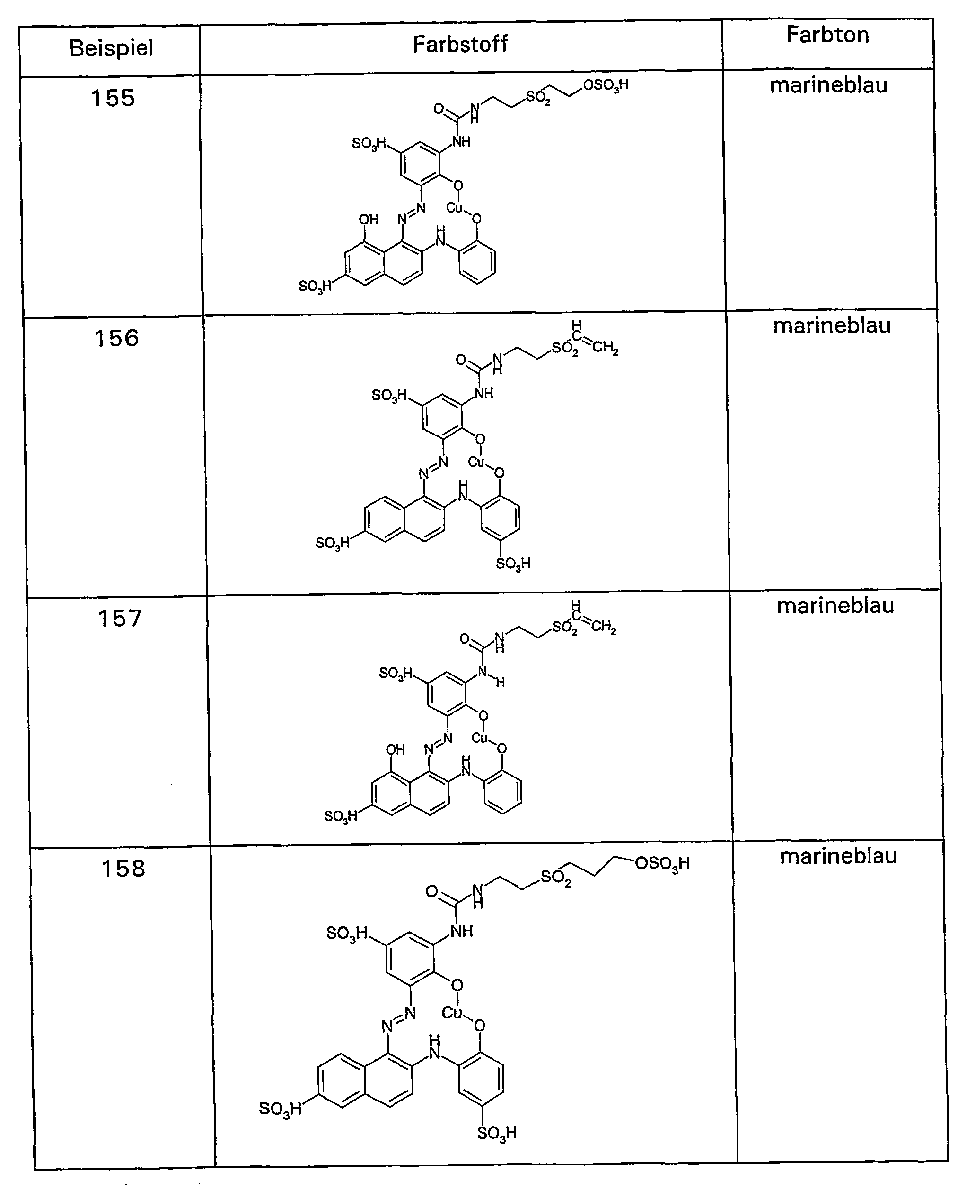

## Patentansprüche

1. Reaktive Kupfer-, Kobalt- oder Chromkomplex-Verbindungen der allgemeinen Formel (1) 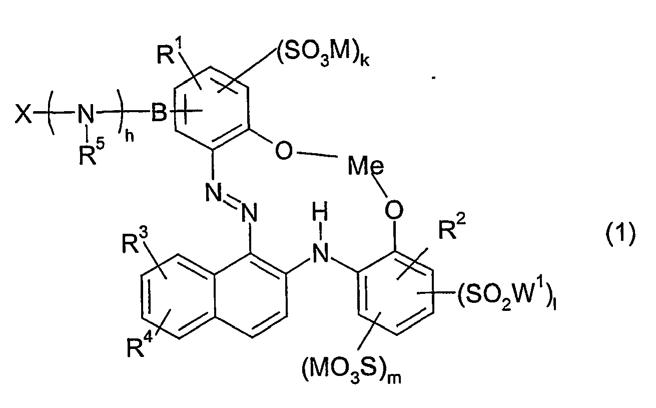 in welcher
B eine direkte Bindung oder ein Brückenglied ist;
X ein faserreaktives Strukturelement ist;
W¹ Vinyl oder eine Gruppe der Formel -CH₂-CH₂-V bedeutet, in welcher V ein durch Einwirkung von Alkali eliminierbarer Rest ist;
R¹, R² unabhängig voneinander Wasserstoff, Chlor, Alkyl mit 1-4 C-Atomen, Alkoxy mit 1-4 C-Atomen, Carboxy oder Sulfamoyl, Hydroxy oder Sulfo bedeutet;
R³ Wasserstoff, Hydroxy, Carboxy oder Sulfo bedeutet;
R⁴ Wasserstoff oder Sulfo bedeutet;
R⁵ Wasserstoff, Alkyl von 1 bis 4-C-Atomen, das durch Halogen, Hydroxy, Cyano, Alkoxy von 1 bis 4 C-Atomen, Alkoxycarbonyl von 2 bis 5 C-Atomen, Carboxy-, Sulfo- oder Sulfato- substituiert sein kann;
h, k, l, m unabhängig voneinander 0 oder 1 bedeuten;
Me Kupfer, Kobalt oder Chrom, bevorzugt Kupfer und Kobalt und besonders bevorzugt Kupfer bedeuten;
M Wasserstoff oder ein Alkalimetall, wie Natrium, Kalium oder Lithium, oder das Moläquivalent eines Erdalkalimetalls ist.

2. Reaktivfarbstoffe nach Anspruch 1, 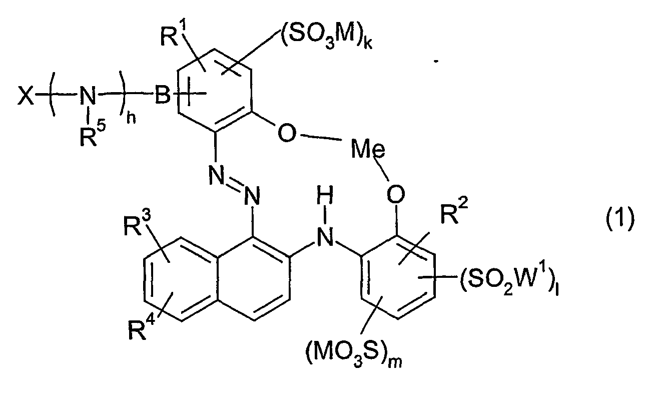 **dadurch gekennzeichnet, dass** B eine direkte kovalente Bindung ist, h für 0 steht und X eine Gruppe der allgemeinen Formel -SO₂CH = CH₂ oder -SO₂CH₂CH₂V ist und V eine Gruppierung, die durch Einwirkung von Alkali eliminiert werden kann und
R¹, R² unabhängig voneinander Wasserstoff, Chlor, Alkyl mit 1-4 C-Atomen, Alkoxy mit 1-4 C-Atomen, Carboxy oder Sulfamoyl, Hydroxy oder Sulfo bedeutet;
R³ Wasserstoff, Hydroxy, Carboxy oder Sulfo bedeutet;
R⁴ Wasserstoff oder Sulfo bedeutet;
k, I, m unabhängig voneinander 0 oder 1 bedeuten;
Me Kupfer, Kobalt oder Chrom, bevorzugt Kupfer und Kobalt und besonders bevorzugt Kupfer bedeuten;
M Wasserstoff oder ein Alkalimetall, wie Natrium, Kalium oder Lithium, oder das Moläquivalent eines Erdalkalimetalls ist.

3. Reaktivfarbstoff nach Anspruch 1 **dadurch gekennzeichnet, dass** X für einen Triazinylrest der nachfolgenden Formel steht, 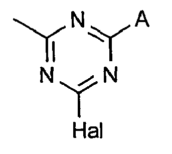 worin
Hal - Cl, F und
A den Rest eines Amins AH bedeuten, das unsubstituiert oder substituiert sein kann durch ein oder zwei C₁- C₆ Alkylgruppen, die unabhängig voneinander durch Hydroxy, C₁-C₂ Alkoxygruppen, Sulfato, Phenyl,Hydroxycarbonyl substituiert sein können, oder durch einen unsubstituierten oder durch ein oder zwei C₁-C₂-Alkyl, C₁-C₂-Alkoxy oder C₁-C₂-Alkoxyalkyl oder C₁-C₂- Alkoxyalkoxy, Amino, Hydroxy, Chlor, Sulfo, Sulfomethyl, Sulfonamid, Carboxy oder Carbonamid, Carbonsäureester, Nitril, Aminocarbonamid oder Oxalamino-substituierten Phenylrest oder einen unsubstituierten oder durch eine, zwei oder drei Sulfo-Gruppen substituierten Naphthylrest oder Taurin, N-Methyltaurin, Methylaminomethansulfonsäure, Pyrrolidin, Piperidin, 1-Methyl-piperazin, Morpholin ist.

4. Reaktivfarbstoff nach Anspruch 1 **dadurch gekennzeichnet, dass** X ein Halogentriazinylrest ist, der mit einem zweiten Halogentriazinylrest oder einem Halogendiazinylrest oder einem oder mehreren Vinyl-sulfonyl- oder Sulfatoethylsulfonylresten direkt oder über ein Brückenglied der Formeln 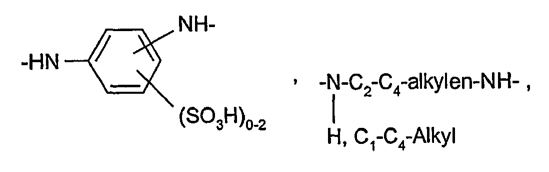 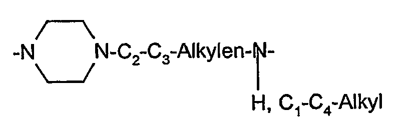 verbunden sein kann,
oder im Falle der Sulfatoethylsulfonyl- bzw. Vinylsulfonylgruppe über ein Brückenglied 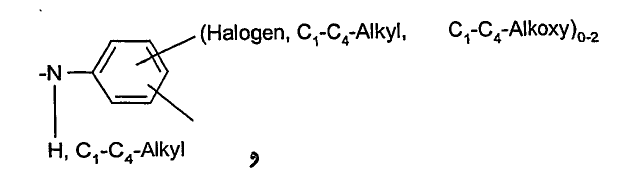 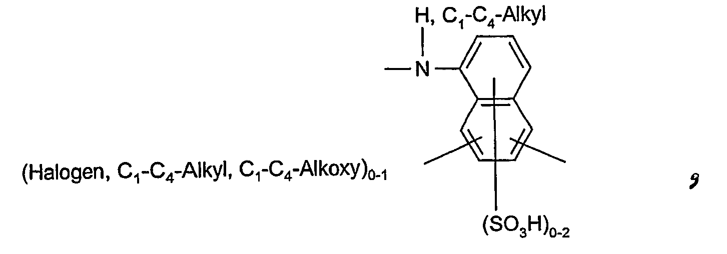
wobei die Alkylreste ihrerseits substituiert sein können durch Sulfo, Carboxy, Hydroxy oder Sulfato-Reste.

5. Reaktivfarbstoff nach Anspruch 1, **dadurch gekennzeichnet, dass** X für 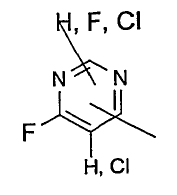 steht.

6. Reaktivfarbstoff nach Anspruch 1, **dadurch gekennzeichnet, dass** X für eine Gruppierung der nachfolgenden Formel 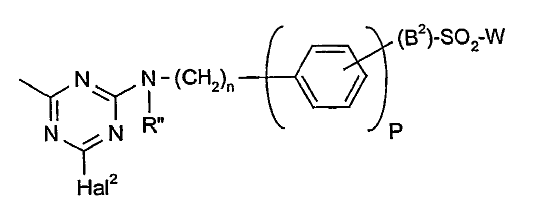 steht, mit
W in der Bedeutung von W';
n gleich 0 bis 3;
p 0 oder 1;
B² Gruppierung der Formel-(CH₂)ₛ-((CH₂)₂O-(CH₂)₂)ₜ;
s 0 bis 6;
t 0 oder1
Hal² Cl, F und
R" Phenyl, Wasserstoff oder Alkyl von 1 bis 6 C-Atomen, bevorzugt Alkyl von 1 bis 4 C-Atomen, wie Ethyl und Methyl, das substituiert sein kann, wie beispielsweise durch Substituenten aus der Gruppe Halogen, Hydroxy, Carboxy, Sulfo und Sulfato, und ist bevorzugt Methyl und Ethyl und insbesondere Wasserstoff oder
R" ist Phenyl und n = 0; p = 0; s = 2 oder 3; t =0 oder
R" ist H und n = 0; p = 1; s = 1, t = 0 wobei der Phenylring zwischen 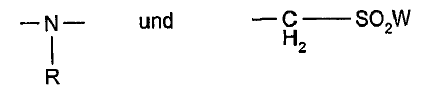 meta substituiert ist, oder
R" ist H; n = 0; p = 0; s = 3; t = 0 oder
R" ist Methyl; n = 0; p = 0; s = 2; t = 0 oder
R" ist H; n = 0; p = 1;s = 0, t = 0 wobei der Phenylenring zwischen 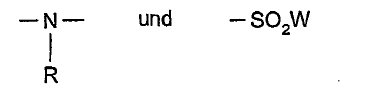 ortho, meta oder para substituiert ist, oder
R" ist H; n = 0; p = 0; s = 0; t =1 oder
R" ist H, n = 2; p = 0; s = 0; t = 0.

7. Reaktivfarbstoffe nach Anspruch 1, **dadurch gekennzeichnet, dass** X ein Rest der Formel (2) 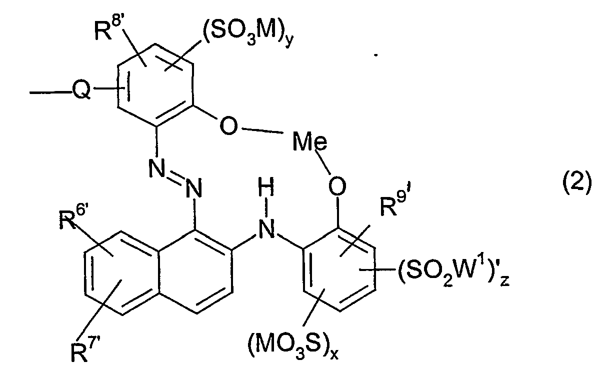 ist, wobei -Q- für 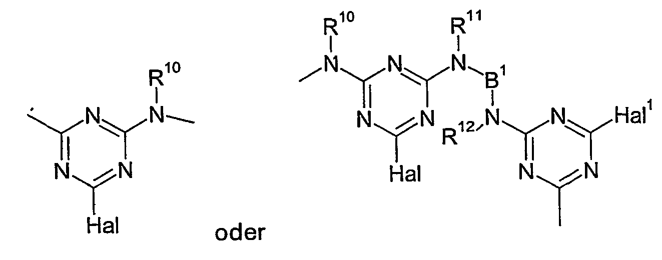 steht, und
R⁶' Wasserstoff, Hydroxy oder Sulfo,
R⁷' Wasserstoff oder Sulfo,
x,y,z 0 oder 1,
h 1 bedeutet und
R⁸', R⁹' unabhängig voneinander Wasserstoff, Chlor, Alkyl mit 1-4 C-Atomen, Alkoxy mit 1-4 C-Atomen, Carboxy oder Sulfamoyl, Sulfo, bedeutet;
R¹⁰, R¹¹, R¹² unabhängig voneinander Wasserstoff, gegebenenfalls substituiertes Alkyl mit 1-4 C-Atomen sind und
B¹ ein Brückenglied ist.

8. Reaktivfarbstoffe nach Anspruch 7 **dadurch gekennzeichnet, dass** B¹ geradkettiges Alkylen von 2 bis 6 C-Atomen und verzweigtes Alkylen von 3 bis 6 C-Atomen, die jeweils durch 1 oder 2 Heterogruppen unterbrochen sind, welche aus den Gruppen der Formeln -O-, -CO-, -SO₂-, -NH-, -N(R^{A})--NH-CO-, -CO-NH-, -SO₂-NH-, oder -NH-SO₂- ausgewählt sind, Phenylen, das durch 1 oder 2 Substituenten aus der Gruppe Sulfo, Carboxy, Methyl, Ethyl, Methoxy und Ethoxy substituiert sein kann, wie beispielsweise Phen-1,3-ylen, Phen-1,4-ylen, 6-Sulfo-phen-1,3-ylen, 6-Sulfo-phen-1,4-ylen, 3,6-Disulfo-phen-1,4-ylen, 6-Methoxy-phen-1,3-ylen oder Benzyliden, das durch 1 oder 2 Substituenten aus der Gruppe Sulfo, Carboxy, Methyl, Ethyl, Methoxy und Ethoxy substituiert sein kann, des weiteren der Rest des 1,1-Di-phen-4,4'-ylens, das in jedem Phenylenrest durch Methyl, Methoxy oder Sulfo substituiert sein kann, oder ist der 1,1'-Stilben-4,4'-ylen-Rest, der in jedem Phenylenrest durch Methyl, Methoxy oder Sulfo substituiert sein kann, oder ist Cycloalkylen mit 5 bis 8 C-Atomen, oder ist eine Gruppe der allgemeinen Formel alk-B³, B³-alk, alk-B³-alk oder phen-G-phen, in welchen alk alkylen von 2 bis 4 C-Atomen bedeutet, oder Alkylen von 2 bis 10-C-Atomen ist, bevorzugt von 4 bis 6 C-Atomen, das durch 1 oder 2, bevorzugt eine, Heterogruppen aus der Gruppe -O- und -NH-unterbrochen ist, B³-Phenylen ist, das durch 1 oder 2 Substituenten aus der Gruppe Sulfo, Carboxy, Methyl, Ethyl, Methoxy, Ethoxy, Chlor und Brom substituiert sein kann, oder Cycloalkylen mit 5 bis 8 C-Atomen, ist oder der bivalente Rest eines gesättigten, zwei N-Atome enthaltenden 5- bis 8-gliedrigen Heterocyclus ist, wie beispielsweise der 1,4-Piperazinylen-Rest, dessen eines bzw. beide N-Atome mit den Resten alk bzw. mit alk und einem C-Atom des Triazinrestes verbunden sind, phen ein Phenylenrest ist, der durch 1 oder 2 Substituenten aus der Gruppe Carboxy, Sulfo, Methyl, Ethyl, Methoxy, Ethoxy, Chlor und Brom substituiert sein kann, und G für eine direkte Bindung steht oder ein Rest der Formel -CH = CH- oder Cycloalkylen mit 5 bis 8 C-Atomen, wie Cyclohexylen, ist, oder
die Gruppe -N(R¹²)-B¹-N(R¹¹)- stellt den bivalenten Rest eines die beiden N-Atome enthaltenden gesättigten 5 bis 8 gliedrigen Heterocyclus dar, dessen N-Atome mit einem C-Atom des Triazinrestes verbunden sind, oder ist N-(2-Aminoethyl)-piperazin; R^{A} ist Wasserstoff, gegebenenfalls substituiertes Alkyl mit 1-4 C-Atomen.

9. Reaktivfarbstoff nach mindestens einem der Ansprüche 1, 3 oder 4, **dadurch gekennzeichnet dass** B für eine Gruppe der allgemeinen Formeln (a) bis (m) steht 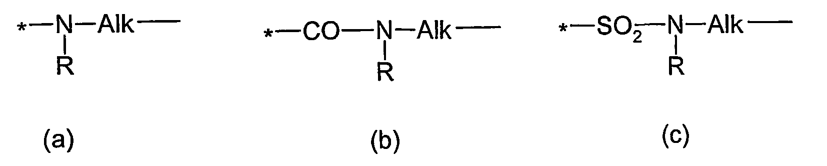 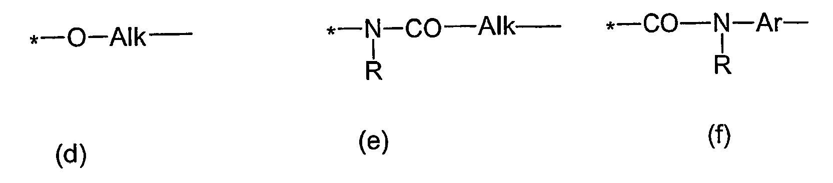 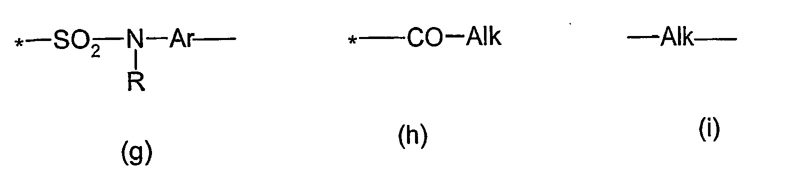 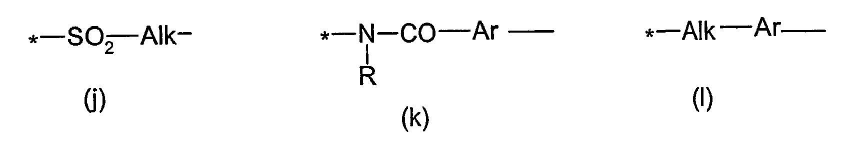 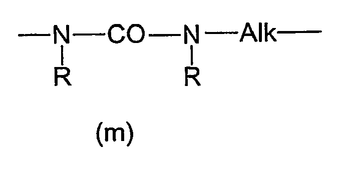
in welchen der Stern die Verknüpfungsstelle mit dem Chromophor markiert;
R Wasserstoff oder Alkyl von 1 bis 6 C-Atomen, bevorzugt Alkyl von 1 bis 4 C-Atomen, wie Ethyl und Methyl, das substituiert sein kann, wie beispielsweise durch Substituenten aus der Gruppe Halogen, Hydroxy, Carboxy, Sulfo und Sulfato, und ist bevorzugt Methyl und Ethyl und insbesondere Wasserstoff;
Alk Alkylen von 1 bis 6 C-Atomen ist oder Alkylen von 2 bis 8 ist, das durch 1 oder 2 Heterogruppen, wie NH, N, O oder S, oder durch 1 oder 2 Gruppierungen, die 1,2 oder 3 Heterogruppen enthalten, unterbrochen ist;
Ar Phenylen oder Naphthylen oder der Rest eines Diphenyls oder Stilbens ist, wobei diese Reste Ar substituiert sein können, wie beispielsweise durch Substituenten aus der Gruppe Fluor, Chlor, Brom, Alkyl von 1 bis 4 C-Atomen, Alkoxy von 1 bis 4 C-Atomen, Carboxy und Sulfo.

10. Reaktivfarbstoff nach mindestens einem der Ansprüche 1 bis 8, **dadurch gekennzeichnet, dass** Me für Kupfer steht.

11. Verfahren zur Herstellung von Reaktivfarbstoffen gemäß den Ansprüchen 1, 3 bis 10, **dadurch gekennzeichnet, dass** man Verbindungen der allgemeinen Formel (3a) 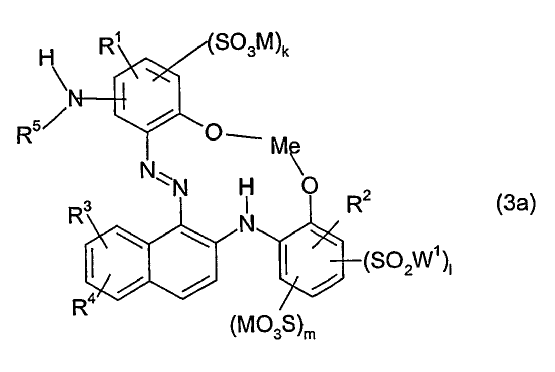 mit Verbindungen der allgemeinen Formel X-Hal umsetzt,
wobei
Hal Fluor oder Chlor ist;
X ein faserreaktives Strukturelement ist;
W¹ Vinyl oder eine Gruppe der Formel -CH₂-CH₂-V ist bedeutet, in welcher V ein durch Einwirkung von Alkali eliminierbarer Rest ist;
R¹, R² unabhängig voneinander Wasserstoff, Chlor, Alkyl mit 1-4 C- Atomen, Alkoxy mit 1-4 C-Atomen, Carboxy oder Sulfamoyl, Hydroxy oder Sulfo bedeutet;
R³ Wasserstoff, Hydroxy, Carboxy oder Sulfo bedeutet;
R⁴ Wasserstoff oder Sulfo bedeutet;
R⁵ Wasserstoff, Alkyl von 1 bis 4-C-Atomen, das durch Halogen, Hydroxy, Cyano, Alkoxy von 1 bis 4 C-Atomen, Alkoxycarbonyl von 2 bis 5 C-Atomen, Carboxy-, Sulfo- oder Sulfato- substituiert sein kann;
k, l, m 0 oder 1 bedeuten.

12. Verfahren zur Herstellung von Reaktivfarbstoffen gemäß Anspruch 2, **dadurch gekennzeichnet, daß** man Aminoverbindungen der allgemeinen Formel (1-2) 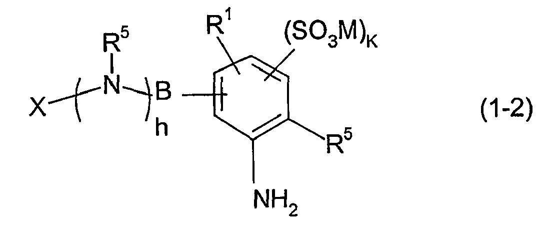
in welcher
R⁵ Wasserstoff, Methoxy oder Hydroxy bedeutet und M, R⁵, h, B, X, R¹,k die in Anspruch 2 angegebene Bedeutung haben, diazotiert und mit einer Verbindung der Formel (1-3) 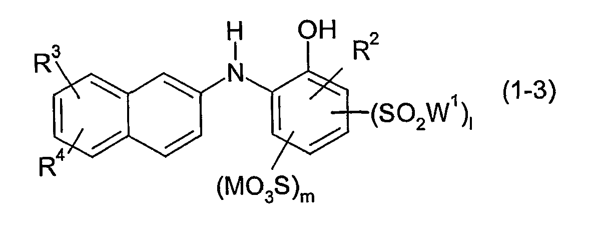 umsetzt, wobei eine Verbindung der allgemeinen Formel (1-6) 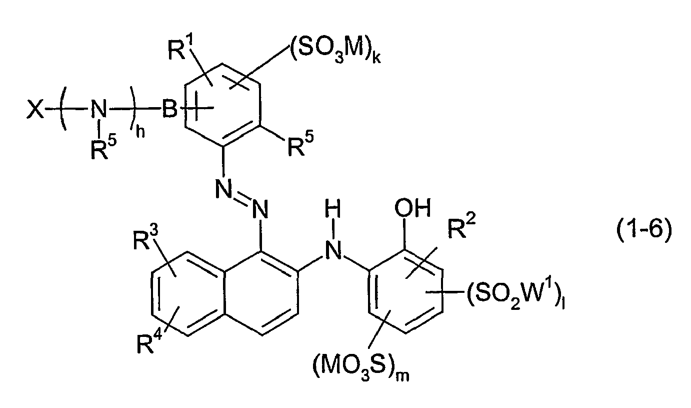
in welcher M, R¹, R², R³, R⁴, R⁵, B, X, h, l, m und k die oben angegebene Bedeutung haben, erhalten wird und diese anschließend mit einem Kupfer-, Kobalt- oder Chrom abgebenden Mittel behandelt wird.

13. Verfahren zur Herstellung von Reaktivfarbstoffen gemäß Anspruch 7, **dadurch gekennzeichnet, daß** man Aminoverbindungen der allgemeinen Formel (3a) und (3b), sowie (4) 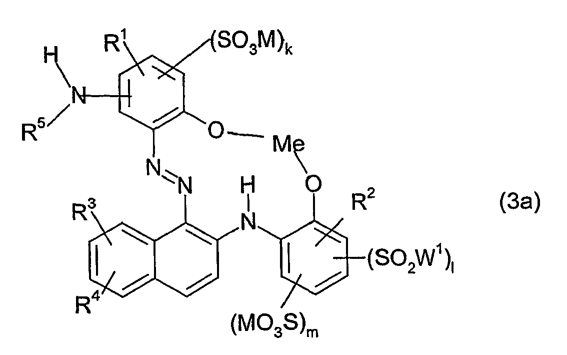 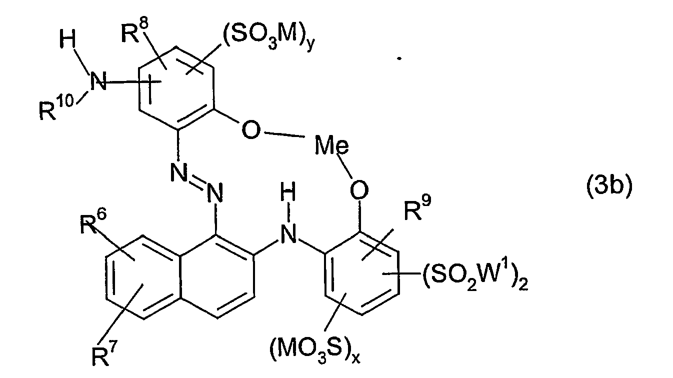
in welchen
Me, R¹ bis R¹⁰ I, m, k, x, y und z die oben angegebene Bedeutung haben 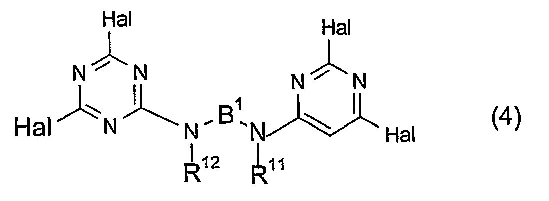
in welcher R¹¹, R¹², B¹ und Hal die obengenannte Bedeutung haben, miteinander umsetzt oder, dass man zuerst eine Verbindung der allgemeinen Formel (3a) mit einer Verbindung der allgemeinen Formel (5) 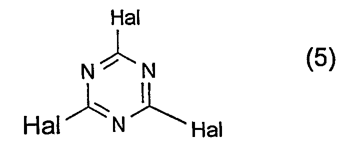
und eine Verbindung der allgemeinen Formel (3b) mit einer Verbindung der allgemeinen Formel (5) umsetzt. Die so erhaltenen Verbindungen werden anschließend mit der stöchiometrischen Menge an Verbindung (6) 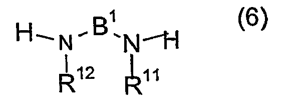
in welcher R¹¹, R¹², B¹ die oben angegebene Bedeutung haben, miteinander umgesetzt.

14. Verbindung der Formel (1-6) 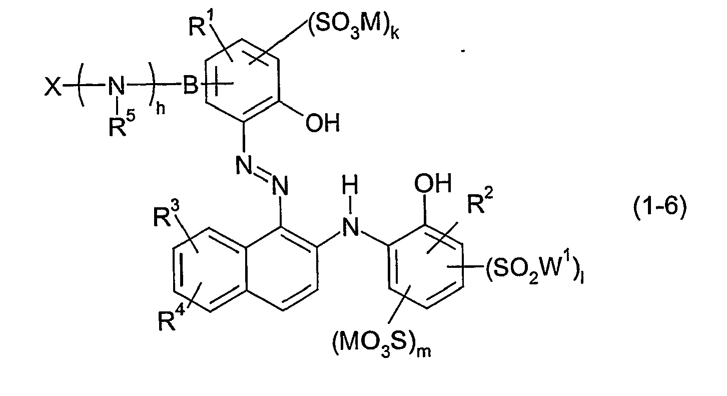
in welcher M, R¹, R², R³, R⁴, R⁵, W¹,B, X, h, l, m und k die in Anspruch 2 angegebene Bedeutung haben.

15. Verbindung der Formel (3) 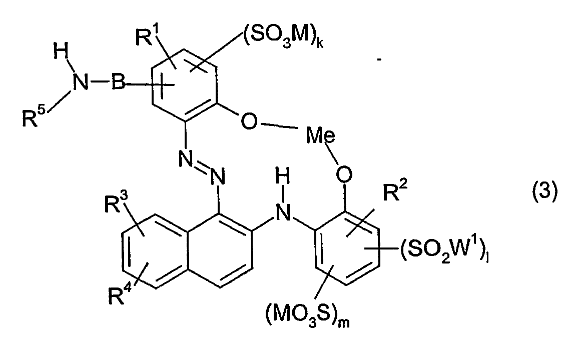
in welcher R¹ bis R⁵, Me und B, k, l , m, W¹, M die obengenannte Bedeutung haben.

16. Verfahren zur Herstellung von Verbindungen der allgemeinen Formel (3) ausgehend von Aminoverbindungen der allgemeinen Formel (8a) oder (8b) 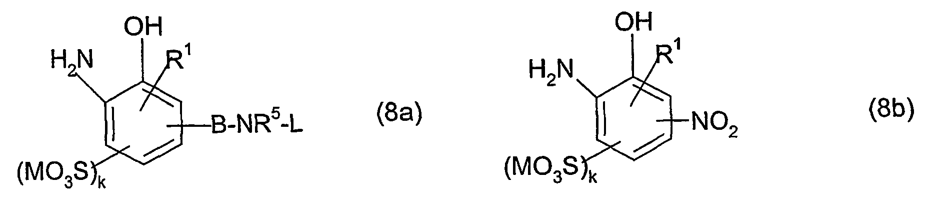
in welcher L für eine hydrolysierbare Schutzgruppe steht und M, B, R¹ und R⁵, sowie k die oben angegebene Bedeutung haben, durch Diazotierung und Kupplung auf eine Verbindung der Formel (1-3) 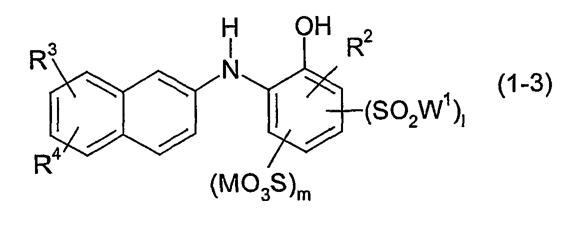
worin R², R³, R⁴, W¹ I und m die oben angegebene Bedeutung haben, und anschließender Umsetzung mit kupfer-, kobalt- oder chromabgebenden Mitteln und anschließender Hydrolyse der mit einer Schutzgruppe versehenen Aminogruppe, beziehungsweise Reduktion der Nitrogruppe.

17. Verwendung eines erfindungsgemäßen Farbstoffes gemäß einem oder mehreren der Ansprüche 1 bis 9 zum Färben von hydroxy- und/oder carbonamidgruppenhaltigen Material, insbesondere Fasermaterial.

18. Verfahren zum Färben von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, **dadurch gekennzeichnet, daß** man als Farbstoff einen Farbstoff gemäß einem oder mehreren der Ansprüche 1 bis 9 einsetzt.

## Claims

1. Reactive copper, cobalt or chromium complex compounds of the general formula (1) 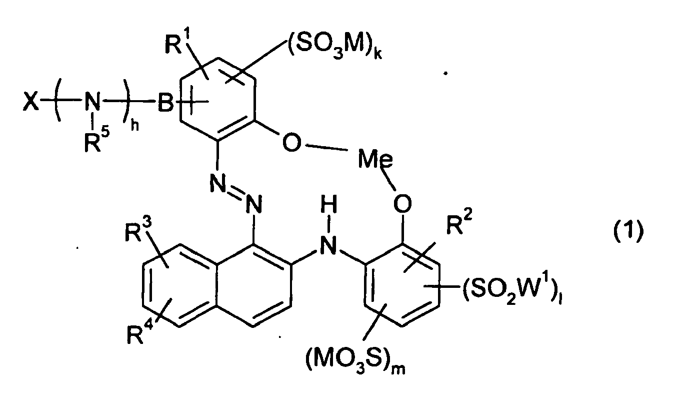
where
B is a direct bond or a bridge member;
X is a fiber-reactive structural element;
W¹ is vinyl or a group of the formula -CH₂-CH₂-V, where V is an alkali-eliminable radical;
R¹, R² are independently hydrogen, chlorine, alkyl of 1-4 carbon atoms, alkoxy of 1-4 carbon atoms, carboxyl or sulfamoyl, hydroxyl or sulfo;
R³ is hydrogen, hydroxyl, carboxyl or sulfo;
R⁴ is hydrogen or sulfo;
R⁵ is hydrogen, alkyl of 1 to 4 carbon atoms which can be substituted by halogen, hydroxyl, cyano, alkoxy of 1 to 4 carbon atoms, alkoxycarbonyl of 2 to 5 carbon atoms, carboxyl, sulfo or sulfato;
h, k, I, m are independently 0 or 1;
Me is copper, cobalt or chromium, preferably copper and cobalt and particularly preferably copper;
M is hydrogen or an alkali metal, such as sodium, potassium or lithium, or the mole equivalent of an alkaline earth metal.

2. Reactive dyes as claimed in claim 1 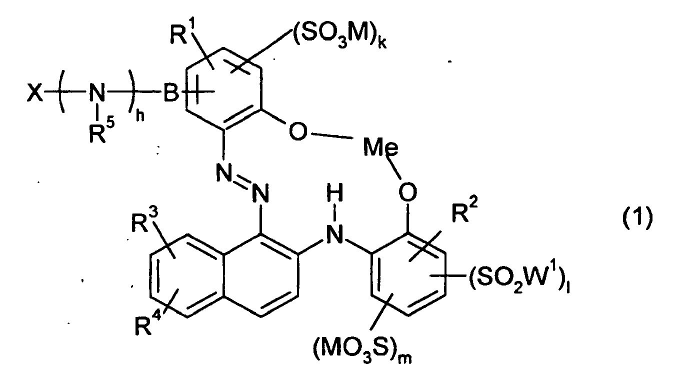
wherein B is a direct covalent bond, h is 0, X is a group of the general formula -SO₂CH=CH₂ or -SO₂CH₂CH₂V and V is an alkali-eliminable grouping,
R¹, R² are independently hydrogen, chlorine, alkyl of 1-4 carbon atoms, alkoxy of 1-4 carbon atoms, carboxyl or sulfamoyl, hydroxyl or sulfo;
R³ is hydrogen, hydroxyl, carboxyl or sulfo;
R⁴ is hydrogen or sulfo;
k, l, m are independently 0 or 1;
Me is copper, cobalt or chromium, preferably copper and cobalt and particularly preferably copper;
M is hydrogen or an alkali metal, such as sodium, potassium or lithium, or the mole equivalent of an alkaline earth metal.

3. A reactive dye as claimed in claim 1, wherein X is a triazinyl radical of the following formula: 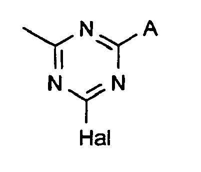
where
Hal = Cl, F and
A is the radical of an amine AH which may be unsubstituted or substituted by one or two C₁-C₆ alkyl groups, which may independently be substituted by hydroxyl, C₁-C₂ alkoxy groups, sulfato, phenyl or hydroxycarbonyl, or by a phenyl radical which is unsubstituted or substituted by one or two substituents selected from the group consisting of C₁-C₂-alkyl, C₁-C₂-alkoxy, C₁-C₂-alkoxyalkyl, C₁-C₂₋alkoxyalkoxy, amino, hydroxyl, chlorine, sulfo, sulfomethyl, sulfonamide, carboxyl, carboxamide, carboxylic ester, nitrile, aminocarboxamide and oxalamino or by a naphthyl radical which is unsubstituted or substituted by one, two or three sulfo groups or is taurine, N-methyltaurine, methylaminomethanesulfonic acid, pyrrolidine, piperidine, 1-methylpiperazine, morpholine.

4. A reactive dye as claimed in claim 1, wherein X is a halotriazinyl radical which can be bonded to a second halotriazinyl radical or to a halodiazinyl radical or to one or more vinylsulfonyl or sulfatoethylsulfonyl radicals directly or via a bridge member of the formulae 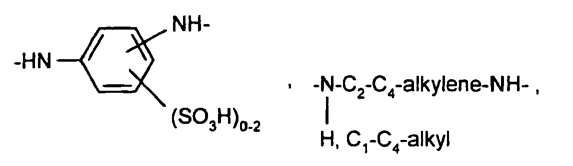 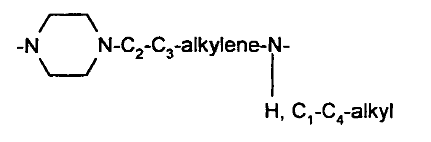 or in the case of sulfatoethylsulfonyl or vinylsulfonyl group via a bridge member 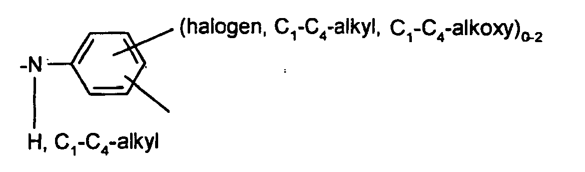 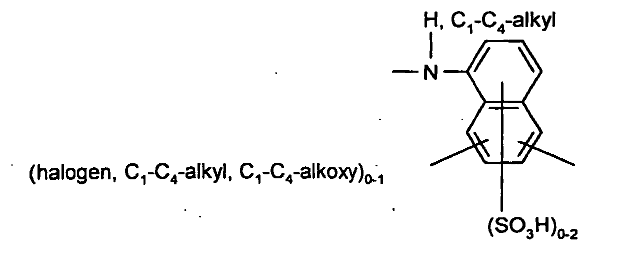
where the alkyl radicals may in turn be substituted by sulfo, carboxyl, hydroxyl or sulfato radicals.

5. A reactive dye as claimed in claim 1, wherein X is

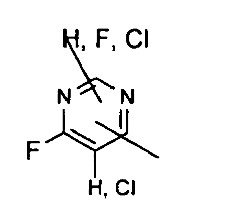

6. A reactive dye as claimed in claim 1, wherein X is a grouping of the following formula: 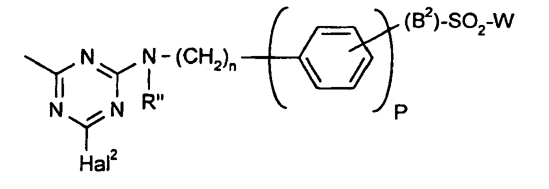
where
W is W¹;
n is from 0 to 3;
p is 0 or 1;
B² is a grouping of the formula -(CH₂)ₛ-((CH₂)₂-O-(CH₂)₂)ₜ;
s is from 0 to 6;
t is 0 or 1;
Hal² is Cl, F and
R" is phenyl, hydrogen or alkyl of 1 to 6 carbon atoms, preferably alkyl of 1 to 4 carbon atoms, such as ethyl and methyl, which may be substituted, for example by substituents selected from the group consisting of halogen, hydroxyl, carboxyl, sulfo and sulfato, and it preferably is methyl and ethyl and especially hydrogen, or
R" is phenyl and n = 0; p = 0; s = 2 or 3; t = 0 or
R" is H and n = 0; p = 1; s = 1, t = 0 where the phenyl ring
between 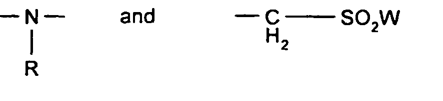 is meta substituted, or
R" is H; n = 0; p = 0; s = 3; t = 0 or
R" is methyl; n = 0; p = 0; s = 2; t = 0 or
R" is H; n = 0; p = 1; s = 0, t = 0 where the phenylene ring
between 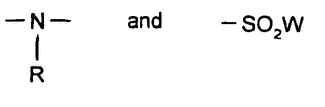
is ortho, meta or para substituted, or
R" is H; n = 0; p = 0; s = 0; t = 1 or
R" is H; n = 2; p = 0; s = 0; t = 0.

7. Reactive dyes as claimed in claim 1, wherein X is a radical of the formula (2) 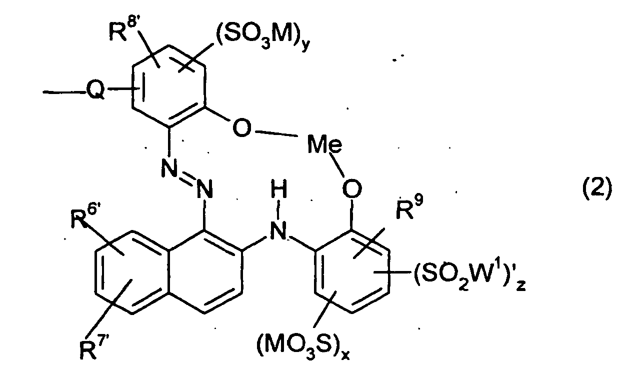
where Q is 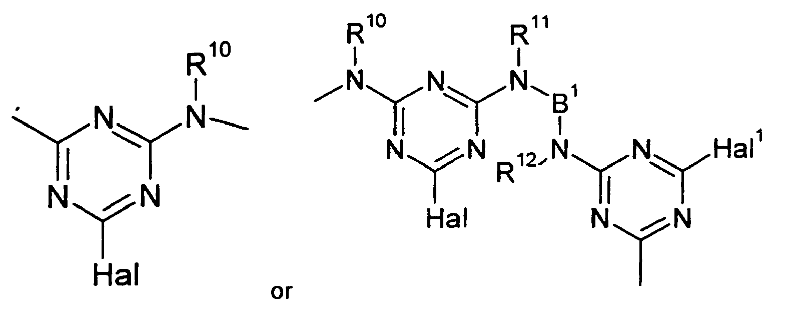
and
R⁶' is hydrogen, hydroxyl or sulfo,
R⁷' is hydrogen or sulfo,
x, y, z are each 0 or 1,
h is 1 and
R⁸', R⁹' are independently hydrogen, chlorine, alkyl of 1-4 carbon atoms, alkoxy of 1-4 carbon atoms, carboxyl or sulfamoyl, sulfo;
R¹⁰, R¹¹, R¹² B¹ are independently hydrogen, substituted or unsubstituted alkyl of 1-4 carbon atoms and is a bridge member.

8. Reactive dyes as claimed in claim 7, wherein B¹ is selected from the group consisting of straight-chain alkylene of 2 to 6 carbon atoms and branched alkylene of 3 to 6 carbon atoms which are each interrupted by 1 or 2 hetero groups selected from the groups of the formulae -O-, -CO-, -SO₂-, -NH-, -N(R^{A})- -NH-CO-, -CO-NH-, -SO₂-NH- and -NH-SO₂-, phenylene, which may be substituted by 1 or 2 substituents selected from the group consisting of sulfo, carboxyl, methyl, ethyl, methoxy and ethoxy, for example phen-1,3-ylene, phen-1,4-ylene, 6-sulfophen-1,3-ylene, 6-sulfophen-1,4-ylene, 3,6-disulfophen-1,4-ylene, 6-methoxyphen-1,3-ylene or benzylidene, which may be substituted by 1 or 2 substituents selected from the group consisting of sulfo, carboxyl, methyl, ethyl, methoxy and ethoxy, also the radical of 1,1-diphen-4,4'-ylene which may be substituted in each phenylene radical by methyl, methoxy or sulfo, or is the 1,1'-stilben-4,4'-ylene radical which may be substituted in every phenylene radical by methyl, methoxy or sulfo, or is cycloalkylene of 5 to 8 carbon atoms, or is a group of the general formula alk-B³, B³-alk, alk-B³-alk or phen-G-phen, in each of which alk is alkylene of 2 to 4 carbon atoms, or is alkylene of 2 to 10 carbon atoms, preferably of 4 to 6 carbon atoms, which is interrupted by 1 or 2, preferably one, hetero groups selected from the group consisting of -0- and -NH-, is B³-phenylene, which may be substituted by 1 or 2 substituents selected from the group consisting of sulfo, carboxyl, methyl, ethyl, methoxy, ethoxy, chlorine and bromine, or is cycloalkylene of 5 to 8 carbon atoms or is the bivalent radical of a saturated 5-to 8-membered heterocycle which contains two nitrogen atoms, for example the 1,4-piperazinylene radical bonded by one or both nitrogen atoms to the alk radicals or to alk and a carbon atom of the triazine radical, phen is a phenylene radical which may be substituted by 1 or 2 substituerits selected from the group consisting of carboxyl, sulfo, methyl, ethyl, methoxy, ethoxy, chlorine and bromine, and G is a direct bond or a radical of the formula -CH = CH- or is cycloalkylene of 5 to 8 carbon atoms, such as cyclohexylene, or
the group -N(R¹²)-B¹-N(R¹¹)- is the bivalent radical of a saturated 5- to 8-membered heterocycle which contains the two nitrogen atoms and whose nitrogen atoms are bonded to a carbon atom of the triazine radical, or is N-(2-aminoethyl)piperazine; R^{A} is hydrogen, substituted or unsubstituted alkyl of 1 to 4 carbon atoms.

9. A reactive dye as claimed in at least one of claims 1, 3 or 4, wherein B is a group of the general formulae (a) to (m) 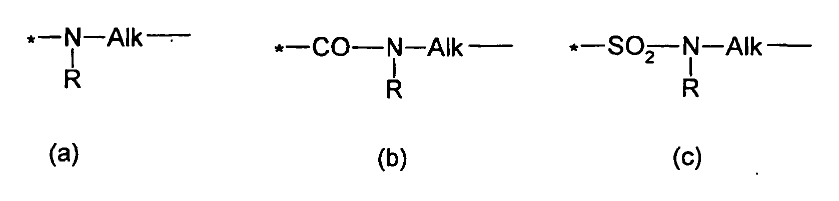 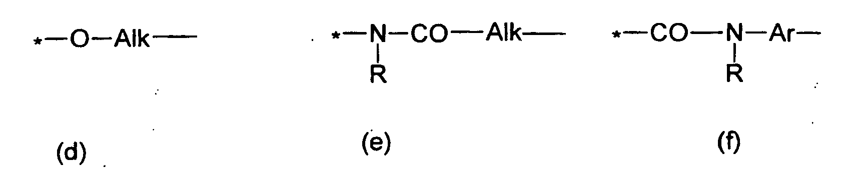 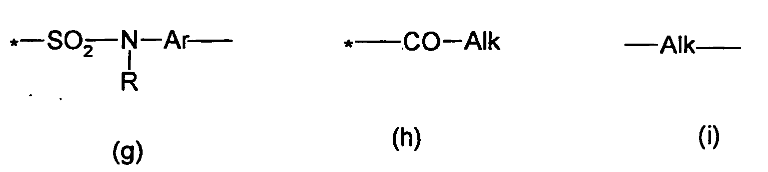 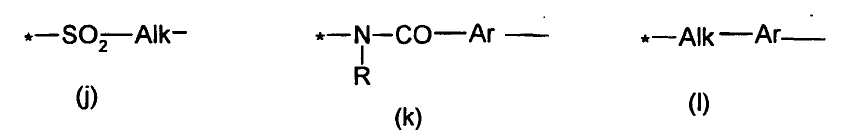 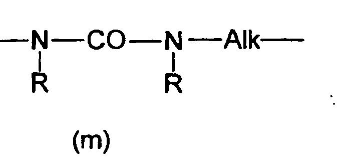
where the asterisk marks the site of attachment to the chromophore;
R is hydrogen or alkyl of 1 to 6 carbon atoms, preferably alkyl of 1 to 4 carbon atoms, such as ethyl and methyl, which may be substituted, for example by substituents selected from the group consisting of halogen, hydroxyl, carboxyl, sulfo and sulfato, and it preferably is methyl and ethyl and especially hydrogen;
Alk is alkylene of 1 to 6 carbon atoms or alkylene of 2 to 8, which is interrupted by 1 or 2 hetero groups, such as NH, N, O or S, or by 1 or 2 groupings containing 1, 2 or 3 hetero groups;
Ar is phenylene or naphthylene or the radical of a biphenyl or stilbene, each of which of these Ar radicals may be substituted, for example by substituents selected from the group consisting of fluorine, chlorine, bromine, alkyl of 1 to 4 carbon atoms, alkoxy of 1 to 4 carbon atoms, carboxyl and sulfo.

10. A reactive dye as claimed in at least one of claims 1 to 8, wherein Me is copper.

11. A process for preparing reactive dyes as claimed in claims 1, 3 to 10, which comprises reacting compounds of the general formula (3a) 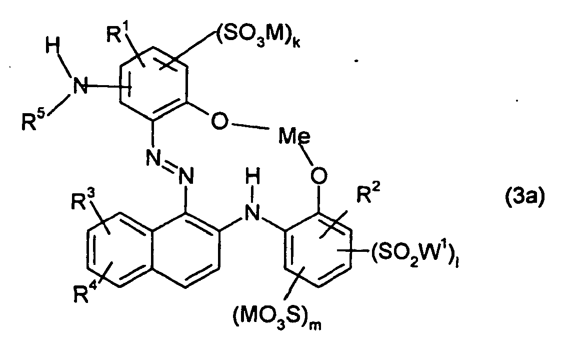 with compounds of the general formula X-Hal,
where
Hal is fluorine or chlorine;
X is a fiber-reactive structural element;
W¹ is vinyl or a group of the formula -CH₂-CH₂-V, where V is an alkali-eliminable radical;
R¹, R² are independently hydrogen, chlorine, alkyl of 1-4 carbon atoms, alkoxy of 1-4 carbon atoms, carboxyl or sulfamoyl, hydroxyl or sulfo;
R³ is hydrogen, hydroxyl, carboxyl or sulfo;
R⁴ is hydrogen or sulfo;
R⁵ is hydrogen, alkyl of 1 to 4 carbon atoms, which may be substituted by halogen, hydroxyl, cyano, alkoxy of 1 to 4 carbon atoms, alkoxycarbonyl of 2 to 5 carbon atoms, carboxyl, sulfo or sulfato;
k, I, m are each 0 or 1.

12. A process for preparing reactive dyes as claimed in claim 2, which comprises diazotizing amino compounds of the general formula (1-2) 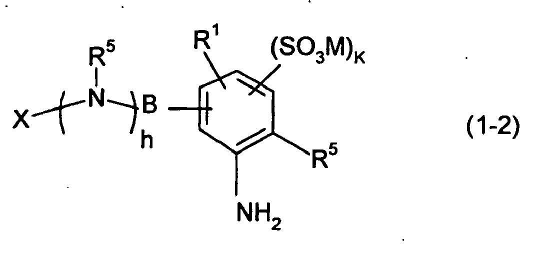
where
R⁵ is hydrogen, methoxy or hydroxyl and M, R⁵, h, B, X, R¹, k are each as defined in claim 2, and reacting the diazotization product with a compound of the formula (1-3) 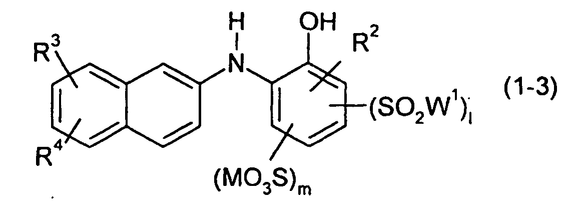 to obtain a compound of the general formula (1-6) 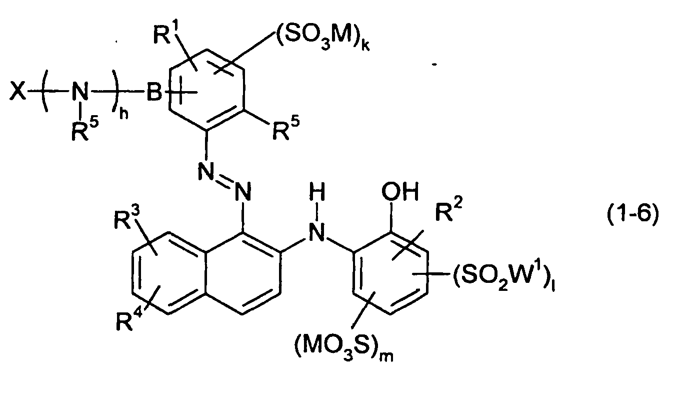
where M, R¹, R², R³, R⁴, R⁵, B, X, h, I, m and k are each as defined above, and subsequently treating this compound with a copper, cobalt or chromium donor.

13. A process for preparing reactive dyes as claimed in claim 7, which comprises reacting amino compounds of the general formula (3a) and (3b) and also (4) 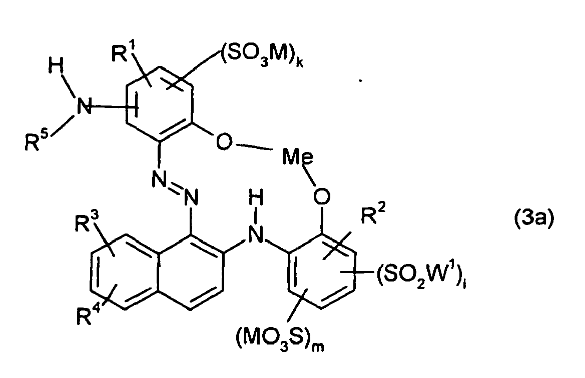 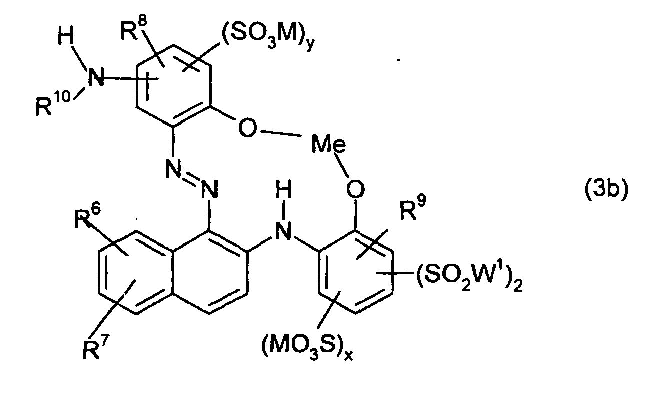
where
Me, R¹ to R¹⁰ l, m, k, x, y and z are each as defined above 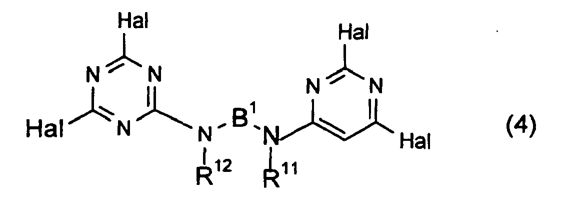
where R¹¹, R¹², B¹ and Hal are each as defined above, with each other or first reacting a compound of the general formula (3a) with a compound of the general formula (5) 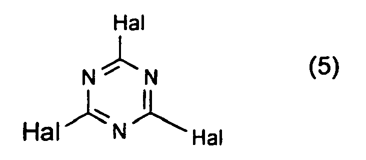 and a compound of the general formula (3b) with a compound of the general formula (5). The compounds thus obtained are subsequently reacted with each other with the stoichiometric amount of compound (6) 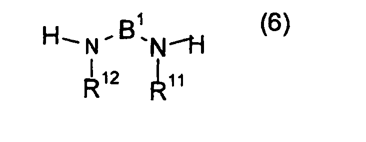
where R¹¹, R¹², B¹ are each as defined above.

14. A compound of formula (1-6) 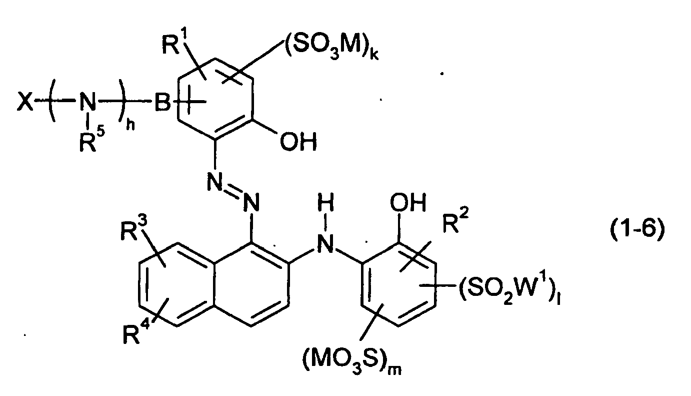
where M, R¹, R², R³, R⁴, R⁵, W¹, B, X, h, l, m and k are each as defined in claim 2.

15. A compound of the formula (3) 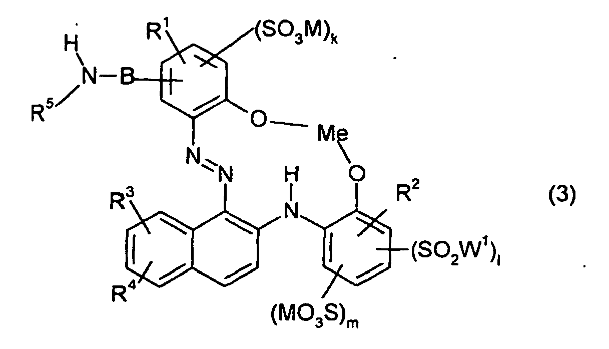
where R¹ to R⁵, Me and B, k, I, m, W¹, M are each as defined above.

16. The process for preparing compounds of the general formula (3) starting from amino compounds of the general formula (8a) or (8b) 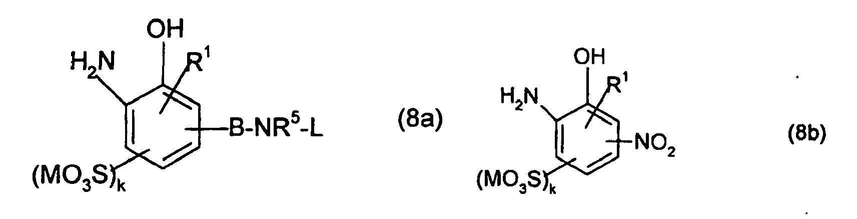
where L is a hydrolyzable protecting group and M, B, R¹ and R⁵, and also k are each as defined above, by diazotization and coupling onto a compound of the formula (1-3) 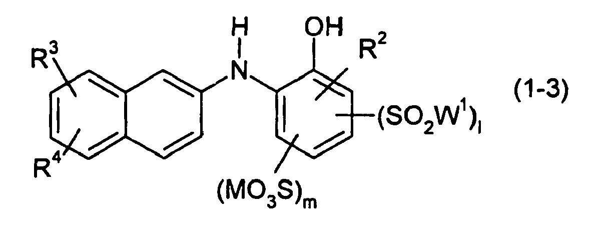
where R², R³, R⁴, W¹ I and m are each as defined above, and subsequent reaction with copper, cobalt or chromium donors and subsequent hydrolysis of the protected amino group, or reduction of the nitro group.

17. The use of a dye according to the invention and as claimed in one or more of claims 1 to 9 for dyeing hydroxyl- and/or carboxamido-containing material, especially fiber material.

18. A process for dyeing hydroxyl- and/or carboxamido-containing material, especially fiber material, by applying a dye to the material and fixing the dye on the material by means of heat or with the aid of an alkaline agent or by means of both measures, which comprises using a dye comprising a dye as claimed in one or more of claims 1 to 9.

## Revendications

1. Composés réactifs à complexe de cuivre, cobalt ou chrome, de formule générale (1) 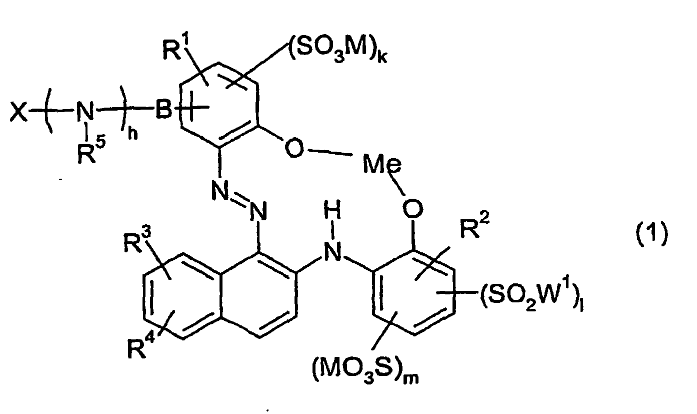
dans laquelle
B est une liaison directe ou un chaînon pontant ;
X est un élément structural réactif avec les fibres ;
W¹ représente le groupe vinyle ou un groupe de formule -CH₂-CH₂-V dans lequel V est un radical pouvant être éliminé sous l'effet d'un alcali ;
R¹, R² représentent, indépendamment l'un de l'autre, un atome d'hydrogène ou de chlore ou un groupe alkyle ayant de 1 à 4 atomes de carbone, alcoxy ayant de 1 à 4 atomes de carbone, carboxy ou sulfamoyle, hydroxy ou sulfo ;
R³ représente un atome d'hydrogène, un groupe hydroxy, carboxy ou sulfo ;
R⁴ représente un atome d'hydrogène ou le groupe sulfo ;
R⁵ représente un atome d'hydrogène, un groupe alkyle ayant de 1 à 4 atomes de carbone, qui peut être substitué par halogène, hydroxy, cyano, alcoxy ayant de 1 à 4 atomes de carbone, alcoxycarbonyle ayant de 2 à 5 atomes de carbone, carboxy, sulfo ou sulfato ;
h, k, l, m représentent, indépendamment les uns des autres, 0 ou 1 ;
Me représente le cuivre, le cobalt ou le chrome, de préférence le cuivre ou le cobalt et de façon particulièrement préférée le cuivre ;
M représente un atome d'hydrogène ou un métal alcalin, tel que le sodium, le potassium ou le lithium, ou l'équivalent molaire d'un métal alcalino-terreux.

2. Colorants réactifs selon la revendication 1, 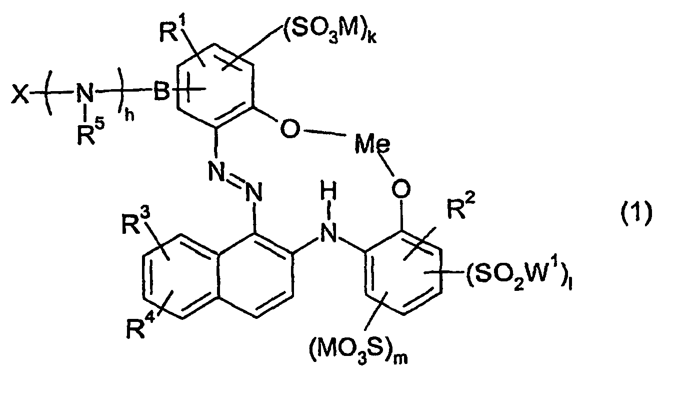
**caractérisés en ce que** B est une liaison covalente directe, h représente O et X est un groupe de formule générale -SO₂CH=CH₂ ou -SO₂CH₂CH₂V et V est un groupement pouvant être éliminé sous l'effet d'un alcali et
R¹, R² représentent, indépendamment l'un de l'autre, un atome d'hydrogène ou de chlore ou un groupe alkyle ayant de 1 à 4 atomes de carbone, alcoxy ayant de 1 à 4 atomes de carbone, carboxy ou sulfamoyle, hydroxy ou sulfo ;
R³ représente un atome d'hydrogène, un groupe hydroxy, carboxy ou sulfo ;
R⁴ représente un atome d'hydrogène ou le groupe sulfo ;
k, l, m représentent, indépendamment les uns des autres, 0 ou 1 ;
Me représente le cuivre, le cobalt ou le chrome, de préférence le cuivre ou le cobalt et de façon particulièrement préférée le cuivre ;
M représente un atome d'hydrogène ou un métal alcalin, tel que le sodium, le potassium ou le lithium, ou l'équivalent molaire d'un métal alcalino-terreux.

3. Colorant réactif selon la revendication 1, **caractérisé en ce que** X représente un reste triazinyle de formule suivante, 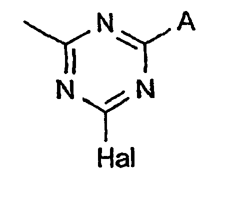
dans laquelle
Hal = Cl, F et
A représente le reste d'une amine AH qui peut être non substituée ou substituée par un ou deux groupes alkyle en C₁-C₆ qui, indépendamment l'un de l'autre, peuvent être substitués par des groupes hydroxy, alcoxy en C₁-C₂, sulfato, phényle, hydroxycarbonyle, ou par un radical phényle non substitué ou substitué par un ou deux groupes alkyle en C₁-C₂, alcoxy en C₁-C₂ ou alcoxy(C₁-C₂)-alkyle ou alcoxy(C₁-C₂)-alcoxy, amino, hydroxy, chloro, sulfo, sulfométhyle, sulfonamido, carboxy ou carbamoyle, ester d'acide carboxylique, nitrile, aminocarbamoyle ou oxalamino, ou par un radical naphtyle non substitué ou substitué par un, deux ou trois groupes sulfo, ou est la taurine, la N-méthyltaurine, l'acide méthylaminométhane-sulfonique, la pyrrolidine, la pipéridine, la 1-méthyl-pipérazine, la morpholine.

4. Colorant réactif selon la revendication 1, **caractérisé en ce que** X est un radical halogénotriazinyle qui peut être lié à un second radical halogénotriazinyle ou à un radical halogénodiazinyle ou à un ou plusieurs radicaux vinylsulfonyle ou sulfatoéthylsulfonyle, directement ou par l'intermédiaire d'un chaînon pontant de formules 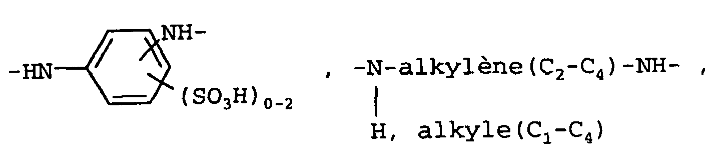 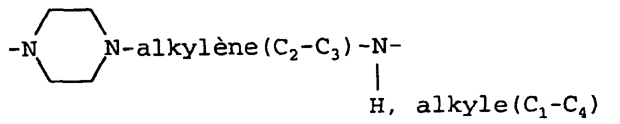
ou, dans le cas du groupe sulfatoéthylsulfonyle ou vinylsulfonyle, par l'intermédiaire d'un chaînon pontant 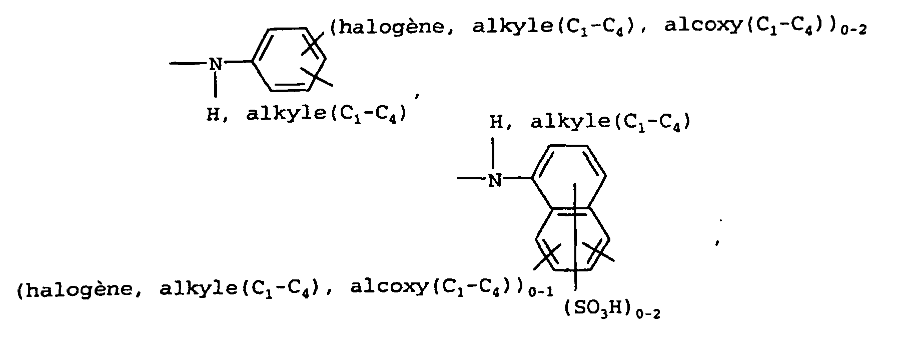 les radicaux alkyle pouvant pour leur part être substitués par des radicaux sulfo, carboxy, hydroxy ou sulfato.

5. Colorant réactif selon la revendication 1, **caractérisé en ce que** X représente

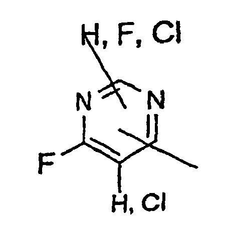

6. Colorant réactif selon la revendication 1, **caractérisé en ce que** X représente un groupement de formule suivante 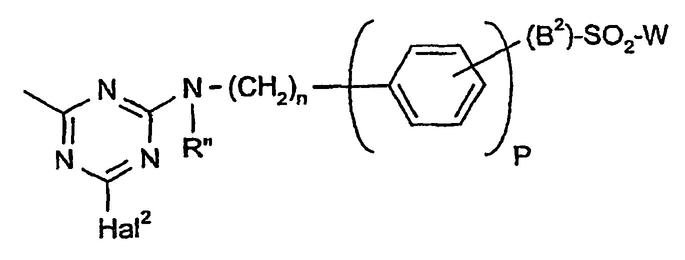
où
W a la signification de W¹ ;
n a une valeur de 0 à 3 ;
p est 0 ou 1 ;
B² représente un groupement de formule -(CH₂)ₛ-((CH₂)₂-O-(CH₂)₂)ₜ ;
s va de 0 à 6 ;
t est 0 ou 1 ;
Hal² représente Cl, F, et
R" représente un groupe phényle, un atome d'hydrogène ou un groupe alkyle ayant de 1 à 6 atomes de carbone, de préférence un groupe alkyle ayant de 1 à 4 atomes de carbone, tel que le groupe éthyle ou méthyle, qui peut être substitué comme par exemple par les substituants choisis dans l'ensemble constitué par des atomes d'halogène, les groupes hydroxy, carboxy, sulfo et sulfato, et est de préférence le groupe méthyle ou éthyle et en particulier un atome d'hydrogène, ouest
R" est le groupe phényle et n = 0 ; p = 0 ; s = 2 ou 3 ; t = 0 ou
R" est H et n = 0 ; p = 1 ; s = 1, t = 0, le noyau phényle entre 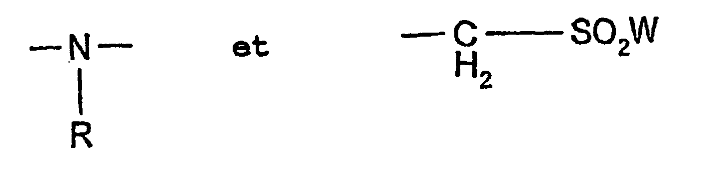 étant substitué en position méta, ou
R" est H ; n = 0 ; p = 0 ; s = 3, t = 0 ou
R" est méthyle ; n = 0 ; p = 0 ; s = 2, t = 0 ou
R" est H ; n = 0 ; p = 1 ; s = 0, t = 0, le noyau phényle entre 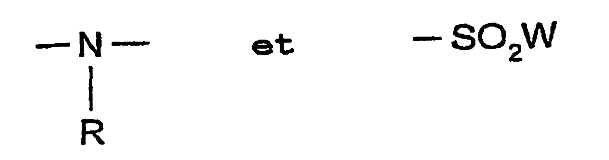
R" étant substitué en position ortho, méta ou para, ou est H ; n = 0 ; p = 0 ; s = 0, t = 1 ou
R" est H ; n = 2 ; p = 0 ; s = 0, t = 0.

7. Colorants réactifs selon la revendication 1, **caractérisés en ce** X est un radical de formule (2) 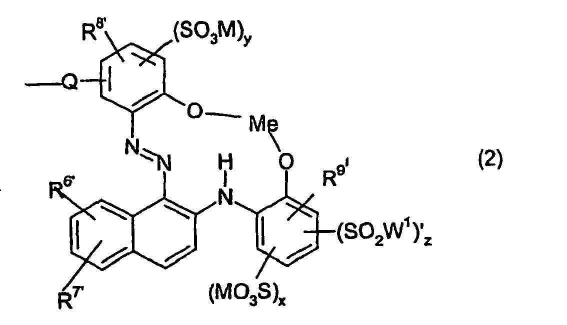
où -Q- représente 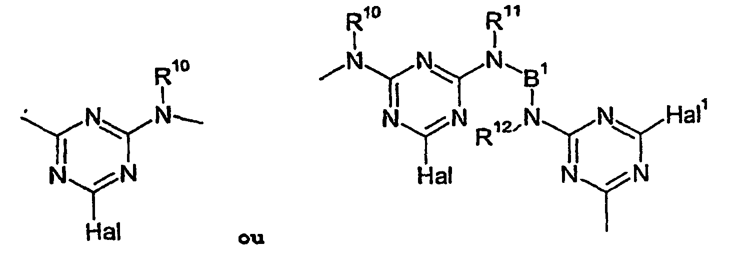 et
R⁶' représente un atome d'hydrogène, le groupe hydroxy ou sulfo,
R⁷' représente un atome d'hydrogène ou le groupe sulfo,
x, y, z ont la valeur 0 ou 1,
h représente 1 et
R⁸', R⁹' représentent, indépendamment l'un de l'autre, un atome d'hydrogène ou de chlore ou un groupe alkyle ayant de 1 à 4 atomes de carbone, alcoxy ayant de 1 à 4 atomes de carbone, carboxy ou sulfamoyle, sulfo ;
R¹⁰, R¹¹, R¹² représentent, indépendamment les uns des autres, un atome d'hydrogène, un groupe alkyle éventuellement substitué ayant de 1 à 4 atomes de carbone et
B¹ est un chaînon pontant.

8. Colorants réactifs selon la revendication 7, **caractérisés en ce que** B¹ est un groupe alkylène à chaîne droite ayant de 2 à 6 atomes de carbone ou un groupe alkylène ramifié ayant de 3 à 6 atomes de carbone, qui sont interrompus chacun par 1 ou 2 hétérogroupes choisis parmi les groupes de formules -O-, -CO-, -SO₂-, -NH-, -N(R^{A})-, -NH-CO-, -CO-NH-, -SO₂-NH- et -NH-SO₂-, un groupe phénylène qui peut être substitué par 1 ou 2 substituants choisis dans l'ensemble constitué par les groupes sulfo, carboxy, méthyle, éthyle, méthoxy et éthoxy, comme par exemple phén-1,3-ylène, phén-1,4-ylène, 6-sulfo-phén-1,3-ylène, 6-sulfo-phén-1,4-ylène, 3,6-disulfo-phén-1,4-ylène, 6-méthoxy-phén-1,3-ylène ou benzylidène, qui peut être substitué par 1 ou 2 substituants choisis dans l'ensemble constitué par les groupes sulfo, carboxy, méthyle, éthyle, méthoxy et éthoxy, en outre le reste du 1,1-diphén-4,4'-ylène qui peut être substitué sur chaque radical phényle par méthyle, méthoxy ou sulfo, ou est le reste 1,1'-stilbén-4,4'-ylène qui peut être substitué sur chaque radical phényle par méthyle, méthoxy ou sulfo, ou est un groupe cycloalkylène ayant de 5 à 8 atomes de carbone, ou est un groupe de formule générale alk-B³, B³-alk, alk-B³-alk ou phén-G-phén, formules dans lesquelles alk signifie alkylène ayant de 2 à 4 atomes de carbone, ou est un groupe alkylène ayant de 2 à 10 atomes de carbone, de préférence de 4 à 6 atomes de carbone, qui est interrompu par 1 ou 2 hétérogroupes, de préférence un hétérogroupe, choisis parmi -O- et -NH-, est un groupe B³-phénylène qui peut être substitué par 1 ou 2 substituants choisis dans l'ensemble constitué par les groupes sulfo, carboxy, méthyle, éthyle, méthoxy, éthoxy, chloro et bromo, ou un groupe cycloalkylène ayant de 5 à 8 atomes de carbone, ou est le reste bivalent d'un hétérocycle saturé à 5-8 chaînons, contenant deux atomes d'azote, comme par exemple le reste 1,4-pipérazinylène, dont un atome d'azote ou les deux est(sont) lié(s) aux radicaux alk ou bien à alk et à un atome de carbone du reste triazine, phén est un radical phénylène qui peut être substitué par 1 ou 2 substituants choisis dans l'ensemble constitué par les groupes carboxy, sulfo, méthyle, éthyle, méthoxy, éthoxy, chloro et bromo, et G représente une liaison directe ou un radical de formule -CH=CH- ou cycloalkylène ayant de 5 à 8 atomes de carbone, tel que cyclohexylène, ou le groupe -N(R¹²)-B¹-N(R¹¹)- représente le reste bivalent d'un hétérocycle saturé à 5-8 chaînons, contenant les deux atomes d'azote, dont les atomes d'azote sont liés à un atome de carbone du reste triazine, ou est la N-(2-aminoéthyl)pipérazine ; R^{A} est un atome d'hydrogène, un groupe alkyle éventuellement substitué, ayant de 1 à 4 atomes de carbone.

9. Colorant réactif selon au moins l'une des revendications 1, 3 et 4, **caractérisé en ce que** B représente un groupe de formules générales (a) à (m) 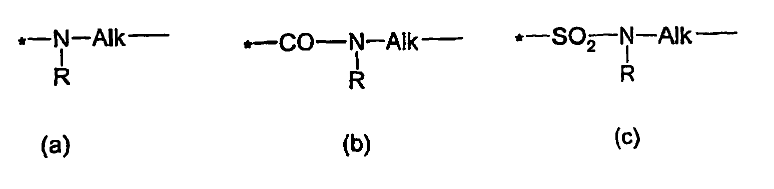 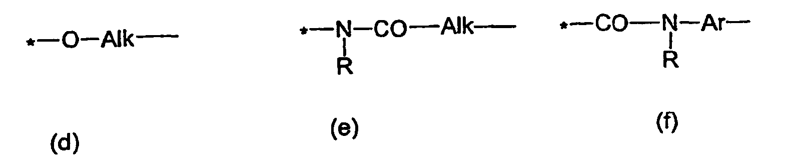 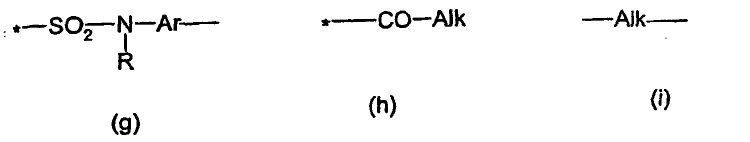 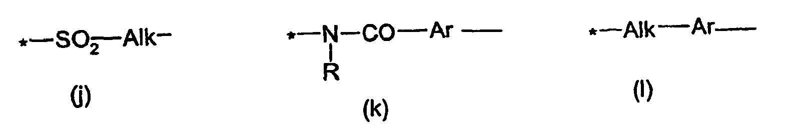 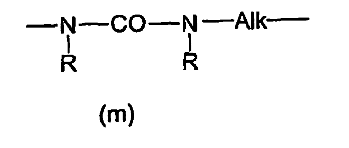
dans lesquelles l'astérisque désigne le site de liaison au chromophore ;
R représente un atome d'hydrogène ou un groupe alkyle ayant de 1 à 6 atomes de carbone, de préférence un groupe alkyle ayant de 1 à 4 atomes de carbone, tel que les groupes éthyle et méthyle, qui peut être substitué, comme par exemple par des substituants choisis dans l'ensemble constitué par des atomes d'halogène et les groupes hydroxy, carboxy, sulfo et sulfato, et est de préférence le groupe méthyle ou éthyle et en particulier un atome d'hydrogène ;
Alk représente un groupe alkylène ayant de 1 à 6 atomes de carbone ou alkylène ayant de 2 à 8 atomes de carbone, qui est interrompu par 1 ou 2 hétérogroupes, tels que NH, N, O ou S, ou par 1 ou 2 groupements qui contiennent 1, 2 ou 3 hétérogroupes ;
Ar est un radical phénylène ou naphtylène ou le reste d'un diphényle ou stilbène, ces radicaux Ar pouvant être substitués, comme par exemple par des substituants choisis dans l'ensemble constitué par le fluor, le chlore, le brome, des groupes alkyle ayant de 1 à 4 atomes de carbone, alcoxy ayant de 1 à 4 atomes de carbone, carboxy et sulfo.

10. Colorant réactif selon au moins l'une des revendications 1 à 8, **caractérisé en ce que** Me représente le cuivre.

11. Procédé pour la préparation de colorants réactifs selon les revendications 1, 3 à 10, **caractérisé en ce qu'**on fait réagir des composés de formule générale (3a) 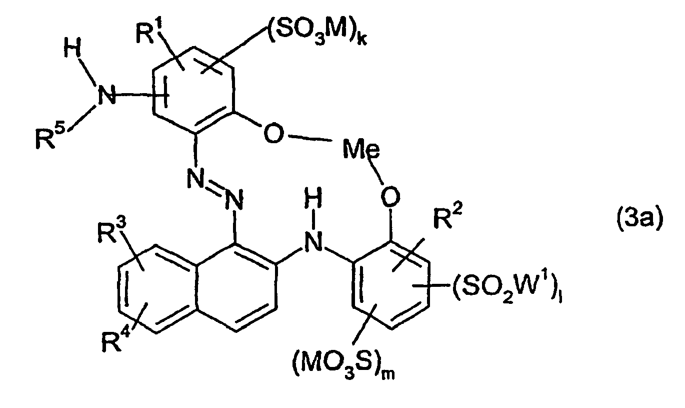 avec des composés de formule générale X-Hal, dans laquelle
Hal est un atome de fluor ou de chlore ;
X est un élément structural réactif avec les fibres ;
W¹ représente le groupe vinyle ou un groupe de formule -CH₂-CH₂-V, dans lequel V est un radical pouvant être éliminé sous l'effet d'un alcali ;
R¹, R² représentent, indépendamment l'un de l'autre, un atome d'hydrogène ou de chlore ou un groupe alkyle ayant de 1 à 4 atomes de carbone, alcoxy ayant de 1 à 4 atomes de carbone, carboxy ou sulfamoyle, hydroxy ou sulfo ;
R³ représente un atome d'hydrogène, un groupe hydroxy, carboxy ou sulfo ;
R⁴ représente un atome d'hydrogène ou le groupe sulfo ;
R⁵ représente un atome d'hydrogène, un groupe alkyle ayant de 1 à 4 atomes de carbone, qui peut être substitué par halogène, hydroxy, cyano, alcoxy ayant de 1 à 4 atomes de carbone, alcoxycarbonyle ayant de 2 à 5 atomes de carbone, carboxy, sulfo ou sulfato ;
k, l, m représentent 0 ou 1.

12. Procédé pour la préparation de colorants réactifs selon la revendication 2, **caractérisé en ce qu'**on soumet à une diazotation des composés aminés de formule générale (1-2) 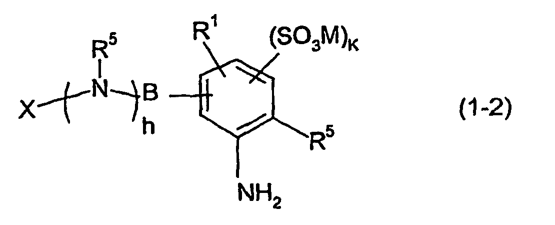
dans laquelle
R⁵ représente un atome d'hydrogène, le groupe méthoxy ou hydroxy, et M, R⁵, h, B, X, R¹, k ont les significations données dans la revendication 2
et on fait réagir le produit de diazotation avec un composé de formule (1-3) 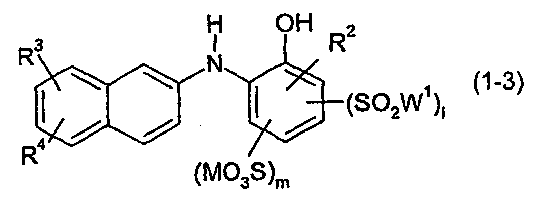 pour obtenir un composé de formule générale (1-6) 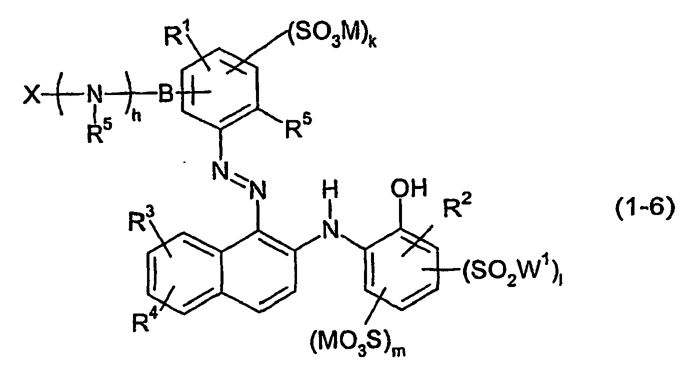
dans laquelle M, R¹, R² R³, R⁴, R⁵, B, X, h, l, m et k ont les significations données plus haut, et ensuite on traite ce dernier par un agent donneur de cuivre, cobalt ou chrome.

13. Procédé pour la préparation de colorants réactifs selon la revendication 7, **caractérisé en ce qu'**on fait réagir entre eux des composés aminés de formule générale (3a) et (3b), ainsi que (4) 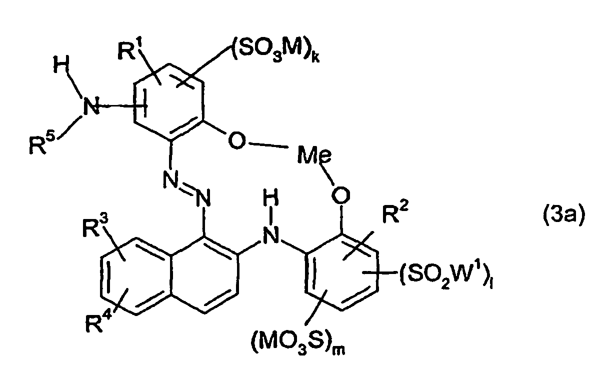 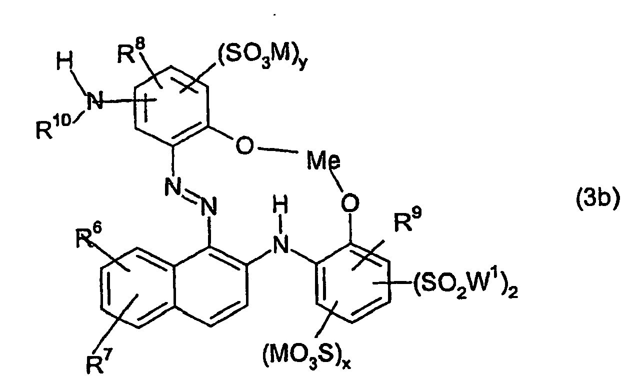
dans lesquelles
Me, R¹ à R¹⁰, l, m, k, x, y et z ont les significations données plus haut 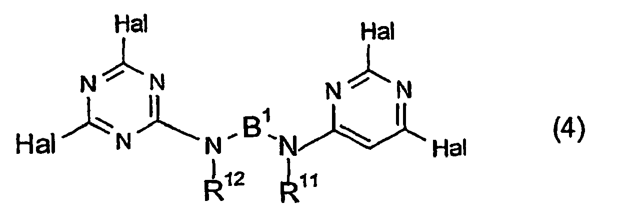
dans laquelle R¹¹, R¹², B¹ et Hal ont les significations données plus haut, ou **en ce qu'**on fait d'abord réagir un composé de formule générale (3a) avec un composé de formule générale (5) 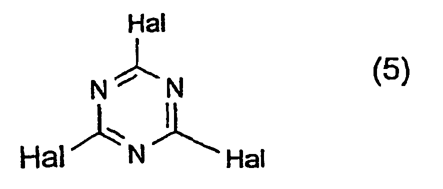 et un composé de formule générale (3b) avec un composé de formule générale (5). On fait ensuite réagir les composés ainsi obtenus avec la quantité stoechiométrique d'un composé (6) 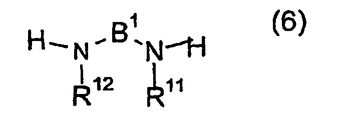
dans lequel R¹¹, R¹², B¹ ont les significations indiquées.

14. Composé de formule (1-6) 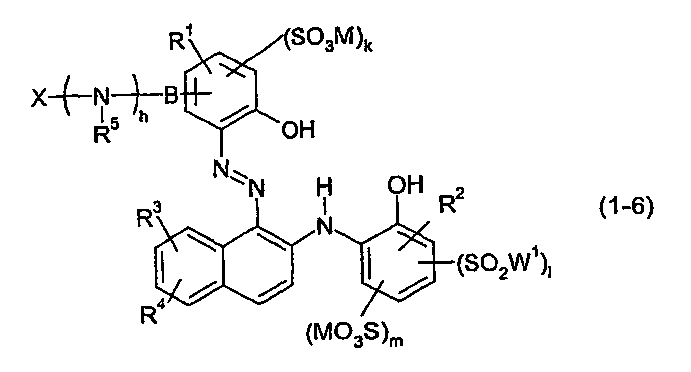
dans laquelle M, R¹, R², R³, R⁴, R⁵, W¹, B, X, h, l, m et k ont les significations données dans la revendication 2.

15. Composé de formule (3) 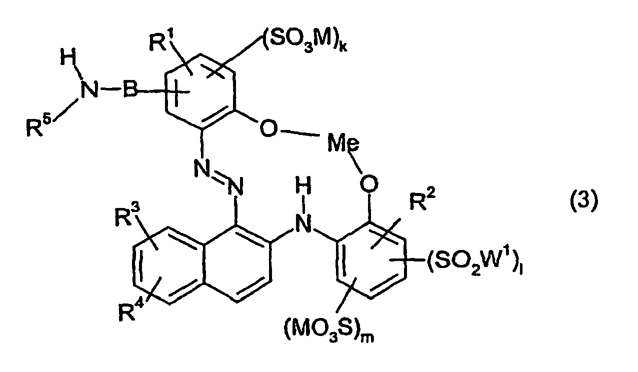
dans laquelle R¹ à R⁵, Me et B, k, l, m, W¹, M ont les significations données plus haut.

16. Procédé pour la préparation de composés de formule générale (3) à partir de composés aminés de formule générale (8a) ou (8b) 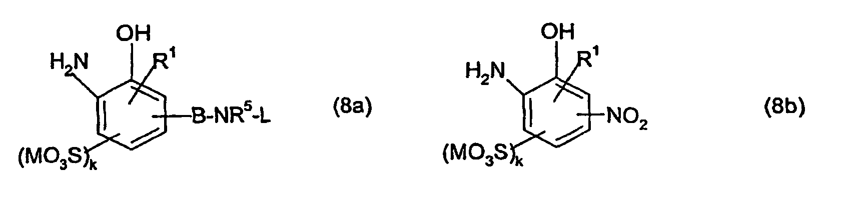 formules dans lesquelles L représente un groupe protecteur hydrolysable et M, B, R¹ et R⁵ ainsi que k ont les significations indiquées plus haut, par diazotation et copulation sur un composé de formule (1-3) 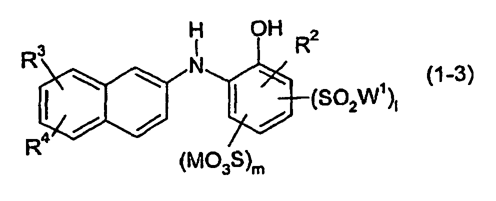
dans laquelle R², R³, R⁴, W¹, l et m ont les significations données plus haut, et réaction subséquente avec des agents donneurs de cuivre, cobalt ou chrome et hydrolyse subséquente du groupe amino muni d'un groupe protecteur, ou réduction du groupe nitro.

17. Utilisation d'un colorant conforme à l'invention, selon une ou plusieurs des revendications 1 à 9, pour la teinture d'un matériau, en particulier d'un matériau fibreux, contenant des groupes hydroxy et/ou carbamoyle.

18. Procédé pour la teinture d'un matériau, en particulier d'un matériau fibreux, contenant des groupes hydroxy et/ou carbamoyle, dans lequel on applique un colorant sur le matériau et on fixe le colorant sur le matériau au moyen de chaleur ou à l'aide d'un agent à action alcaline ou par ces deux moyens, **caractérisé en ce qu'**on utilise comme colorant un colorant selon une ou plusieurs des revendications 1 à 9.
